# EUROPÄISCHE PATENTSCHRIFT

(11) **EP 0 880 531 B1**
(45) Veröffentlichungstag und Bekanntmachung des Hinweises auf die Patenterteilung: **20.06.2001**
(21) Anmeldenummer: 97903301.6
(22) Anmeldetag: 17.02.1997
(51) Int. Cl.: C07F 9/58, A01N 57/08, C07F 9/6558

(54) **SUBSTITUIERTE 2-PHENYLPYRIDINE**
SUBSTITUTED 2-PHENYLPYRIDINES
2-PHENYLPYRIDINES SUBSTITUEES

(30) Priorität: 16.02.1996 DE 19605766
(43) Veröffentlichungstag der Anmeldung: 02.12.1998
(73) Patentinhaber: BASF AKTIENGESELLSCHAFT, 67056 Ludwigshafen (DE)
(72) Erfinder: ZAGAR, Cyrill, D-67061 Ludwigshafen (DE); SCHÄFER, Peter, D-67308 Ottersheim (DE); HAMPRECHT, Gerhard, D-69469 Weinheim (DE); HEISTRACHER, Elisabeth, D-68159 Mannheim (DE); MENGES, Markus, D-64625 Bensheim (DE); MENKE, Olaf, D-67317 Altleining (DE); WESTPHALEN, Karl-Otto, D-67346 Speyer (DE); MISSLITZ, Ulf, D-67433 Neustadt (DE); WALTER, Helmut, D-67283 Obrigheim (DE)
(86) Internationale Anmeldenummer: EP9700735
(87) Internationale Veröffentlichungsnummer: WO9730059

(56) Entgegenhaltungen:
- EP-A- 0 078 536
- WO-A-95/02580
- WO-A-97/30060
- DE-A- 4 029 444
- ACS SYMP. SER. (ACSMC8,00976156);95; VOL.584 (SYNTHESIS AND CHEMISTRY OF AGROCHEMICALS IV); PP.90-9, FMC CORP.;AGRIC. CHEM. GROUP; PRINCETON; 08543; NJ; USA (US), XP000671389 THEODORIDIS G ET AL: "Alkyl 3-[2,4-disubstituted-4,5-dihydro-3-methyl- 5-oxo-1H-1,2,4-tria zol-1-yl)phenyl]propenoate derivatives. Synthesis and structure-activity relationships" in der Anmeldung erwähnt

## Beschreibung

Die vorliegende Erfindung betrifft neue substituierte 2-Phenylpyridine der Formel I 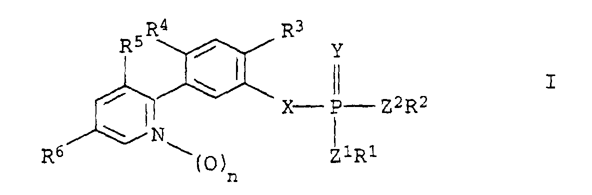 in der die Variablen folgende Bedeutungen haben:
- X: eine chemische Bindung, 1,2-Ethindiyl oder
- eine Methylen-, 1,2-Ethandiyl- oder 1,3-Propylen-Brücke, die gewünschtenfalls einen Hydroxy-, Amino- oder C₁-C₄-Alkylamino-Substituenten tragen kann;
- Methylenoxymethylen, Methylenthiamethylen, Ethen-1,2-diyl oder
- über das Heteroatom an den Phenylring gebundenes Oxymethylen, Thiamethylen, Oxyethylen oder Thiaethylen, wobei die letzten beiden Ketten gewünschtenfalls am dem Phosphor benachbarten Kohlenstoffatom eine Hydroxy-, Amino- oder C₁-C₄-Alkylaminogruppe tragen kann;
und wobei die letztgenannten 10 Brücken jeweils einen oder zwei der folgenden Substituenten tragen können: Cyano, Carboxy, Halogen, C₁-C₄-Alkyl, C₁-C₄-Halogenalkyl, C₁-C₄-Alkoxy, C₁-C₄-Halogenalkoxy, (C₁-C₄-Alkoxy)carbonyl und/ oder Di-(C₁-C₄-alkyl)amino;
- Y: Sauerstoff oder Schwefel;
- Z¹: Sauerstoff, Schwefel oder -N(R⁷)-;
- Z²: Sauerstoff, Schwefel oder -N(R⁸)-;

R¹, R², R⁷, R⁸ unabhängig voneinander Wasserstoff, C₁-C₆-Alkyl, C₁-C₆-Halogenalkyl, Hydroxy-C₁-C₄-alkyl, Cyano-C₁-C₄-alkyl, C₁-C₄-Alkoxy-C₁-C₄-alkyl, C₁-C₄-Halogenalkoxy-C₁-C₄-alkyl, C₃-C₄-Alkenyloxy-C₁-C₄-alkyl, C₃-C₄-Alkinyloxy-C₁-C₄-alkyl, C₃-C₈-Cycloalkoxy-C₁-C₄-alkyl, Amino-C₁-C₄-alkyl, C₁-C₄-Alkylamino-C₁-C₄-alkyl, Di-(C₁-C₄-alkyl)amino-C₁-C₄-alkyl, C₁-C₄-Alkylthio-C₁-C₄-alkyl, C₁-C₄-Halogenalkylthio-C₁-C₄-alkyl, C₃-C₄-Alkenylthio-C₁-C₄-alkyl, C₃-C₄-Alkinylthio-C₁-C₄-alkyl, C₁-C₄-Alkylsulfinyl-C₁-C₄-alkyl, C₁-C₄-Halogenalkylsulfinyl-C₁-C₄-alkyl, C₃-C₄-Alkenylsulfinyl-C₁-C₄-alkyl, C₃-C₄-Alkinylsulfinyl-C₁-C₄-alkyl, C₁-C₄-Alkylsulfonyl-C₁-C₄-alkyl, C₁-C₄-Halogenalkylsulfonyl-C₁-C₄-alkyl, C₃-C₄-Alkenylsulfonyl-C₁-C₄-alkyl, C₃-C₄-Alkinylsulfonyl-C₁-C₄-alkyl, C₃-C₆-Alkenyl, C₃-C₆-Halogenalkenyl, Cyano-C₃-C₆-alkenyl, C₃-C₆-Alkinyl, C₃-C₆-Halogenalkinyl, Cyano-C₃-C₆-alkinyl, Hydroxycarbonyl-C₁-C₄-alkyl, (C₁-C₄-Alkoxy)carbonyl-C₁-C₄-alkyl, (C₁-C₄-Alkylthio) carbonyl-C₁-C₄-alkyl, Aininocarbonyl-C₁-C₄-alkyl, (C₁-C₄-Alkyl)aminocarbonyl-C₁-C₄-alkyl, Di-(C₁-C₄-alkyl)aminocarbonyl-C₁-C₄-alkyl,
C₃-C₈-Cycloalkyl, C₃-C₈-Cycloalkyl-C₁-C₄-alkyl, Phenyl, Phenyl-C₁-C₄-alkyl oder
3- bis 7-gliedriges Heterocyclyl oder Heterocyclyl-C₁-C₄-alkyl, wobei alle Heterocyclen gewünschtenfalls ein Carbonyl- oder Thiocarbonyl-Ringglied enthalten können,
und wobei alle Cycloalkyl-, Phenyl- und Heterocyclylringe unsubstituiert sein oder ein bis vier Substituenten tragen können, jeweils ausgewählt aus der Gruppe bestehend aus Halogen, Cyano, Nitro, Amino, Hydroxy, Carboxy, C₁-C₄-Alkyl, C₁-C₄-Halogenalkyl, C₁-C₄-Alkoxy, C₁-C₄-Halogenalkoxy, C₁-C₄-Alkylthio, C₁-C₄-Halogenalkylthio, C₁-C₄-Alkylsulfonyl, C₁-C₄-Halogenalkylsulfonyl, (C₁-C₄-Alkyl)carbonyl, (C₁-C₄-Halogenalkyl)carbonyl, (C₁-C₄-Alkoxy)carbonyl, (C₁-C₄-Alkyl)carbonyloxy, (C₁-C₄-Halogenalkyl)carbonyloxy und Di-(C₁-C₄-alkyl)amino,
oder
R¹ und R² und/oder R¹ und R⁷ und/oder R² und R⁸ bilden jeweils zusammen eine 1,2-Ethandiyl-, 1,3-Propylen-, Tetramethylen-, Pentamethylen- oder Ethylenoxyethylen-Kette, die gewünschtenfalls durch ein bis vier C₁-C₄-Alkyl- und/oder ein oder zwei (C₁-C₄-Alkoxy)carbonylgruppen substituiert sein kann, oder
- R¹ und R²: bedeuten zusammen 1,2-Phenylen, das unsubstituiert sein oder ein bis drei Substituenten tragen kann, jeweils ausgewählt aus der Gruppe bestehend aus Cyano, Nitro, Halogen, C₁-C₄-Alkyl, C₁-C₄-Halogenalkyl, C₁-C₄-Alkoxy und C₁-C₄-Halogenalkoxy;
- R³: Cyano, Halogen, C₁-C₄-Alkyl, C₁-C₄-Halogenalkyl, C₁-C₄-Alkoxy oder C₁-C₄-Halogenalkoxy;
- R⁴, R⁵: jeweils Wasserstoff oder Halogen;
- R⁶: Halogen oder C₁-C₄-Halogenalkyl;
- n: null oder eins;
sowie die landwirtschaftlich brauchbaren Salze der Verbindungen I.

Außerdem betrifft die Erfindung
- die Verwendung der Verbindungen I als Herbizide oder zur Desikkation/Defoliation von Pflanzen,
- herbizide Mittel und Mittel zur Desikkation/Defoliation von Pflanzen, welche die Verbindungen I als wirksame Substanzen enthalten,
- Verfahren zur Herstellung der Verbindungen I und von herbiziden Mitteln und Mitteln zur Desikkation/Defoliation von Pflanzen unter Verwendung der Verbindungen I, sowie
- Verfahren zur Bekämpfung von unerwünschtem Pflanzenwuchs und zur Desikkation/Defoliation von Pflanzen mit den Verbindungen I.

In der U.S. 5,434,288 werden bestimmte Benzolderivate als Phospholipase-A2-Inhibitoren beschrieben. Unter die breite Definition dieser Verbindungen fallen - bei geeigneter Wahl der Substituenten - auch einige der vorliegenden substituierten 2-Phenylpyridine I.

Außerdem fallen einige der Verbindungen I - bei geeigneter Wahl der Substituenten - unter die allgemeinen Formeln von
- in der GB-A 2 263 109 beschriebenen Antogenisten des "Platelet activating factors" (PAF);
- in der DE-A 41 21 959 beschriebenen Trägerkatalysatoren für die Essigsäure-Herstellung;
- in der EP-A 537 696 beschriebenen antithrombischen, antiaggregatorischen und tumorhemmenden Wirkstoffen;
- in der EP-A 421 436 zur Herstellung bestimmter NMDA-Rezeptor-Inhibitoren genannten Zwischenprodukten;
- in der EP-A 544 587 zur Herstellung bestimmter Insektizide genannten Zwischenprodukten;
- in der WO 95/35281 zur Herstellung bestimmter "PDE-IV"-Inhibitoren genannten Zwischenprodukten;
- in der JP-A 05/178 810 zur Herstellung asymmetrischer 9-Cyanostyryl-10-styrylanthracen-Derivate;
- in der EP-A 474 042 zur Herstellung bestimmter Insektizide, Akarizide, Nematizide und Fungizide.

In der WO 95/02580 werden bereits 2-Phenylpyridine als Herbizide oder zur Desikkation/Defoliation von Pflanzen gelehrt.

Insbesondere werden in der WO 95/02580 Pyridin-substituierte Benzolphosphonate oder Benzolphosphinate beschrieben, deren Benzolring entweder durch ein Heteroatom oder ein Kohlenstoffatom am Pyridinring verknüpft ist.

In der DE-A 40 29 444 werden Herbizide Phenyl-phosphonylenamin-Verbindungen beschrieben, die am aromatischen Ring keinen zusätzlichen heterocyclischen Substituenten tragen.

Die herbiziden Eigenschaften der bisher bekannten 2-Phenylpyridine bezüglich der Schadpflanzen sind jedoch nicht immer völlig befriedigend. Aufgabe der vorliegenden Erfindung war es deshalb, neue herbizid wirksame 2-Phenylpyridine bereitzustellen, mit denen sich unerwünschte Pflanzen besser als bisher gezielt bekämpfen lassen. Die Aufgabe erstreckte sich auch auf die Bereitstellung neuer desikkant/defoliant wirksamer Verbindungen.

Demgemäß wurden die vorliegenden substituierten 2-Phenylpyridine der Formel I sowie deren herbizide Wirkung gefunden.

Ferner wurden herbizide Mittel gefunden, die die Verbindungen I enthalten und eine sehr gute herbizide Wirkung besitzen. Außerdem wurden Verfahren zur Herstellung dieser Mittel und Verfahren zur Bekämpfung von unerwünschtem Pflanzenwuchs mit den Verbindungen I gefunden.

Des weiteren wurde gefunden, daß die Verbindungen I auch zur Desikkation/Defoliation von Pflanzenteilen geeignet sind, wofür Kulturpflanzen wie Baumwolle, Kartoffel, Raps, Sonnenblume, Sojabohne oder Ackerbohnen, insbesondere Baumwolle, in Betracht kommen. Diesbezüglich wurden Mittel zur Desikkation und/oder Defoliation von Pflanzen, Verfahren zur Herstellung dieser Mittel und Verfahren zur Desikkation und/oder Defoliation von Pflanzen mit den Verbindungen I gefunden.

Die Verbindungen der Formel I können je nach Substitutionsmuster ein oder mehrere Chiralitätszentren enthalten und liegen dann als Enantiomeren- oder Diastereomerengemische vor. Je nach Bedeutung von X sind auch E-/Z-Isomere möglich. Gegenstand der Erfindung sind sowohl die reinen Enantiomeren oder Diastereomeren als auch deren Gemische.

Unter landwirtschaftlich brauchbaren Salzen sind vor allem die Salze von I mit denjenigen Kationen sowie Säureadditionssalze von I mit solchen Säuren zu verstehen, welche die herbizide oder desikkante/defoliante Wirkung von I nicht negativ beeinträchtigen.

So kommen als Kationen insbesondere die Ionen der Alkalimetalle, vorzugsweise Natrium und Kalium, der Erdalkalimetalle, vorzugsweise Calcium, Magnesium und Barium, und der Übergangsmetalle, vorzugsweise Mangan, Kupfer, Zink und Eisen, sowie das Ammoniumion, das einen C₁-C₄-Alkyl-, Phenyl- oder Benzylsubstituenten und gewünschtenfalls zusätzlich ein bis drei weitere C₁-C₄-Alkylreste tragen kann, vorzugsweise Diisopropylammonium, Tetramethylammonium, Tetrabutylammonium, Trimethylbenzylammonium, des weiteren Phosphoniumionen, vorzugsweise Tri-(C₁-C₄-alkyl)phosphonium, Sulfoniumionen, vorzugsweise Tri-(C₁-C₄-alkyl)sulfonium, sowie Sulfoxoniumionen, vorzugsweise Tri-(C₁-C₄-alkyl)sulfoxonium.

Anionen von brauchbaren Säureadditionssalzen sind in erster Linie Fluorid, Chlorid, Bromid, Hydrogensulfat, Sulfat, Dihydrogenphosphat, Hydrogenphosphat, Phosphat, Nitrat, Hydrogencarbonat, Carbonat, Hexafluorosilikat, Hexafluorophosphat, Benzoat, Oxalat, Dodecylbenzolsulfonat, sowie die Anionen von C₁-C₄-Alkansäuren, vorzugsweise Formiat, Acetat, Propionat und Butyrat.

Die für die Substituenten R¹ bis R³ und R⁶ bis R⁸ oder als Reste an X genannten organischen Molekülteile stellen Sammelbegriffe für individuelle Aufzählungen der einzelnen Gruppenmitglieder dar. Sämtliche Kohlenstoffketten, also alle Alkyl-, Halogenalkyl-, Hydroxyalkyl-, Cyanoalkyl-, Aminoalkyl-, Hydroxycarbonylalkyl-, Aminocarbonylalkyl-, Alkoxy-, Halogenalkoxy-, Alkyl- thio-, Halogenalkylthio-, Alkylsulfinyl-, Halogensulfinyl-, Alkylsulfonyl-, Halogenalkylsulfonyl-, Alkylamino-, Dialkyl- amino-, Alkenyl-, Halogenalkenyl-, Cyanoalkenyl-, Alkenyloxy-, Alkenylthio-, Alkenylsulfinyl-, Alkenylsulfonyl-, Alkinyl-, Halogenalkinyl-, Cyanoalkinyl-, Alkinyloxy-, Alkinylthio-, Alkinylsulfinyl-, Alkinylsulfonyl-Teile können geradkettig oder verzweigt sein. Halogenierte Substituenten tragen vorzugsweise ein bis fünf gleiche oder verschiedene Halogenatome.

Die Bedeutung Halogen steht jeweils für Fluor, Brom, Chlor oder Iod, insbesondere für Fluor oder Chlor.

Ferner stehen beispielsweise:
- C₁-C₄-Alkyl für: Methyl, Ethyl, n-Propyl, 1-Methylethyl, n-Butyl, 1-Methylpropyl, 2-Methylpropyl oder 1,1-Dimethylethyl, insbesondere für Methyl oder Ethyl;
- C₁-C₄-Halogenalkyl für: einen C₁-C₄-Alkylrest wie vorstehend genannt, der partiell oder vollständig durch Fluor, Chlor, Brom und/oder Iod substituiert ist, also z.B. Chlormethyl, Dichlormethyl, Trichlormethyl, Fluormethyl, Difluormethyl, Trifluormethyl, Chlorfluormethyl, Dichlorfluormethyl, Chlordifluormethyl, 2-Fluorethyl, 2-Chlorethyl, 2-Bromethyl, 2-Iodethyl, 2,2-Difluorethyl, 2,2,2-Trifluorethyl, 2-Chlor-2-fluorethyl, 2-Chlor-2,2-difluorethyl, 2,2-Dichlor-2-fluorethyl, 2,2,2-Trichlorethyl, Pentafluorethyl, 2-Fluorpropyl, 3-Fluorpropyl, 2,2-Difluorpropyl, 2,3-Difluorpropyl, 2-Chlorpropyl, 3-Chlorpropyl, 2,3-Dichlorpropyl, 2-Brompropyl, 3-Brompropyl, 3,3,3-Trifluorpropyl, 3,3,3-Trichlorpropyl, 2,2,3,3,3-Pentafluorpropyl, Heptafluorpropyl, 1-(Fluormethyl)-2-fluorethyl, 1-(Chlormethyl)-2-chlorethyl, 1-(Brommethyl)-2-bromethyl, 4-Fluorbutyl, 4-Chlorbutyl, 4-Brombutyl oder Nonafluorbutyl, insbesondere für Chlormethyl, Fluormethyl, Difluormethyl, Trifluormethyl, 2-Fluorethyl, 2-Chlorethyl oder 2,2,2-Trifluorethyl;
- C₁-C₆-Alkyl für: C₁-C₄-Alkyl wie vorstehend genannt, sowie z.B. n-Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl oder 1-Ethyl-2-methylpropyl, insbesondere für Methyl, Ethyl, n-Propyl, 1-Methylethyl, n-Butyl, 1,1-Dimethylethyl, n-Pentyl oder n-Hexyl;
- C₁-C₆-Halogenalkyl für: einen C₁-C₆-Alkylrest wie vorstehend genannt, der partiell oder vollständig durch Fluor, Chlor, Brom und/oder Iod substituiert ist, also z.B. einen der unter C₁-C₄-Halogenalkyl genannten Reste oder für 5-Fluor-1-pentyl, 5-Chlor-1-pentyl, 5-Brom-1-pentyl, 5-Jod-1-pentyl, 5,5,5-Trichlor-1-pentyl, Undecafluorpentyl, 6-Fluor-1-hexyl, 6-Chlor-1-hexyl, 6-Brom-1-hexyl, 6-Jod-1-hexyl, 6,6,6-Trichlor-1-hexyl oder Dodecafluorhexyl, insbesondere für Chlormethyl, Fluormethyl, Difluormethyl, Trifluormethyl, 2-Fluorethyl, 2-Chlorethyl oder 2,2,2-Trifluorethyl;
- Hydroxy-C₁-C₄-alkyl für: z.B. Hydroxymethyl, 2-Hydroxyeth-1-yl, 2-Hydroxy-prop-1-yl, 3-Hydroxy-prop-1-yl, 1-Hydroxy-prop-2-yl, 2-Hydroxy-but-1-yl, 3-Hydroxy-but-1-yl, 4-Hydroxy-but-1-yl, 1-Hydroxy-but-2-yl, 1-Hydroxy-but-3-yl, 2-Hydroxy-but-3-yl, 1-Hydroxy-2-methyl-prop-3-yl, 2-Hydroxy-2-methyl-prop-3-yl oder 2-Hydroxymethyl-prop-2-yl, insbesondere für 2-Hydroxyethyl;
- Cyano-C₁-C₄-alkyl für: Cyanomethyl, 1-Cyanoeth-1-yl, 2-Cyanoeth-1-yl, 1-Cyanoprop-1-yl, 2-Cyanoprop-1-yl, 3-Cyanoprop-1-yl, 1-Cyanoprop-2-yl, 2-Cyanoprop-2-yl, 1-Cyanobut-1-yl, 2-Cyanobut-1-yl, 3-Cyanobut-1-yl, 4-Cyanobut-1-yl, 1-Cyanobut-2-yl, 2-Cyanobut-2-yl, 1-Cyanobut-3-yl, 2-Cyanobut-3-yl, 1-Cyano-2-methyl-prop-3-yl, 2-Cyano-2-methylprop-3-yl, 3-Cyano-2-methyl-prop-3-yl oder 2-Cyanomethylprop-2-yl, insbesondere für Cyanomethyl oder 2-Cyanoethyl;
- Amino-C₁-C₄-alkyl für: z.B. Aminomethyl, 2-Aminoethyl, 2-Aminoprop-1-yl, 3-Aminoprop-1-yl, 2-Aminobut-1-yl, 3-Aminobut-1-yl, 4-Aminobut-1-yl, 1-Aminobut-2-yl, 3-Aminobut-2-yl, 4-Aminobut-2-yl, 1-(Aminomethyl)-eth-1-yl, 1-(Aminomethyl)-1-(methyl)-eth-1-yl oder 1-(Aminomethyl)-prop-1-yl, insbesondere für Aminomethyl oder 2-Aminoethyl;
- Hydroxycarbonyl-C₁-C₄-alkyl für: Hydroxycarbonyl-methyl, 1-(Hydroxycarbonyl)ethyl, 2-(Hydroxycarbonyl)ethyl, 1-(Hydroxycarbonyl)prop-1-yl, 2-(Hydroxycarbonyl)prop-1-yl, 3-(Hydroxycarbonyl)prop-1-yl, 1-(Hydroxycarbonyl)but-1-yl, 2-(Hydroxycarbonyl)but-1-yl, 3-(Hydroxycarbonyl)but-1-yl, 4-(Hydroxycarbonyl)but-1-yl, 1-(Hydroxycarbonyl)but-2-yl, 2-(Hydroxycarbonyl)but-2-yl, 3-(Hydroxycarbonyl)but-2-yl, 4-(Hydroxycarbonyl)but-2-yl, 1-(Hydroxycarbonyl-methyl)-eth-1-yl, 1-(Hydroxycarbonyl-methyl)-1-(methyl)-eth-1-yl oder 1-(Hydroxycarbonyl-methyl)-prop-1-yl, insbesondere für Hydroxycarbonylmethyl oder 2-(Hydroxycarbonyl)ethyl;
- Aminocarbonyl-C₁-C₄-alkyl für: Aminocarbonyl-methyl, 1-(Aminocarbonyl)ethyl, 2-(Aminocarbonyl)ethyl, 1-(Aminocarbonyl)prop-1-yl, 2-(Aminocarbonyl)prop-1-yl, 3-(Aminocarbonyl)prop-1-yl, 1-(Aminocarbonyl)but-1-yl, 2-(Aminocarbonyl)but-1-yl, 3-(Aminocarbonyl)but-1-yl, 4-(Aminocarbonyl)but-1-yl, 1-(Aminocarbonyl)but-2-yl, 2-(Aminocarbonyl)but-2-yl, 3-(Aminocarbonyl)but-2-yl, 4-(Aminocarbonyl)but-2-yl, 1-(Aminocarbonyl-methyl)-eth-1-yl, 1-(Aminocarbonyl-methyl)-1-(methyl)-eth-1-yl oder 1-(Aminocarbonyl-methyl)-prop-1-yl, insbesondere für Aminocarbonylmethyl oder 2-(Aminocarbonyl)ethyl;
- Phenyl-C₁-C₄-alkyl für: Benzyl, 1-Phenylethyl, 2-Phenylethyl, 1-Phenylprop-1-yl, 2-Phenylprop-1-yl, 3-Phenylprop-1-yl, 1-Phenylbut-1-yl, 2-Phenylbut-1-yl, 3-Phenylbut-1-yl, 4-Phenylbut-1-yl, 1-Phenylbut-2-yl, 2-Phenylbut-2-yl, 3-Phenylbut-2-yl, 4-Phenylbut-2-yl, 1-(Phenylmethyl)-eth-1-yl, l-(Phenylmethyl)-1-(methyl)eth-1-yl oder l-(Phenylmethyl)-prop-1-yl, insbesondere für Benzyl oder 2-Phenylethyl;
- Heterocyclyl-C₁-C₄-alkyl für: Heterocyclylmethyl, 1-Heterocyclyl-ethyl, 2-Heterocyclyl-ethyl, l-Heterocyclyl-prop-1-yl, 2-Heterocyclyl-prop-1-yl, 3-Heterocyclyl-prop-1-yl, 1-Heterocyclyl-but-1-yl, 2-Heterocyclyl-but-1-yl, 3-Heterocyclylbut-1-yl, 4-Heterocyclyl-but-1-yl, 1-Heterocyclyl-but-2-yl, 2-Heterocyclyl-but-2-yl, 3-Heterocyclyl-but-2-yl, 4-Heterocyclyl-but-2-yl, 1-(Heterocyclylmethyl)-eth-1-yl, 1-(Heterocyclylmethyl)-1-(methyl)-eth-1-yl oder 1-(Heterocyclylmethyl)-prop-1-yl, insbesondere für Heterocyclylmethyl, 2-Heterocyclyl-ethyl oder 3-Heterocyclyl-propyl; besonders bevorzugt sind 3-Oxetanylmethyl, 2-(1,3-Oxazolin-2-on-3-yl)ethyl und 3-(2-Pyridyl)propyl;
- (C₁-C₄-Alkyl)carbonyl für: CO-CH₃, CO-C₂H₅, n-Propylcarbonyl, 1-Methylethylcarbonyl, n-Butylcarbonyl, CO-CH(CH₃)₂, 2-Methylpropylcarbonyl oder CO-C(CH₃)₃, insbesondere für CO-CH₃;
- (C₁-C₄-Halogenalkyl)carbonyl für: einen (C₁-C₄-Alkyl)carbonylrest wie vorstehend genannt, der partiell oder vollständig durch Fluor, Chlor, Brom und/oder Iod substituiert ist, also z.B. Chloracetyl, Dichloracetyl, Trichloracetyl, Fluoracetyl, Difluoracetyl, Trifluoracetyl, Chlorfluoracetyl, Dichlorfluoracetyl, Chlordifluoracetyl, 2-Fluorethylcarbonyl, 2-Chlorethylcarbonyl, 2-Bromethylcarbonyl, 2-Iodethylcarbonyl, 2,2-Difluorethylcarbonyl, 2,2,2-Trifluorethylcarbonyl, 2-Chlor-2-fluorethylcarbonyl, 2-Chlor-2,2-difluorethylcarbonyl, 2,2-Dichlor-2-fluorethylcarbonyl, 2,2,2-Trichlorethylcarbonyl, CO-C₂F₅, 2-Fluorpropylcarbonyl, 3-Fluorpropylcarbonyl, 2,2-Difluorpropylcarbonyl, 2,3-Difluorpropylcarbonyl, 2-Chlorpropylcarbonyl, 3-Chlorpropylcarbonyl, 2,3-Dichlorpropylcarbonyl, 2-Brompropylcarbonyl, 3-Brompropylcarbonyl, 3,3,3-Trifluorpropylcarbonyl, 3,3,3-Trichlorpropylcarbonyl, 2,2,3,3,3-Pentafluorpropylcarbonyl, Heptafluorpropylcarbonyl, 1-(Fluormethyl)-2-fluorethylcarbonyl, 1-(Chlormethyl)-2-chlorethylcarbonyl, 1-(Brommethyl)-2-bromethylcarbonyl, 4-Fluorbutylcarbonyl, 4-Chlorbutylcarbonyl, 4-Brombutylcarbonyl oder Nonafluorbutylcarbonyl, insbesondere für Trifluoracetyl;
- (C₁-C₄-Alkyl)carbonyloxy für: Acetyloxy, Ethylcarbonyloxy, n-Propylcarbonyloxy, 1-Methylethylcarbonyloxy, n-Butylcarbonyloxy, 1-Methylpropylcarbonyloxy, 2-Methylpropylcarbonyloxy oder 1,1-Dimethylethylcarbonyloxy, insbesondere für Acetyloxy;
- (C₁-C₄-Halogenalkyl)carbonyloxy für: einen (C₁-C₄-Alkyl)carbonyloxy-Rest wie vorstehend genannt, der partiell oder vollständig durch Fluor, Chlor, Brom und/oder Iod substituiert ist, also z.B. Chloracetyloxy, Dichloracetyloxy, Trichloracetyloxy, Fluoracetyloxy, Difluoracetyloxy, Trifluoracetyloxy, Chlorfluoracetyloxy, Dichlorfluoracetyloxy, Chlordifluoracetyloxy, 2-Fluorethylcarbonyloxy, 2-Chlorethylcarbonyloxy, 2-Bromethylcarbonyloxy, 2-Iodethylcarbonyloxy, 2,2-Difluorethylcarbonyloxy, 2,2,2-Trifluorethylcarbonyloxy, 2-Chlor-2-fluorethylcarbonyloxy, 2-Chlor-2,2-difluorethylcarbonyloxy, 2,2-Dichlor-2-fluorethylcarbonyloxy, 2,2,2-Trichlorethylcarbonyloxy, Pentafluorethylcarbonyloxy, 2-Fluorpropylcarbonyloxy,3-Fluorpropylcarbonyloxy, 2,2-Difluorpropylcarbonyloxy, 2,3-Difluorpropylcarbonyloxy, 2-Chlorpropylcarbonyloxy, 3-Chlorpropylcarbonyloxy, 2,3-Dichlorpropylcarbonyloxy, 2-Brompropylcarbonyloxy, 3-Brompropylcarbonyloxy, 3,3,3-Trifluorpropylcarbonyloxy, 3,3,3-Trichlorpropylcarbonyloxy, 2,2,3,3,3-Pentafluorpropylcarbonyloxy, Heptafluorpropylcarbonyloxy, 1-(Fluormethyl)-2-fluorethylcarbonyloxy, 1-(Chlormethyl)-2-chlorethylcarbonyloxy, 1-(Brommethyl)-2-bromethylcarbonyloxy, 4-Fluorbutylcarbonyloxy, 4-Chlorbutylcarbonyloxy, 4-Brombutyl oder Nonafluorbutyl, insbesondere für Trifluoracetoxy;
- C₁-C₄-Alkoxy für: Methoxy, Ethoxy, n-Propoxy, 1-Methylethoxy, n-Butoxy, 1-Methylpropoxy, 2-Methylpropoxy oder 1,1-Dimethylethoxy, insbesondere für Methoxy oder Ethoxy;
- C₁-C₄-Halogenalkoxy für: einen C₁-C₄-Alkoxyrest wie vorstehend genannt, der partiell oder vollständig durch Fluor, Chlor, Brom und/oder Iod substituiert ist, also z.B. Chlormethoxy, Dichlormethoxy, Trichlormethoxy, Fluormethoxy, Difluormethoxy, Trifluormethoxy, Chlorfluormethoxy, Dichlorfluormethoxy, Chlordifluormethoxy, 2-Fluorethoxy, 2-Chlorethoxy, 2-Bromethoxy, 2-Iodethoxy, 2,2-Difluorethoxy, 2,2,2-Trifluorethoxy, 2-Chlor-2-fluorethoxy, 2-Chlor-2,2-difluorethoxy, 2,2-Dichlor-2-fluorethoxy, 2,2,2-Trichlorethoxy, OC₂F₅, 2-Fluorpropoxy, 3-Fluorpropoxy, 2,2-Difluorpropoxy, 2,3-Difluorpropoxy, 2-Chlorpropoxy, 3-Chlorpropoxy, 2,3-Dichlorpropoxy, 2-Brompropoxy, 3-Brompropoxy, 3,3,3-Trifluorpropoxy, 3,3,3-Trichlorpropoxy, 2,2,3,3,3-Pentafluorpropoxy, Heptafluorpropoxy, 1-(Fluormethyl)-2-fluorethoxy, 1-(Chlormethyl)-2-chlorethoxy, 1-(Brommethyl)-2-bromethoxy, 4-Fluorbutoxy, 4-Chlorbutoxy, 4-Brombutoxy oder Nonafluorbutoxy, insbesondere für 2-Chlorethoxy oder 2,2,2-Trifluorethoxy;
- (C₁-C₄-Alkoxy)carbonyl für: Methoxycarbonyl, Ethoxycarbonyl, n-Propoxycarbonyl, 1-Methylethoxycarbonyl, n-Butoxycarbonyl, 1-Methylpropoxycarbonyl, 2-Methylpropoxycarbonyl oder 1,1-Dimethylethoxycarbonyl, insbesondere für Methoxycarbonyl oder Ethoxycarbonyl;
- C₁-C₆-Alkylthio für: Methylthio, Ethylthio, n-Propylthio, 1-Methylethylthio, n-Butylthio, 1-Methylpropylthio, 2-Methylpropylthio oder 1,1-Dimethylethylthio, insbesondere für Methylthio oder Ethylthio;
- C₁-C₄-Alkylamino für: Methylamino, Ethylamino, n-Propylamino, 1-Methylethylamino, n-Butylamino, 1-Methylpropylamino, 2-Methylpropylamino oder 1,1-Dimethylethylamino, insbesondere für Methylamino oder Ethylamino;
- Di-(C₁-C₄-alkyl)amino für: N,N-Dimethylamino, N,N-Diethylamino, N,N-Dipropylamino, N,N-Di-(1-methylethyl)amino, N,N-Dibutylamino, N,N-Di-(1-methylpropyl)amino, N,N-Di-(2-methylpropyl)amino, N,N-Di-(1,1-dimethylethyl)amino, N-Ethyl-N-methylamino, N-Methyl-N-propylamino, N-Methyl-N-(1-methylethyl)amino, N-Butyl-N-methylamino, N-Methyl-N-(1-methylpropyl)amino, N-Methyl-N-(2-methylpropyl)amino, N-(1,1-Dimethylethyl)-N-methylamino, N-Ethyl-N-propylamino, N-Ethyl-N-(1-methylethyl)amino, N-Butyl-N-ethylamino, N-Ethyl-N-(1-methylpropyl)amino, N-Ethyl-N-(2-methylpropyl) amino, N-Ethyl-N-(1,1-dimethylethyl)amino, N-(1-Methylethyl)-N-propylamino, N-Butyl-N-propylamino, N-(1-Methylpropyl)-N-propylamino, N-(2-Methylpropyl)-N-propylamino, N-(1,1-Dimethylethyl)-N-propylamino, N-Butyl-N-(1-methylethyl)amino, N-(1-Methylethyl)-N-(1-methylpropyl)amino, N-(1-Methylethyl)-N-(2-methylpropyl)amino, N-(1,1-Dimethylethyl)-N-(1-methylethyl)amino, N-ButylN-(1-methylpropyl)amino, N-Butyl-N-(2-methylpropyl)amino, N-Butyl-N-(1,1-dimethylethyl)amino, N- (1-Methylpropyl)-N-(2-methylpropyl)amino, N-(1,1-Dimethylethyl)-N-(1-methylpropyl)amino oder N-(1,1-Dimethylethyl)-N-(2-methylpropyl)amino, insbesondere für N(CH₃)₂ oder N(C₂H₅)₂;
- C₁-C₄-Alkoxy-C₁-C₄-alkyl für: durch C₁-C₄-Alkoxy wie vorstehend genannt substituiertes C₁-C₄-Alkyl, also z.B. für Methoxymethyl, Ethoxymethyl, n-Propoxymethyl, (1-Methylethoxy)methyl, n-Butoxymethyl, (1-Methylpropoxy)methyl, (2-Methylpropoxy)methyl, (1,1-Dimethylethoxy)methyl, 2-(Methoxy)ethyl, 2-(Ethoxy)ethyl, 2-(n-Propoxy)ethyl, 2-(1-Methylethoxy)ethyl, 2-(n-Butoxy)ethyl, 2-(1-Methylpropoxy)ethyl, 2-(2-Methylpropoxy)ethyl, 2(1,1-Dimethylethoxy)ethyl, 2-(Methoxy)propyl, 2-(Ethoxy)propyl, 2-(n-Propoxy)propyl, 2-(1-Methylethoxy)propyl, 2-(n-Butoxy)propyl, 2-(1-Methylpropoxy)propyl, 2-(2-Methylpropoxy)propyl, 2-(1,1-Dimethylethoxy)propyl, 3-(Methoxy)propyl, 3-(Ethoxy)propyl, 3-(n-Propoxy)propyl, 3-(1-Methylethoxy)propyl, 3-(n-Butoxy)propyl, 3-(1-Methylpropoxy)propyl, 3-(2-Methylpropoxy)propyl, 3-(1,1-Dimethylethoxy)propyl, 2-(Methoxy)butyl, 2-(Ethoxy)butyl, 2-(n-Propoxy)butyl, 2-(1-Methylethoxy)butyl, 2-(n-Butoxy)butyl, 2-(1-Methylpropoxy)butyl, 2-(2-Methylpropoxy)butyl, 2-(1,1-Dimethylethoxy)butyl, 3-(Methoxy)butyl, 3-(Ethoxy)butyl, 3-(n-Propoxy)butyl, 3-(1-Methylethoxy)butyl, 3-(n-Butoxy)butyl, 3-(1-Methylpropoxy)butyl, 3-(2-Methylpropoxy)butyl, 3-(1,1-Dimethylethoxy)butyl, 4-(Methoxy)butyl, 4-(Ethoxy)butyl, 4-(n-Propoxy)butyl, 4-(1-Methylethoxy)butyl, 4-(n-Butoxy)butyl, 4-(1-Methylpropoxy)butyl, 4-(2-Methylpropoxy)butyl oder 4-(1,1-Dimethylethoxy)butyl, insbesondere für Methoxymethyl oder 2-Methoxyethyl;
- (C₁-C₄-Alkoxy)carbonyl-C₁-C₄-alkyl für: durch (C₁-C₄-Alkoxy)carbonyl wie vorstehend genannt substituiertes C₁-C₄-Alkyl, also z.B. für Methoxycarbonylmethyl, Ethoxycarbonylmethyl, 1-(Methoxycarbonyl)ethyl oder 2-(Methoxycarbonyl)ethyl;
- C₁-C₄-Alkylthio-C₁-C₄-alkyl für: durch C₁-C₄-Alkylthio wie vorstehend genannt substituiertes C₁-C₄-Alkyl, also z.B. für Methylthiomethyl, Ethylthiomethyl, n-Propylthiomethyl, (1-Methylethylthio)methyl, n-Butylthiomethyl, (1-Methylpropylthio)methyl, (2-Methylpropylthio)methyl, (1,1-Dimethylethylthio)methyl, 2-Methylthioethyl, 2-Ethylthioethyl, 2-(n-Propylthio)ethyl, 2-(1-Methylethylthio)ethyl, 2-(n-Butylthio)ethyl, 2-(1-Methyl-propylthio)ethyl, 2-(2-Methylpropylthio)ethyl, 2-(1,1-Dimethylethylthio)ethyl, 2-(Methylthio)-propyl, 3-(Methylthio)propyl, 2-(Ethylthio)propyl, 3-(Ethylthio)propyl, 3-(Propylthio)propyl, 3-(Butylthio)propyl, 4-(Methylthio)butyl, 4-(Ethylthio)butyl, 4-(n-Propylthio)butyl oder 4-(n-Butylthio)butyl, insbesondere für 2-(Methylthio)ethyl;
- (C₁-C₄-Alkylthio)carbonyl-C₁-C₄-alkyl für: durch (C₁-C₄-Alkyl-thio)carbonyl wie (Methylthio)carbonyl, (Ethylthio)carbonyl, (n-Propylthio)carbonyl, (1-Methylethylthio)carbonyl, (n-Butylthio)carbonyl, (1-Methylpropylthio)carbonyl, (2-Methylpropylthio)carbonyl und (1,1-Dimethylethylthio)carbonyl, vorzugsweise (Methylthio)carbonyl oder (Ethylthio)carbonyl, substituiertes C₁-C₄-Alkyl, also z.B. für (Methylthio)carbonylmethyl, (Ethylthio)carbonylmethyl, 1-[(Methylthio)carbonyl]ethyl oder 2-[(Methylthio)carbonyl]ethyl;
- C₁-C₄-Halogenalkylthio-C₁-C₄-alkyl für: C₁-C₄-Alkyl wie vorstehend genannt, das eine partiell oder vollständig durch Fluor, Chlor und/oder Brom substituierte C₁-C₄-Alkylthiogruppe, z.B. Difluormethylthio, Trifluormethylthio, Chlordifluormethylthio, Bromdifluormethylthio, 2-Fluorethylthio, 2-Chlorethylthio, 2-Bromethylthio, 2-Iodethylthio, 2,2-Difluorethylthio, 2,2,2-Trifluorethylthio, 2,2,2-Trichlorethylthio, 2-Chlor-2-fluorethylthio, 2-Chlor-2,2-difluorethylthio, 2,2-Dichlor-2-fluorethylthio, Pentafluorethylthio, 2-Fluorpropylthio, 3-Fluorpropylthio, 2-Chlorpropylthio, 3-Chlorpropylthio, 2-Brompropylthio, 3-Brompropylthio, 2,2-Difluorpropylthio, 2,3-Difluorpropylthio, 2,3-Dichlorpropylthio, 3,3,3-Trifluorpropylthio, 3,3,3-Trichlorpropylthio, 2,2,3,3,3-Pentafluorpropylthio, Heptafluorpropylthio, 1-(Fluormethyl)-2-fluorethylthio, 1-(Chlormethyl)-2-chlorethylthio, 1-(Brommethyl)-2-bromethylthio, 4-Fluorbutylthio, 4-Chlorbutylthio oder 4-Brombutylthio, trägt, also z.B. für Difluormethylthiomethyl;
- C₁-C₄-Alkylamino-C₁-C₄-alkyl für: durch C₁-C₄-Alkylamino wie vorstehend genannt substituiertes C₁-C₄-Alkyl, also z.B. für Methylaminomethyl, Ethylaminomethyl, n-Propylaminomethyl, (1-Methylethylamino)methyl, n-Butylaminomethyl, (1-Methylpropylamino)methyl, (2-Methylpropylamino)methyl, (1,1-Dimethylethylamino)methyl, 2-Methylaminoethyl, 2-Ethylaminoethyl, 2-(n-Propylamino)ethyl, 2-(1-Methylethylamino)ethyl, 2-(n-Butylamino)ethyl, 2-(1-Methyl-propylamino)ethyl, 2-(2-Methylpropylamino)ethyl, 2-(1,1-Dimethylethylamino)ethyl, 2-(Methylamino)propyl, 3-(Methylamino)propyl, 2-(Ethylamino)propyl, 3-(Ethylamino)propyl, 3-(Propylamino)propyl, 3-(Butylamino)propyl, 4-(Methylamino)butyl, 4-(Ethylamino)butyl, 4-(n-Propylamino)butyl oder 4-(n-Butylamino)butyl, insbesondere für 2-(Methylamino)ethyl;
- C₁-C₄-Alkylaminocarbonyl-C₁-C₄-alkyl für: durch C₁-C₄-Alkylaminocarbonyl wie Methylaminocarbonyl, Ethylaminocarbonyl, n-Propylaminocarbonyl, 1-Methylethylaminocarbonyl, n-Butylaminocarbonyl, 1-Methylpropylaminocarbonyl, 2-Methylpropylaminocarbonyl oder 1,1-Dimethylethylaminocarbonyl, vorzugsweise Methylaminocarbonyl oder Ethylaminocarbonyl, substituiertes C₁-C₄-Alkyl, also z.B. für (Methylaminocarbonyl)methyl, (Ethylaminocarbonyl)methyl, 1-(Methylaminocarbonyl)ethyl oder 2-(Methylaminocarbonyl)ethyl;
- Di-(C₁-C₄-alkyl)amino-C₁-C₄-alkyl: durch Di-(C₁-C₄-alkyl)amino wie vorstehend genannt substituiertes C₁-C₄-Alkyl, also z.B. für Dimethylaminomethyl oder Diethylaminomethyl;
- Di-(C₁-C₄-alkyl)aminocarbonyl-C₁-C₄-alkyl: durch Di-(C₁-C₄-alkyl)aminocarbonyl wie N,N-Dimethylaminocarbonyl, N,N-Diethylaminocarbonyl, N,N-Dipropylaminocarbonyl, N,N-Di-(1-methylethyl)aminocarbonyl, N,N-Dibutylaminocarbonyl, N,N-Di-(1-methylpropyl)aminocarbonyl, N,N-Di-(2-methylpropyl)aminocarbonyl, N,N-Di-(1,1-dimethylethyl)aminocarbonyl, N-Ethyl-N-methylaminocarbonyl, N-Methyl-N-propylaminocarbonyl, N-Methyl-N-(1-methylethyl)aminocarbonyl, N-Butyl-N-methylaminocarbonyl, N-Methyl-N-(1-methylpropyl)aminocarbonyl, N-Methyl-N-(2-methylpropyl)aminocarbonyl, N-(1,1-Dimethylethyl)-N-methylaminocarbonyl, N-Ethyl-N-propylaminocarbonyl, N-Ethyl-N-(1-methylethyl)aminocarbonyl, N-Butyl-N-ethylaminocarbonyl, N-Ethyl-N-(1-methylpropyl)aminocarbonyl, N-Ethyl-N-(2-methylpropyl)aminocarbonyl, N-Ethyl-N-(1,1-dimethylethyl)aminocarbonyl, N-(1-Methylethyl)-N-propylaminocarbonyl, N-Butyl-N-propylaminocarbonyl, N-(1-Methylpropyl)-N-propylaminocarbonyl, N-(2-Methylpropyl)-N-propylaminocarbonyl, N-(1,1-Dimethylethyl)-N-propylaminocarbonyl, N-ButylN-(1-methylethyl)aminocarbonyl, N'(1-Methylethyl)-N-(1-methylpropyl)aminocarbonyl, N-(1-Methylethyl)-N-(2-methylpropyl)aminocarbonyl, N-(1,1-Dimethylethyl)-N-(1-methylethyl)aminocarbonyl, N-Butyl-N-(1-methylpropyl)aminocarbonyl, N-Butyl-N-(2-methylpropyl)aminocarbonyl, N-Butyl-N-(1,1-dimethylethyl)aminocarbonyl, N-(1-Methylpropyl)-N-(2-methylpropyl)aminocarbonyl, N-(1,1-Dimethylethyl)-N-(1-methylpropyl)aminocarbonyl oder N-(1,1-Dimethylethyl)-N-(2-methylpropyl)aminocarbonyl, vorzugsweise N,N-Dimethylaminocarbonyl oder N,N-Diethylaminocarbonyl, substituiertes C₁-C₄-Alkyl, also z.B. für Dimethylaminocarbonylmethyl, Diethylaminocarbonylmethyl, 1-(Dimethylaminocarbonyl)ethyl oder 2-(Dimethylaminocarbonyl)ethyl;
- C₁-C₄-Alkylsulfinyl-C₁-C₄-alkyl für: durch Methylsulfinyl, Ethylsulfinyl, n-Propylsulfinyl, 1-Methylethylsulfinyl, n-Butylsulfinyl, 1-Methylpropylsulfinyl, 2-Methylpropylsulfinyl oder 1,1-Dimethylethylsulfinyl, vorzugsweise Methylsulfinyl, substituiertes C₁-C₄-Alkyl, also beispielsweise für Methylsulfinylmethyl oder 2-Methylsulfinylethyl;
- C₁-C₄-Halogenalkylsulfinyl-C₁-C₄-alkyl für: C₁-C₄-Alkyl wie vorstehend genannt, das eine partiell oder vollständig durch Fluor, Chlor und/oder Brom substituierte C₁-C₄-Alkylsulfinylgruppe, z.B. Difluormethylsulfinyl, Trifluormethylsulfinyl, Chlordifluor-methylsulfinyl, Bromdifluormethylsulfinyl, 2-Fluorethylsulfinyl, 2-Chlorethylsulfinyl, 2-Bromethylsulfinyl, 2-Iodethylsulfinyl, 2,2-Difluorethylsulfinyl, 2,2,2-Trifluorethylsulfinyl, 2,2,2-Trichlorethylsulfinyl, 2-Chlor-2-fluorethylsulfinyl, 2-Chlor-2,2-difluorethylsulfinyl, 2,2-Dichlor-2-fluorethylsulfinyl, Pentafluorethylsulfinyl, 2-Fluorpropylsulfinyl, 3-Fluorpropylsulfinyl, 2-Chlorpropylsulfinyl, 3-Chlorpropylsulfinyl, 2-Brompropylsulfinyl, 3-Brompropylsulfinyl, 2,2-Difluorpropylsulfinyl, 2,3-Difluorpropylsulfinyl, 2,3-Dichlorpropylsulfinyl, 3,3,3-Trifluorpropylsulfinyl, 3,3,3-Trichlorpropylsulfinyl, 2,2,3,3,3-Pentafluorpropylsulfinyl, Heptafluorpropylsulfinyl, 1-(Fluormethyl)-2-fluorethylsulfinyl, 1-(Chlormethyl)-2-chlorethylsulfinyl, 1-(Brommethyl)-2-bromethylsulfinyl, 4-Fluorbutylsulfinyl, 4-Chlorbutylsulfinyl oder 4-Brombutylsulfinyl, trägt, also beispielsweise für Difluormethylsulfinylmethyl;
- C₁-C₄-Alkylsulfonyl für: Methylsulfonyl, Ethylsulfonyl, n-Propylsulfonyl, 1-Methylethylsulfonyl, n-Butylsulfonyl, 1-Methylpropylsulfonyl, 2-Methylpropylsulfonyl oder 1,1-Dimethylethylsulfonyl, insbesondere für Methylsulfonyl oder Ethylsulfonyl;
- C₁-C₄-Alkylsulfonyl-C₁-C₄-alkyl für: durch C₁-C₄-Alkylsulfonyl wie vorstehend genannt, vorzugsweise Methylsulfonyl, substituiertes C₁-C₄-Alkyl, also beispielsweise für Methylsulfonylmethyl oder 2-Methylsulfonylethyl;
- C₁-C₄-Halogenalkylsulfonyl-C₁-C₄-alkyl für: C₁-C₄-Alkyl wie vorstehend genannt, das eine partiell oder vollständig durch Fluor, Chlor und/oder Brom substituierte C₁-C₄-Alkylsulfonylgruppe, z.B. Difluormethylsulfonyl, Trifluormethylsulfonyl, Chlordifluor-methylsulfonyl, Bromdifluormethylsulfonyl, 2-Fluorethylsulfonyl, 2-Chlorethylsulfonyl, 2-Bromethylsulfonyl, 2-Iodethylsulfonyl, 2,2-Difluorethylsulfonyl, 2,2,2-Trifluorethylsulfonyl, 2,2,2-Trichlorethylsulfonyl, 2-Chlor-2-fluorethylsulfonyl, 2-Chlor-2,2-difluorethylsulfonyl, 2,2-Dichlor-2-fluorethylsulfonyl, Pentafluorethylsulfonyl, 2-Fluorpropylsulfonyl, 3-Fluorpropylsulfonyl, 2-Chlorpropylsulfonyl, 3-Chlorpropylsulfonyl, 2-Brompropylsulfonyl, 3-Brompropylsulfonyl, 2,2-Difluorpropylsulfonyl, 2,3-Difluorpropylsulfonyl, 2,3--Dichlorpropylsulfonyl, 3,3,3-Trifluorpropylsulfonyl, 3,3,3-Trichlorpropylsulfonyl, 2,2,3,3,3-Pentafluorpropylsulfonyl, Heptafluorpropylsulfonyl, 1-(Fluormethyl)-2-fluorethylsulfonyl, 1-(Chlormethyl)-2-chlorethylsulfonyl, 1-(Brommethyl)-2-bromethylsulfonyl, 4-Fluorbutylsulfonyl, 4-Chlorbutylsulfonyl oder 4-Brombutylsulfonyl, trägt, also beispielsweise für 2-Chlorethylsulfonyl;
- C₃-C₆-Alkenyl für: z.B. Prop-2-en-1-yl, n-Buten-4-yl, l-Methyl-prop-2-en-1-yl, 2-Methyl-prop-2-en-1-yl, 2-Buten-1-yl, n-Penten-3-yl, n-Penten-4-yl, 1-Methylbut-2-en-1-yl, 2-Methyl-but-2-en-1-yl, 3-Methylbut-2-en-1-yl, 1-Methyl-but-3-en-1-yl, 2-Methylbut-3-en-1-yl, 3-Methyl-but-3-en-1-yl, 1,1-Dimethylprop-2-en-1-yl, 1,2-Dimethyl-prop-2-en-1-yl, 1-Ethylprop-2-en-1-yl, n-Hex-3-en-1-yl, n-Hex-4-en-1-yl, n-Hex-5-en-1-yl, 1-Methyl-pent-3-en-1-yl, 2-Methylpent-3-en-1-yl, 3-Methyl-pent-3-en-1-yl, 4-Methylpent-3-en-1-yl, 1-Methyl-pent-4-en-1-yl, 2-Methylpent-4-en-1-yl, 3-Methyl-pent-4-en-1-yl, 4-Methylpent-4-en-1-yl, 1,1-Dimethyl-but-2-en-1-yl, 1,1-Dimethylbut-3-en-1-yl, 1,2-Dimethyl-but-2-en-1-yl, 1,2-Dimethylbut-3-en-1-yl, 1,3-Dimethyl-but-2-en-1-yl, 1,3-Dimethylbut-3-en-1-yl, 2,2-Dimethyl-but-3-en-1-yl, 2,3-Dimethylbut-2-en-1-yl, 2,3-Dimethyl-but-3-en-1-yl, 3,3-Dimethylbut-2-en-1-yl, 1-Ethyl-but-2-en-1-yl, 1-Ethyl-but-3-en-1-yl, 2-Ethyl-but-2-en-1-yl, 2-Ethyl-but-3-en-1-yl, 1,1,2-Trimethyl-prop-2-en-1-yl, 1-Ethyl-1-methyl-prop-2-en-1-yl oder 1-Ethyl-2-methyl-prop-2-en-1-yl, insbesondere für Prop-2-en-1-yl oder n-Buten-4-yl;
- C₃-C₆-Halogenalkenyl für: C₃-C₆-Alkenyl wie vorstehend genannt, das partiell oder vollständig durch Fluor, Chlor und/ oder Brom substituiert ist, also z.B. 2-Chlorallyl, 3-Chlorallyl, 2,3-Dichlorallyl, 3,3-Dichlorallyl, 2,3,3-Trichlorallyl, 2,3-Dichlorbut-2-enyl, 2-Bromallyl, 3-Bromallyl, 2,3-Dibromallyl, 3,3-Dibromallyl, 2,3,3-Tribromallyl oder 2,3-Dibrombut-2-enyl, insbesondere für 2-Chlorallyl oder 3,3-Dichlorallyl;
- Cyano-C₃-C₆-alkenyl für: z.B. 3-Cyano-allyl, 4-Cyanobut-2-enyl, 4-Cyano-but-3-enyl oder 5-Cyano-pent-4-enyl, vorzugsweise 3-Cyanoallyl oder 4-Cyano-but-2-enyl, insbesondere für 3-Cyanoallyl;
- C₃-C₄-Alkenyloxy-C₁-C₄-alkyl für: durch C₃-C₄-Alkenyloxy wie Prop-2-enyloxy, n-But-2-enyloxy, n-But-3-enyloxy, 1-Methylprop-2-enyloxy oder 2-Methyl-prop-2-enyloxy, vorzugsweise Allyloxy, 2-Methylprop-2-en-1-yloxy, But-1-en-3-yloxy, But-1-en-4-yloxy oder But-2-en-1-yloxy substituiertes C₁-C₄-Alkyl, also beispielsweise für Allyloxymethyl, 2-Allyloxyethyl oder But-1-en-4-yloxymethyl;
- C₃-C₄-Alkenylthio-C₁-C₄-alkyl für: durch C₃-C₄-Alkenylthio wie Prop-2-enylthio, n-But-2-enylthio, n-But-3-enylthio, 1-Methyl-prop-2-enylthio oder 2-Methyl-prop-2-enylthio, vorzugsweise Allylthio, 2-Methylprop-2-en-1-ylthio, But-1-en-3-ylthio, But-1-en-4-ylthio oder But-2-en-1-ylthio substituiertes C₁-C₄-Alkyl, also beispielsweise für Allylthiomethyl, 2-Allylthioethyl oder But-1-en-4-ylthiomethyl;
- C₃-C₄-Alkenylsulfinyl-C₁-C₄-alkyl für: durch C₃-C₄-Alkenylsulfinyl wie Prop-2-enylsulfinyl, n-But-2-enylsulfinyl, n-But-3-enylsulfinyl, 1-Methylprop-2-enylsulfinyl oder 2-Methylprop-2-enylsulfinyl, vorzugsweise Allylsulfinyl, 2-Methylprop-2-en-1-ylsulfinyl, But-1-en-3-ylsulfinyl, But-1-en-4-ylsulfinyl oder But-2-en-1-ylsulfinyl substituiertes C₁-C₄-Alkyl, also beispielsweise für Allylsulfinylmethyl, 2-Allylsulfinylethyl oder But-1-en-4-ylsulfinylmethyl;
- C₃-C₄-Alkenylsulfonyl-C₁-C₄-alkyl für: durch C₃-C₄-Alkenylsulfonyl wie Prop-2-enylsulfonyl, n-But-2-enylsulfonyl, n-But-3-enylsulfonyl, 1-Methylprop-2-enylsulfonyl oder 2-Methylprop-2-enylsulfonyl, vorzugsweise Allylsulfonyl, 2-Methylprop-2-en-1-ylsulfonyl, But-1-en-3-ylsulfonyl, But-1-en-4-ylsulfonyl oder But-2-en-1-ylsulfonyl substituiertes C₁-C₄-Alkyl, also beispielsweise für Allylsulfonylmethyl, 2-Allylsulfonylethyl oder But-1-en-4-ylsulfonylmethyl;
- C₃-C₆-Alkinyl für: z.B. Propargyl, n-But-1-in-3-yl, n-But-1-in-4-yl, n-But-2-in-1-yl, n-Pent-1-in-3-yl, n-Pent-1-in-4-yl, n-Pent-1-in-5-yl, n-Pent-2-in-1-yl, n-Pent-2-in-4-yl, n-Pent-2-in-5-yl, 3-Methyl-but-1-in-3-yl, 3-Methyl-but-1-in-4-yl, n-Hex-1-in-3-yl, n-Hex-1-in-4-yl, n-Hex-1-in-5-yl, n-Hex-1-in-6-yl, n-Hex-2-in-1-yl, n-Hex-2-in-4-yl, n-Hex-2-in-5-yl, n-Hex-2-in-6-yl, n-Hex-3-in-1-yl, n-Hex-3-in-2-yl, 3-Methyl-pent-1-in-3-yl, 3-Methyl-pent-1-in-4-yl, 3-Methyl-pent-1-in-5-yl, 4-Methylpent-2-in-4-yl oder 4-Methyl-pent-2-in-5-yl, insbesondere für Propargyl;
- C₃-C₆-Halogenalkinyl für: C₃-C₆-Alkinyl wie vorstehend genannt, das partiell oder vollständig durch Fluor, Chlor und/ oder Brom substituiert ist, also z.B. für 1,1-Difluorprop-2-in-1-yl, 4-Fluorbut-2-in-1-yl, 4-Chlorbut-2-in-1-yl, 1,1-Difluorbut-2-in-1-yl, 5-Fluorpent-3-in-1-yl oder 6-Fluorhex-4-in-1-yl;
- Cyano-C₃-C₆-alkinyl für: z.B. 3-Cyanopropargyl;
- C₃-C₄-Alkinyloxy-C₁-C₄-alkyl für: durch C₃-C₄-Alkenyloxy wie Prop-2-inyloxy, n-But-2-inyloxy, n-But-3-inyloxy oder 1-Methyl-prop-2-inyloxy, vorzugsweise Propargyloxy, But-1-in-3-yloxy, But-1-in-4-yloxy oder But-2-in-1-yloxy, substituiertes C₁-C₄-Alkyl, also beispielsweise für Propargyloxymethyl oder 2-Propargyloxyethyl;
- C₃-C₄-Alkinylthio-C₁-C₄-alkyl für: durch C₃-C₄-Alkenylthio wie Prop-2-inylthio, n-But-2-inylthio, n-But-3-inylthio oder 1-Methyl-prop-2-inylthio, vorzugsweise Propargylthio, But-1-in-3-ylthio, But-1-in-4-ylthio oder But-2-in-1-ylthio, substituiertes C₁-C₄-Alkyl, also beispielsweise für Propargylthiomethyl oder 2-Propargylthioethyl;
- C₃-C₄-Alkinylsulfinyl-C₁-C₄-alkyl für: durch C₃-C₄-Alkenylsulfinyl wie Prop-2-inylsulfinyl, n-But-2-inylsulfinyl, n-But-3-inylsulfinyl und 1-Methyl-prop-2-inylsulfinyl, vorzugsweise Propargylsulfinyl, But-1-in-3-ylsulfinyl, But-1-in-4-ylsulfinyl oder But-2-in-1-ylsulfinyl, substituiertes C₁-C₄-Alkyl, also beispielsweise für Propargylsulfinylmethyl oder 2-Propargylsulfinylethyl;
- C₃-C₄-Alkinylsulfonyl-C₁-C₄-alkyl für: durch C₃-C₄-Alkenylsulfonyl wie Prop-2-inylsulfonyl, n-But-2-inylsulfonyl, n-But-3-inylsulfonyl und 1-Methyl-prop-2-inylsulfonyl, vorzugsweise Propargylsulfonyl, But-1-in-3-ylsulfonyl, But-1-in-4-ylsulfonyl oder But-2-in-1-ylsulfonyl, substituiertes C₁-C₄-Alkyl, also beispielsweise Propargylsulfonylmethyl oder 2-Propargylsulfonylethyl;
- C₃-C₈-Cycloalkyl für: Cyclopropyl, Cyclobutyl, Cyclopentyl, Cyclohexyl, Cycloheptyl oder Cyclooctyl, insbesondere für Cyclopentyl oder Cyclohexyl;
- C₃-C₈-Cycloalkyl-C₁-C₄-alkyl für: Cyclopropylmethyl, Cyclobutylmethyl, Cyclopentylmethyl, Cyclohexylmethyl, Cycloheptylmethyl, Cyclooctylmethyl, 1-(Cyclopropyl)ethyl, 1-(Cyclobutyl)ethyl, 1-(Cyclopentyl)ethyl, 1-(Cyclohexyl)ethyl, 1-(Cycloheptyl)ethyl, 1-(Cyclooctyl)ethyl, 2-(Cyclopropyl)ethyl, 2-(Cyclobutyl)ethyl, 2-(Cyclopentyl)ethyl, 2-(Cyclohexyl)ethyl, 2-(Cycloheptyl)ethyl, 2-(Cyclooctyl)ethyl, 3-(Cyclopropyl)propyl, 3-(Cyclobutyl)propyl, 3-(Cyclopentyl)propyl, 3-(Cyclohexyl)propyl, 3-(Cycloheptyl)propyl, 3-(Cyclooctyl)propyl, 4-(Cyclopropyl)butyl, 4-(Cyclobutyl)butyl, 4-(Cyclopentyl)butyl, 4-(Cyclohexyl)butyl, 4-(Cycloheptyl)butyl oder 4-(Cyclooctyl)butyl, insbesondere für Cyclopentylmethyl oder Cyclohexylmethyl;
- C₃-C₈-Cycloalkoxy-C₁-C₄-alkyl für: Cyclopropyloxymethyl, Cyclobutyloxymethyl, Cyclopentyloxymethyl, Cyclohexyloxymethyl, Cycloheptyloxymethyl, Cyclooctyloxymethyl, 1-(Cyclopropyloxy)ethyl, 1-(Cyclobutyloxy)ethyl, 1-(Cyclopentyloxy)ethyl, 1-(Cyclohexyloxy)ethyl, 1-(Cycloheptyloxy)ethyl, 1-(Cyclooctyloxy)ethyl, 2-(Cyclopropyloxy)ethyl, 2-(Cyclobutyloxy)ethyl, 2-(Cyclopentyloxy)ethyl, 2-(Cyclohexyloxy)ethyl, 2-(Cycloheptyloxy)ethyl, 2-(Cyclooctyloxy)ethyl, 3-(Cyclopropyloxy)propyl, 3-(Cyclobutyloxy)propyl, 3-(Cyclopentyloxy)propyl, 3-(Cyclohexyloxy)propyl, 3-(Cycloheptyloxy)propyl, 3-(Cyclooctyloxy)propyl, 4-(Cyclopropyloxy)butyl, 4-(Cyclobutyloxy)butyl, 4-(Cyclopentyloxy)butyl, 4-(Cyclohexyloxy)butyl, 4-(Cycloheptyloxy)butyl oder 4-(Cyclooctyloxy)butyl, insbesondere für Cyclopentyloxymethyl, Cyclohexyloxymethyl oder 2-(Cyclopentyloxy)ethyl.

Unter 3- bis 7-gliedrigem Heterocyclyl sind sowohl gesättigte, partiell oder vollständig ungesättigte als auch aromatische Heterocyclen mit ein bis drei Heteroatomen, ausgewählt aus einer Gruppe bestehend aus
- ein bis drei Stickstoffatomen,
- einem oder zwei Sauerstoff- und
- einem oder zwei Schwefelatomen,
zu verstehen.

Beispiele für gesättigte Heterocyclen, die ein Carbonyl- oder Thiocarbonyl-Ringglied enthalten können, sind:
Oxiranyl, Thiiranyl, Aziridin-1-yl, Aziridin-2-yl, Diaziridin-1-yl, Diaziridin-3-yl, Oxetan-2-yl, Oxetan-3-yl, Thietan-2-yl, Thietan-3-yl, Azetidin-1-yl, Azetidin-2-yl, Azetidin-3-yl, Tetrahydrofuran-2-yl, Tetrahydrofuran-3-yl, Tetrahydrothiophen-2-yl, Tetrahydrothiophen-3-yl, Pyrrolidin-1-yl, Pyrrolidin-2-yl, Pyrrolidin-3-yl, 1,3-Dioxolan-2-yl, 1,3-Dioxolan-4-yl, 1,3-Oxathiolan-2-yl, 1,3-Oxathiolan-4-yl, 1,3-Oxathiolan-5-yl, 1,3-Oxazolidin-2-yl, 1,3-Oxazolidin-3-yl, 1,3-Oxazolidin-4-yl, 1,3-Oxazolidin-5-yl, 1,2-Oxazolidin-2-yl, 1,2-Oxazolidin-3-yl, 1,2-Oxazolidin-4-yl, 1,2-Oxazolidin-5-yl, 1,3-Dithiolan-2-yl, 1,3-Dithiolan-4-yl, Pyrrolidin-1-yl, Pyrrolidin-2-yl, Pyrrolidin-5-yl, Tetrahydropyrazol-1-yl, Tetrahydropyrazol-3-yl, Tetrahydropyrazol-4-yl, Tetrahydropyran-2-yl, Tetrahydropyran-3-yl, Tetrahydropyran-4-yl, Tetrahydrothiopyran-2-yl, Tetrahydrothiopyran-3-yl, Tetrahydropyran-4-yl, Piperidin-1-yl, Piperidin-2-yl, Piperidin-3-yl, Piperidin-4-yl, 1,3-Dioxan-2-yl, 1,3-Dioxan-4-yl, 1,3-Dioxan-5-yl, 1,4-Dioxan-2-yl, 1,3-Oxathian-2-yl, 1,3-Oxathian-4-yl, 1,3-Oxathian-5-yl, 1,3-Oxathian-6-yl, 1,4-Oxathian-2-yl, 1,4-Oxathian-3-yl, Morpholin-2-yl, Morpholin-3-yl, Morpholin-4-yl, Hexahydropyridazin-1-yl, Hexahydropyridazin-3-yl, Hexahydropyridazin-4-yl, Hexahydropyrimidin-1-yl, Hexahydropyrimidin-2-yl, Hexahydropyrimidin-4-yl, Hexahydropyrimidin-5-yl, Piperazin-1-yl, Piperazin-2-yl, Piperazin-3-yl, Hexahydro-1,3,5-triazin-1-yl, Hexahydro-1,3,5-triazin-2-yl, Oxepan-2-yl, Oxepan-3-yl, Oxepan-4-yl, Thiepan-2-yl, Thiepan-3-yl, Thiepan-4-yl, 1,3-Dioxepan-2-yl, 1,3-Dioxepan-4-yl, 1,3-Dioxepan-5-yl, 1,3-Dioxepan-6-yl, 1,3-Dithiepan-2-yl, 1,3-Dithiepan-2-yl, 1,3-Dithiepan-2-yl, 1,3-Dithiepan-2-yl, 1,4-Dioxepan-2-yl, 1,4-Dioxepan-7-yl, Hexahydroazepin-1-yl, Hexahydroazepin-2-yl, Hexahydroazepin-3-yl, Hexahydroazepin-4-yl, Hexahydro-1,3-diazepin-1-yl, Hexahydro-1,3-diazepin-2-yl, Hexahydro-1,3-diazepin-4-yl, Hexahydro-1,4-diazepin-1-yl und Hexahydro-1,4-diazepin-2-yl;

Beispiele für ungesättigte Heterocyclen, die ein Carbonyl- oder Thiocarbonyl-Ringglied enthalten können, sind:
Dihydrofuran-2-yl, 1,2-Oxazolin-3-yl, 1,2-Oxazolin-5-yl, 1,3-Oxazolin-2-yl;

Unter den Heteroaromaten sind die 5- und 6-gliedrigen bevorzugt, also z.B. Furyl wie 2-Furyl und 3-Furyl, Thienyl wie 2-Thienyl und 3-Thienyl, Pyrrolyl wie 2-Pyrrolyl und 3-Pyrrolyl, Isoxazolyl wie 3-Isoxazolyl, 4-Isoxazolyl und 5-Isoxazolyl, Isothiazolyl wie 3-Isothiazolyl, 4-Isothiazolyl und 5-Isothiazolyl, Pyrazolyl wie 3-Pyrazolyl, 4-Pyrazolyl und 5-Pyrazolyl, Oxazolyl wie 2-Oxazolyl, 4-Oxazolyl und 5-Oxazolyl, Thiazolyl wie 2-Thiazolyl, 4-Thiazolyl und 5-Thiazolyl, Imidazolyl wie 2-Imidazolyl und 4-Imidazolyl, Oxadiazolyl wie 1,2,4-Oxadiazol-3-yl, 1,2,4-Oxadiazol-5-yl und 1,3,4-Oxadiazol-2-yl, Thiadiazolyl wie 1,2,4-Thiadiazol-3-yl, 1,2,4-Thiadiazol-5-yl und 1,3,4-Thiadiazol-2-yl, Triazolyl wie 1,2,4-Triazol-1-yl, 1,2,4-Triazol-3-yl und 1,2,4-Triazol-4-yl, Pyridinyl wie 2-Pyridinyl, 3-Pyridinyl und 4-Pyridinyl, Pyridazinyl wie 3-Pyridazinyl und 4-Pyridazinyl, Pyrimidinyl wie 2-Pyrimidinyl, 4-Pyrimidinyl und 5-Pyrimidinyl, des weiteren 2-Pyrazinyl, 1,3,5-Triazin-2-yl und 1,2,4-Triazin-3-yl, insbesondere Pyridyl, Pyrimidyl, Furanyl und Thienyl.

Alle Phenyl- und heterocyclischen Ringe sind vorzugsweise unsubstituiert oder tragen einen Cyano-, Nitro-, Halogen-, C₁-C₄-Alkyl-, C₁-C₄-Halogenalkyl-, C₁-C₄-Alkoxy-, C₁-C₄-Halogenalkoxy-, (C₁-C₄-Alkyl)carbonyl-, (C₁-C₄-Alkoxy)carbonyl- oder (C₁-C₄-Alkyl)carbonyloxy-Substituenten.

Im Hinblick auf die Verwendung der substituierten 2-Phenylpyridine I als Herbizide oder zur Desikkation/Defoliation von Pflanzen sind diejenigen Verbindungen I bevorzugt, bei denen die Substituenten folgende Bedeutungen haben, und zwar jeweils für sich allein oder in Kombination:
- X: 1,2-Ethindiyl, Methylen, 1,2-Ethandiyl, Methylenoxymethylen, Ethen-1,2-diyl oder über das Heteroatom an den Phenylring gebundenes Oxymethylen, wobei die letztgenannten 5 Brücken an dem Phosphor benachbarten Kohlenstoffatom einen der folgenden Substituenten tragen können: Cyano, Halogen, C₁-C₄-Alkyl oder (C₁-C₄-Alkoxy)carbonyl;
insbesondere -CH₂-, -CH₂CH₂-, -CH₂-CH(Halogen)-, -CH₂-CH(CN)-, -CH₂-CH(CH₃)-, -CH₂-CH(COOCH₃)-, -CH₂-O-CH₂-, -CH=CH-, -CH=C(Halogen)-, -CH=C(CN)-, -CH=C(CH₃)-, -CH=C(COOCH₃)-, -CH₂-CH(COOCH₃)- oder -OCH₂-;
besonders bevorzugt -CH₂-CH(Halogen)- oder -CH=C(Halogen)-;
- Y: Sauerstoff; Z¹ Sauerstoff; Y² Sauerstoff;

R¹, R², R⁷, R⁸ unabhängig voneinander Wasserstoff, C₁-C₆-Alkyl, C₁-C₆-Halogenalkyl, Cyano-C₁-C₄-alkyl, C₁-C₄-Alkoxy-C₁-C₄-alkyl, Di-(C₁-C₄-alkyl)amino-C₁-C₄-alkyl, C₁-C₄-Alkylthio-C₁-C₄-alkyl, C₁-C₄-Alkylsulfonyl-C₁-C₄-alkyl, C₁-C₄-Halogenalkylsulfonyl-C₁-C₄-alkyl, C₃-C₆-Alkenyl, C₃-C₆-Halogenalkenyl, C₃-C₆-Alkinyl, Hydroxycarbonyl-C₁-C₄-alkyl, (C₁-C₄-Alkoxy)carbonyl-C₁-C₄-alkyl, Aminocarbonyl-C₁-C₄-alkyl, (C₁-C₄-Alkyl)aminocarbonyl-C₁-C₄-alkyl, Di-(C₁-C₄-alkyl)aminocarbonyl-C₁-C₄-alkyl,
C₃-C₈-Cycloalkyl, C₃-C₈-Cycloalkyl-C₁-C₄-alkyl, Phenyl, Phenyl-C₁-C₄-alkyl oder 3- bis 7-gliedriges Heterocyclyl oder Heterocyclyl-C₁-C₄-alkyl, wobei alle Heterocyclen gewünschtenfalls ein Carbonyl- oder Thiocarbonyl-Ringglied enthalten können, und wobei alle Cycloalkyl-, Phenyl- und Heterocyclylringe unsubstituiert sein oder ein bis vier Substituenten tragen können, jeweils ausgewählt aus der Gruppe bestehend aus Halogen, Nitro, Amino, Hydroxy, Carboxy, C₁-C₄-Alkyl, C₁-C₄-Halogenalkyl, C₁-C₄-Alkoxy, C₁-C₄-Alkylsulfonyl, (C₁-C₄-Alkyl)carbonyl, (C₁-C₄-Alkoxy)carbonyl und Di-(C₁-C₄-alkyl)amino, oder R¹ und R² und/oder R¹ und R⁷ und/oder R² und R⁸ bilden jeweils zusammen eine
1,2-Ethandiyl-, 1,3-Propylen-, Tetramethylen-, Pentamethylen- oder Ethylenoxyethylen-Kette, die gewünschtenfalls durch ein bis vier C₁-C₄-Alkylgruppen und/oder ein oder zwei (C₁-C₄-Alkoxy)carbonylgruppen substituiert sein kann;
insbesondere Wasserstoff, C₁-C₆-Alkyl, C₁-C₆-Halogenalkyl, C₃-C₆-Alkenyl, C₃-C₆-Halogenalkenyl, C₃-C₆-Alkinyl, (C₁-C₄-Alkoxy)carbonyl-C₁-C₄-alkyl, C₃-C₈-Cycloalkyl, C₃-C₈-Cycloalkyl-C₁-C₄-alkyl, Phenyl, Phenyl-C₁-C₄-alkyl, 3- bis 7-gliedriges Heterocyclyl oder Heterocyclyl-C₁-C₄-alkyl,
oder R¹ und R² und/oder R¹ und R⁷ und/oder R² und R⁸ bilden jeweils zusammen eine 1,2-Ethandiyl- oder 1,3-Propylen-Kette;
besonders bevorzugt Wasserstoff, C₁-C₆-Alkyl, C₃-C₆-Alkenyl, C₃-C₆-Alkinyl, C₃-C₈-Cycloalkyl, Phenyl oder Phenyl-C₁-C₄-alkyl, oder R¹ und R² bilden zusammen eine 1,3-Propylen-Kette;
- R³: Cyano, Halogen oder Trifluormethyl, insbesondere Cyano oder Chlor, besonders bevorzugt Chlor;
- R⁴: Wasserstoff, Fluor oder Chlor, insbesondere Wasserstoff oder Fluor;
- R⁵: Chlor;
- R⁶: Chlor oder Trifluormethyl, insbesondere Trifluormethyl;
- n: null.

Ganz besonders bevorzugt sind die in der folgenden Tabelle 1 aufgeführten Verbindungen Iaα (≙ I mit X = Methylen; R³, R⁵ = Chlor; R⁴ = Wasserstoff; R⁶ = Trifluormethyl; n = 0):

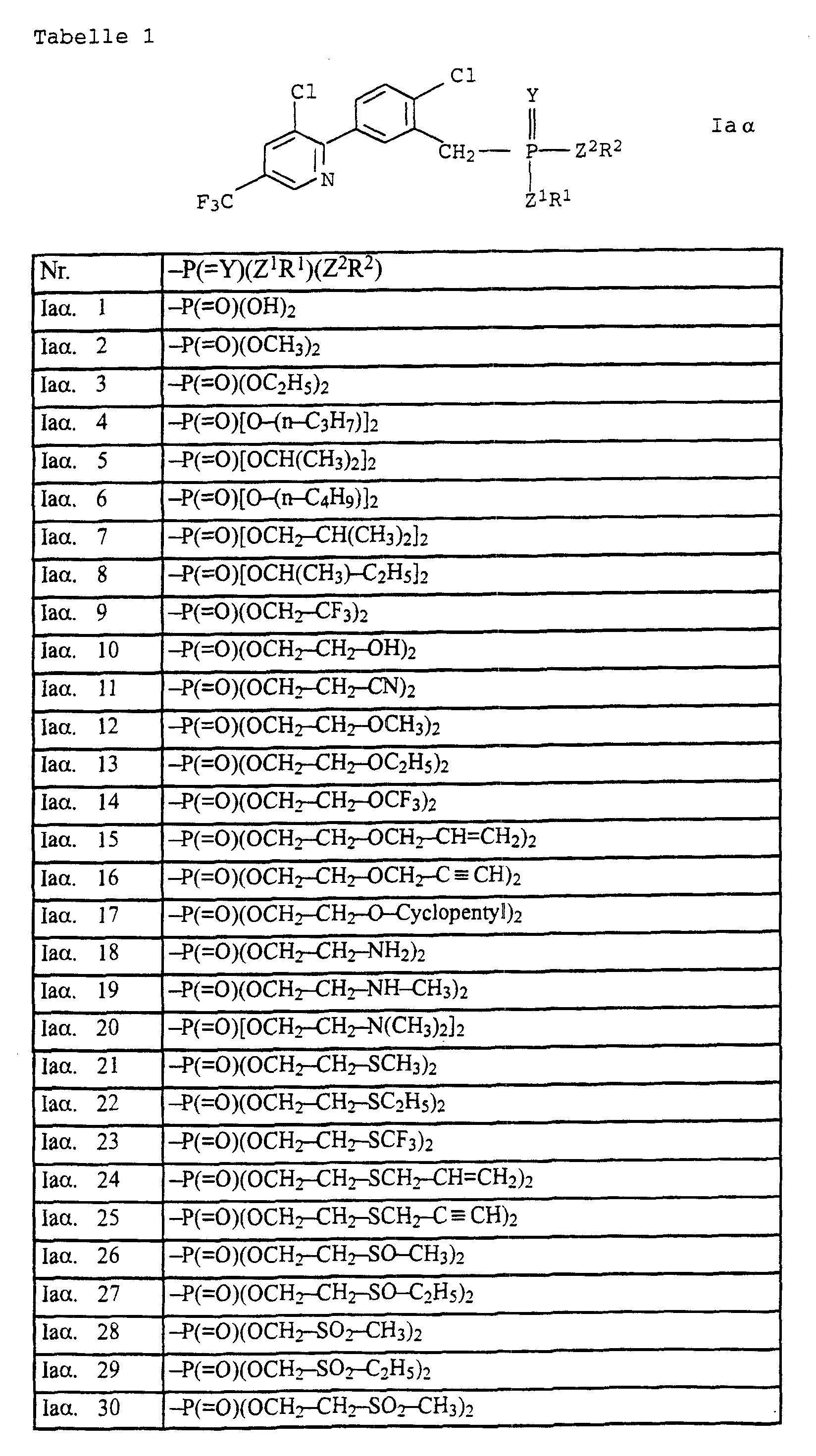

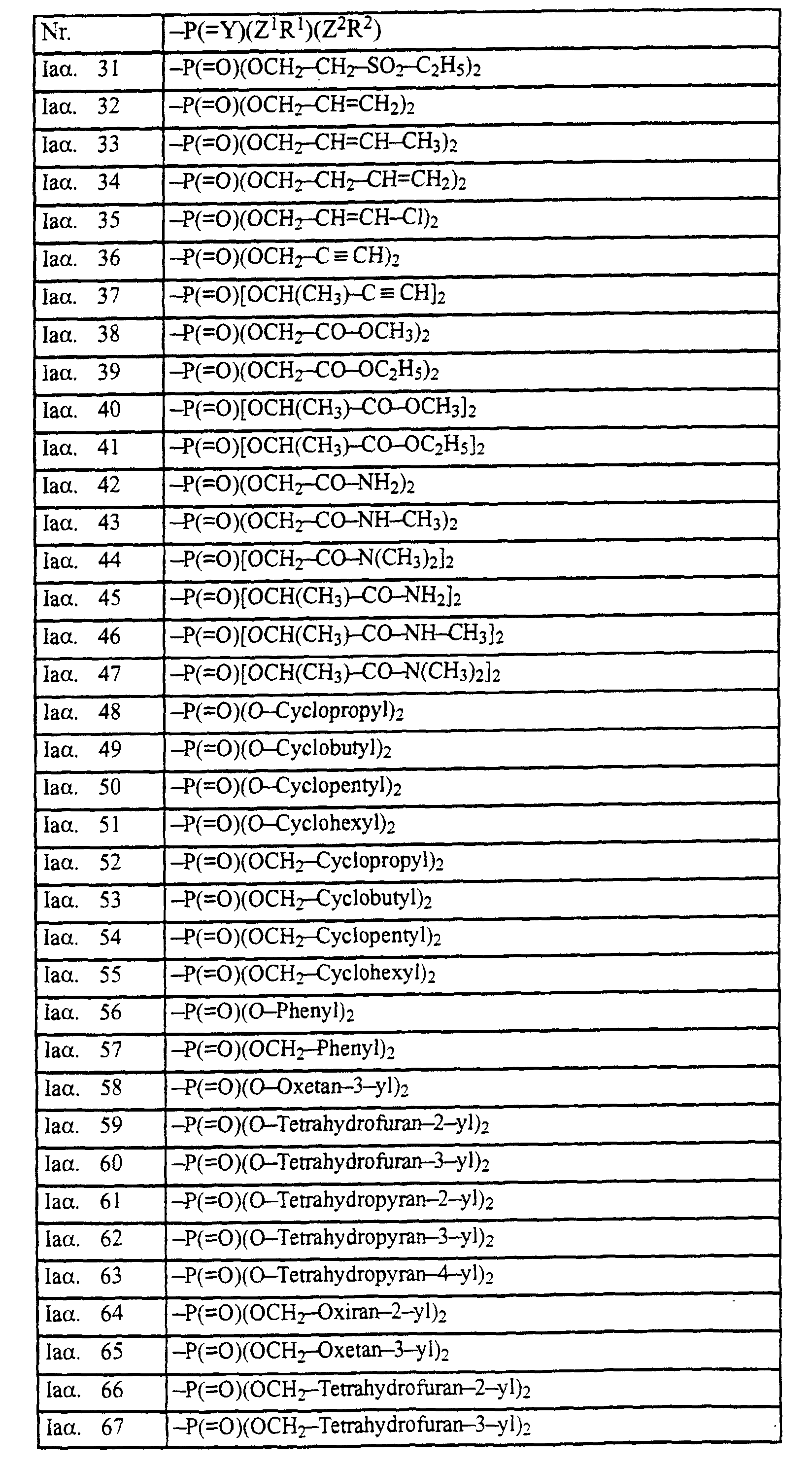

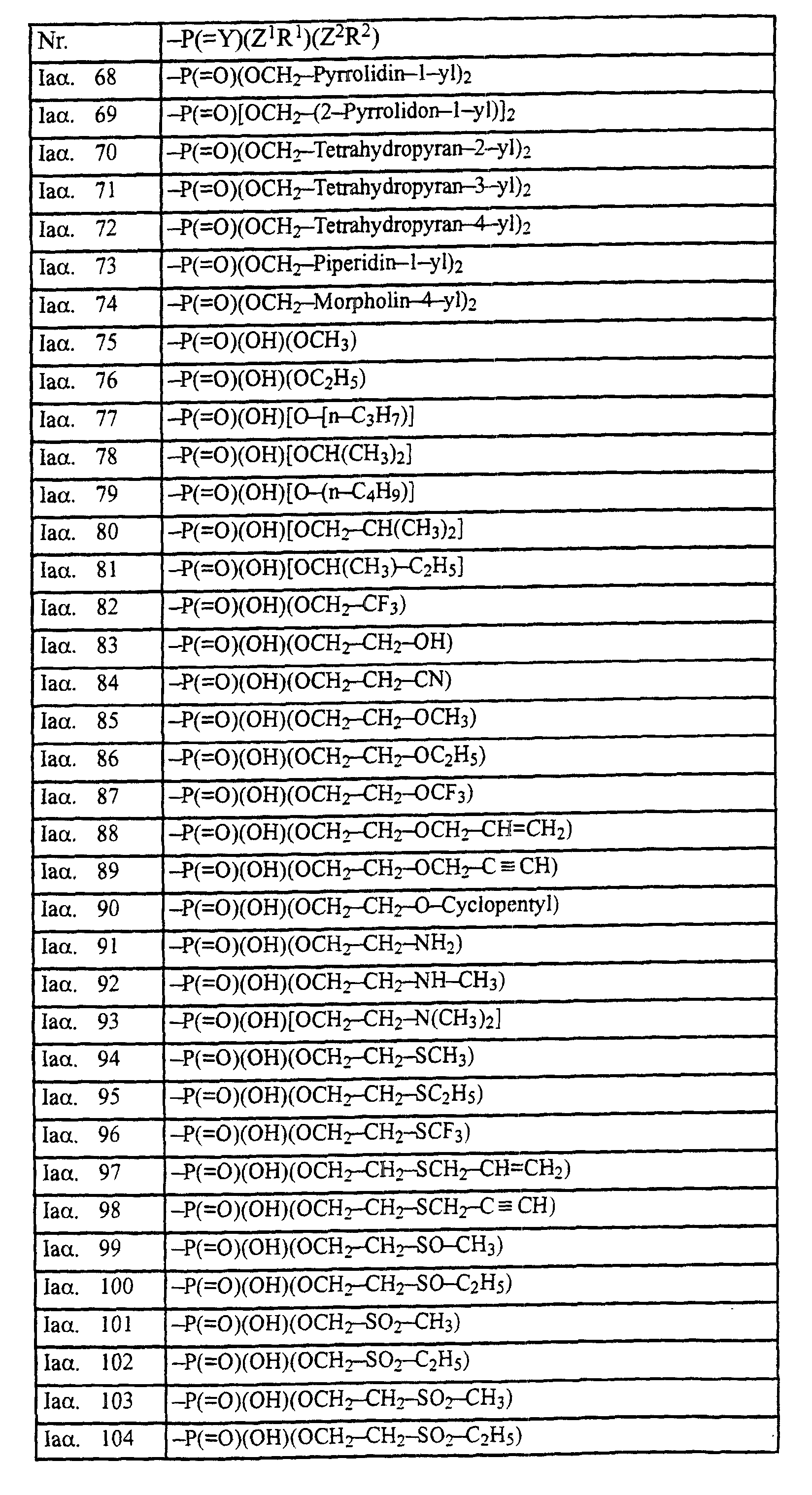

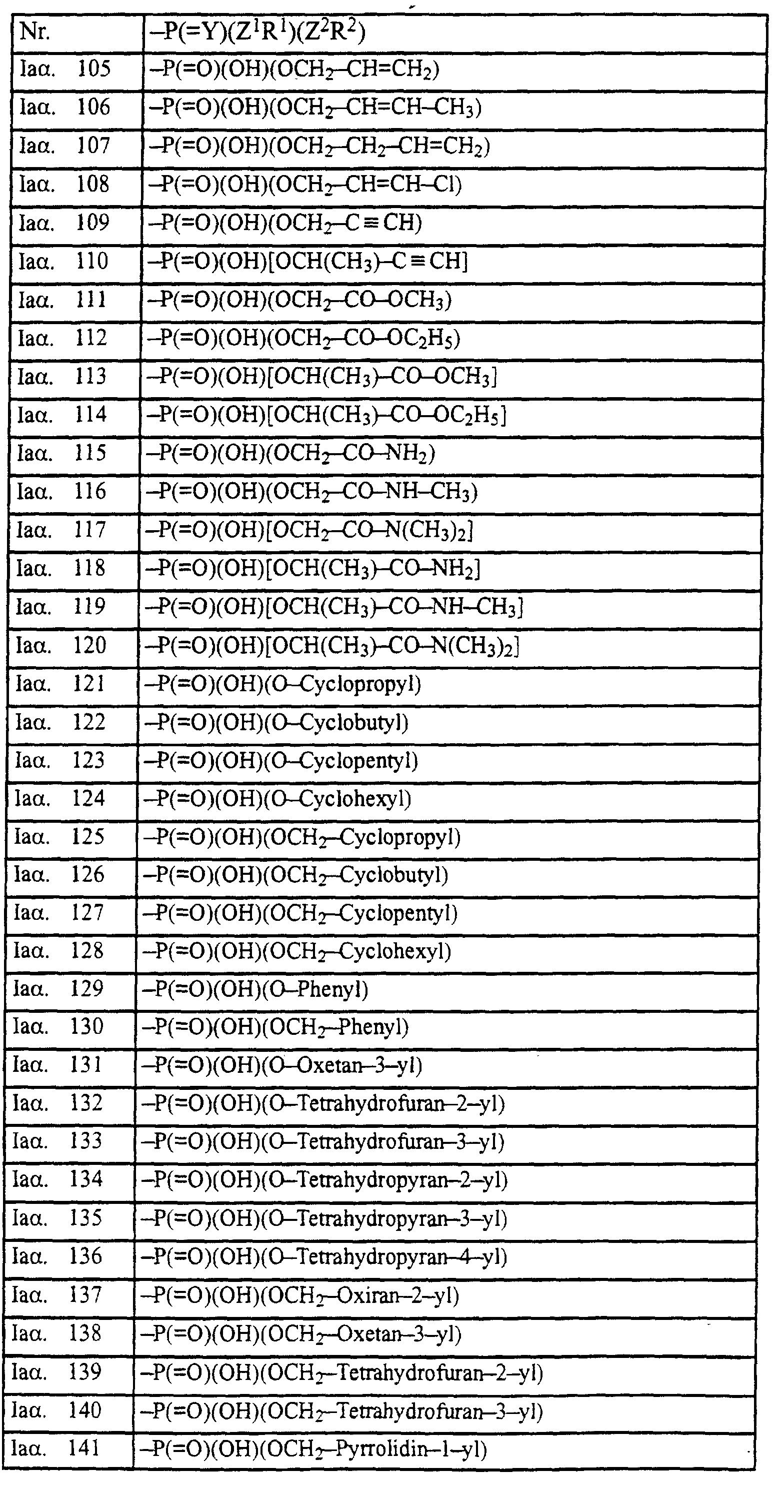

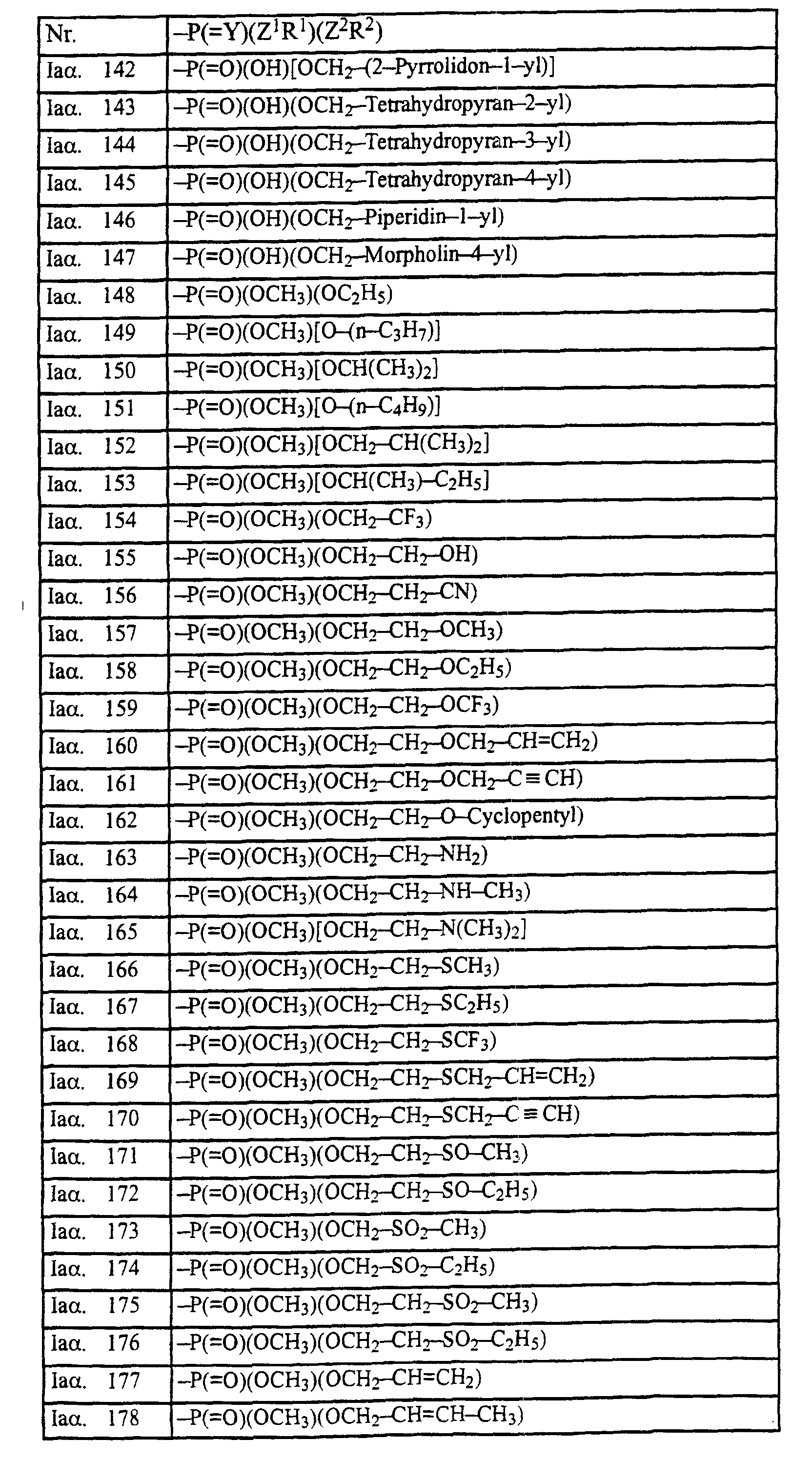

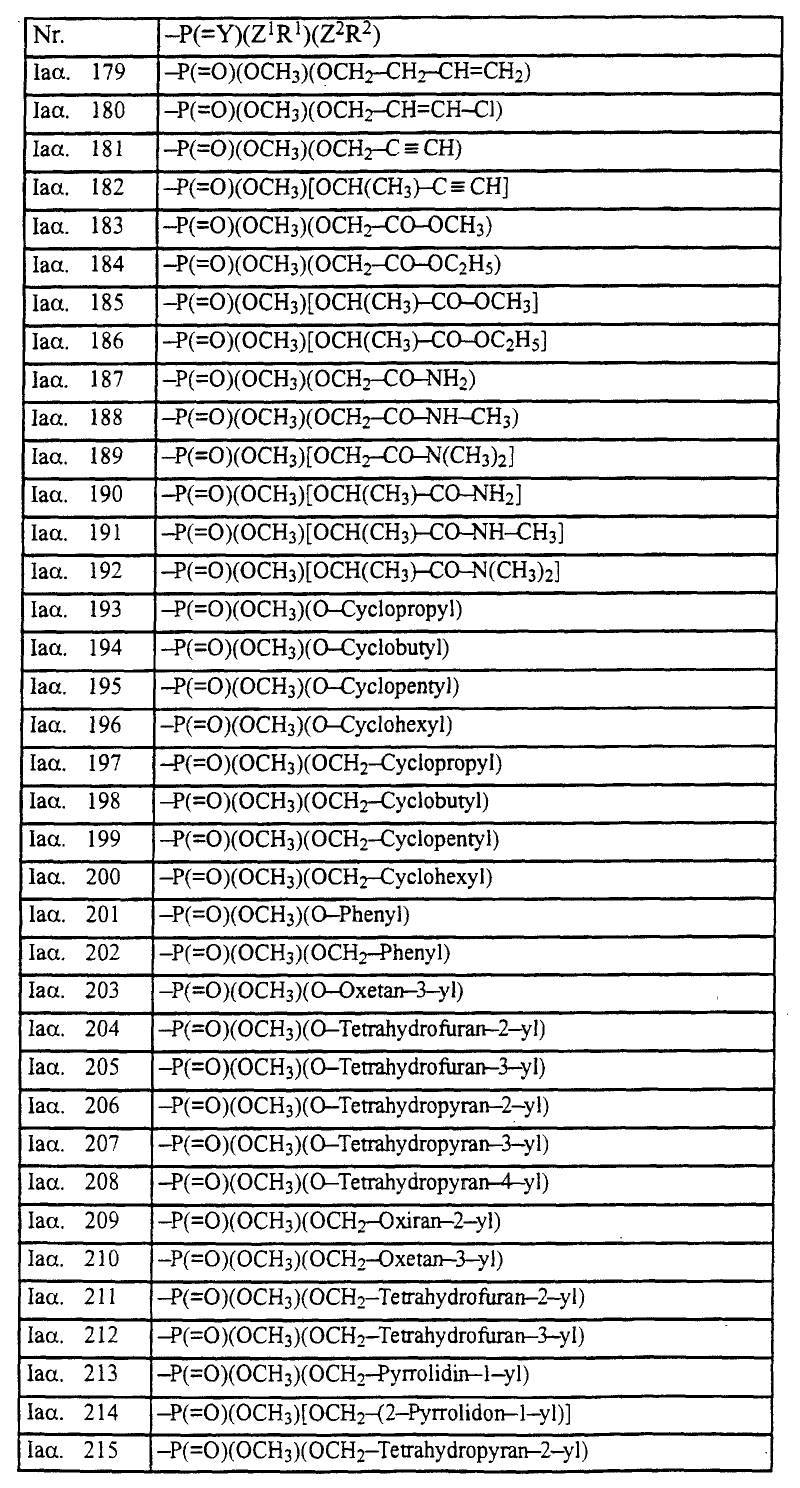

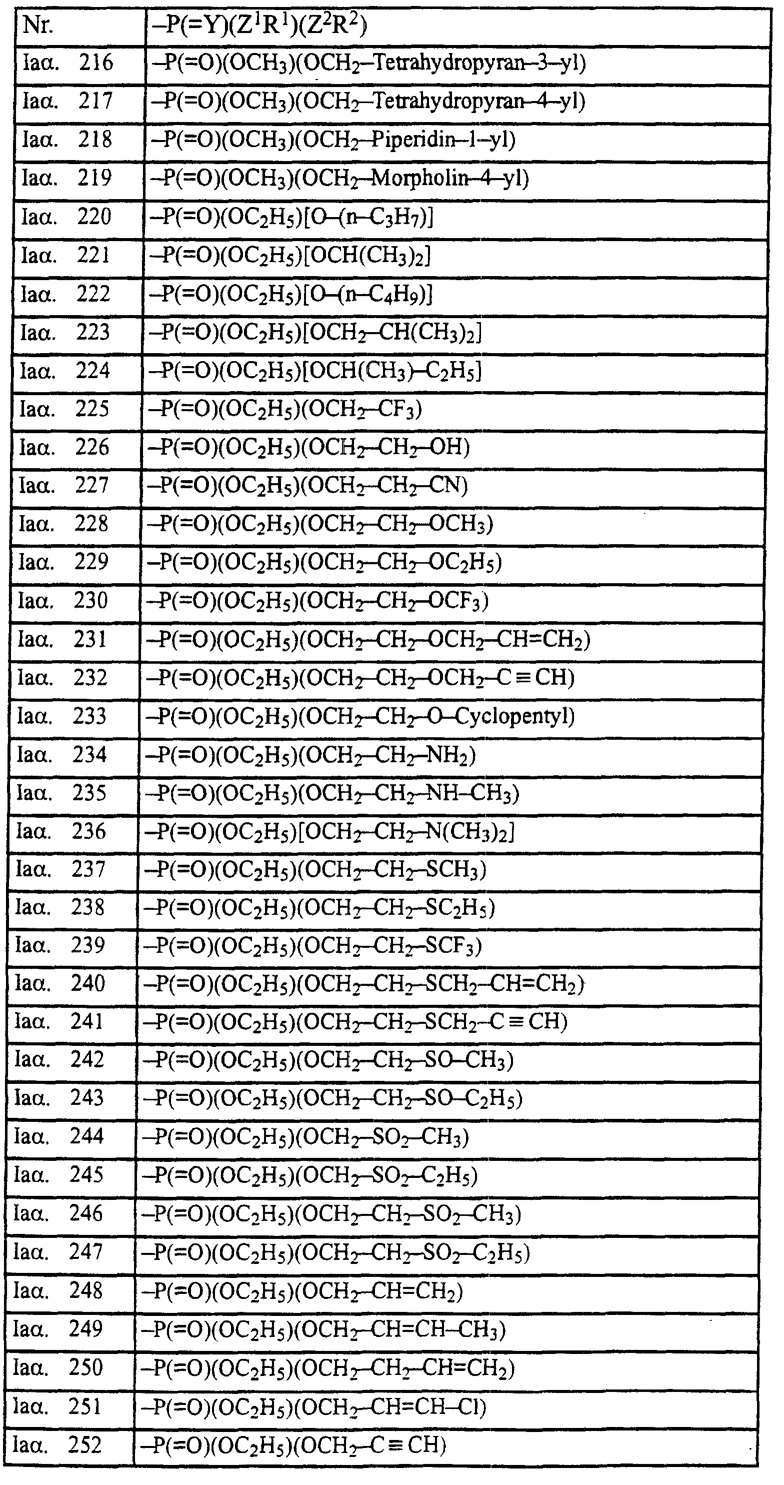

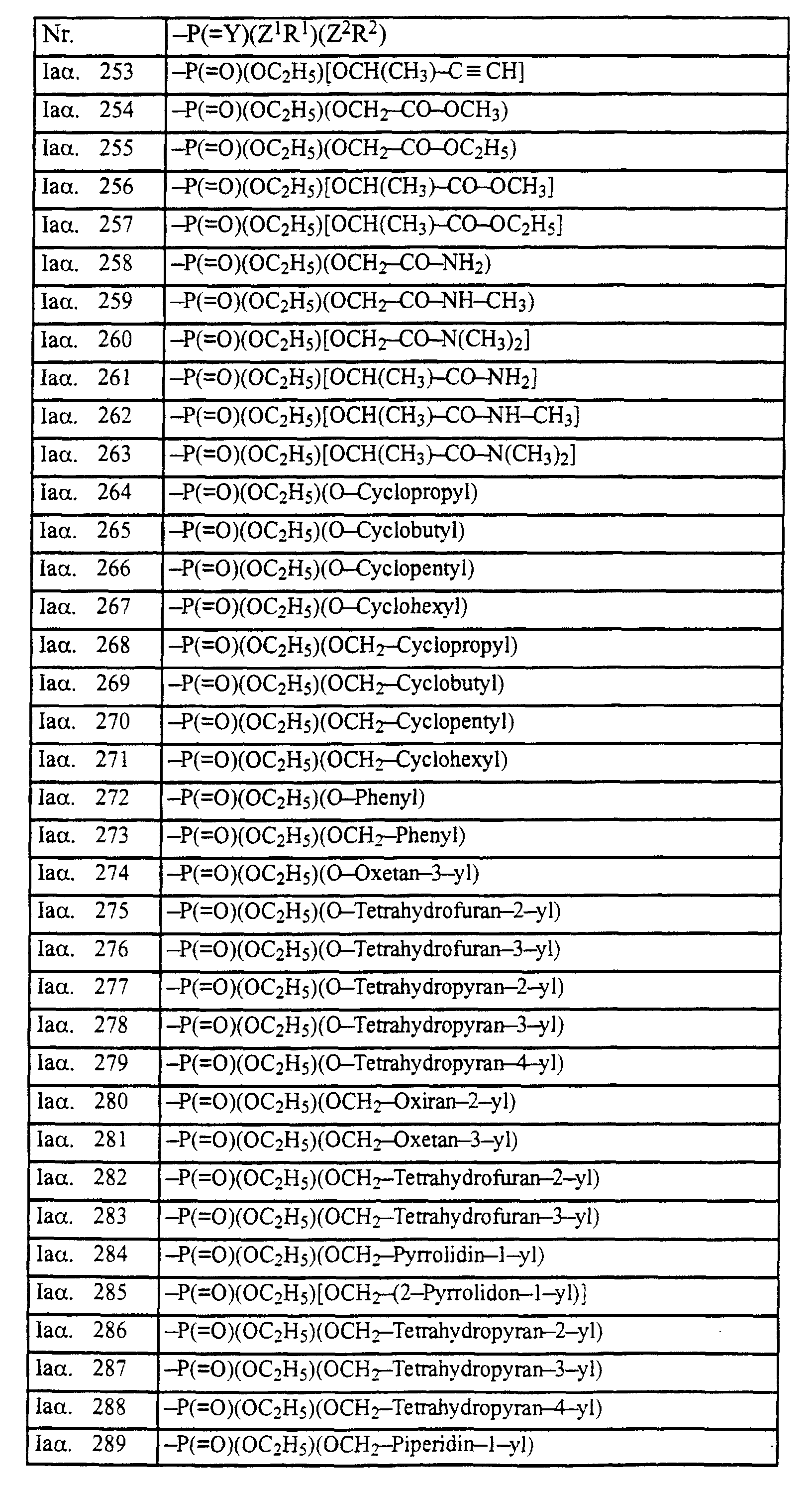

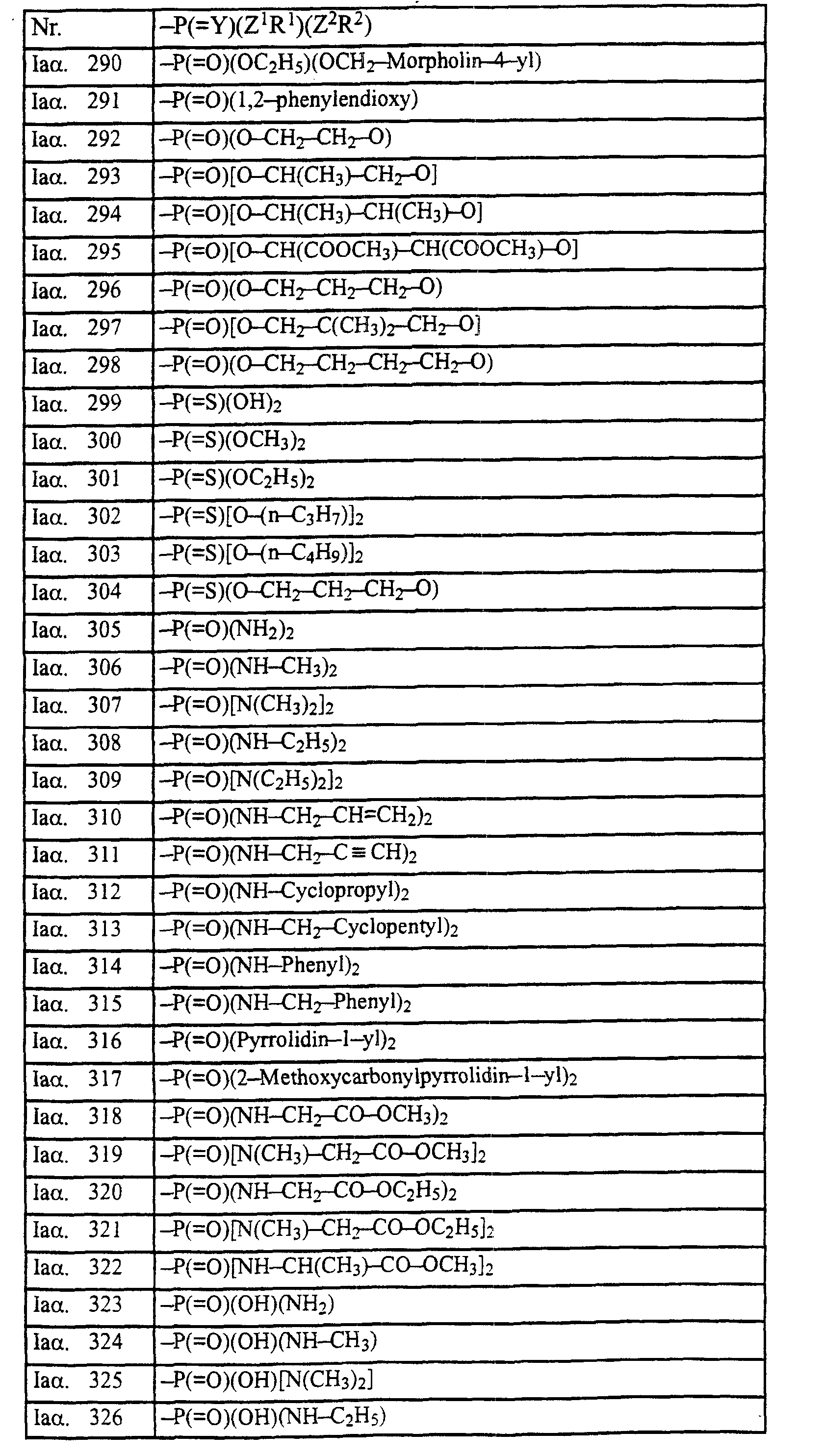

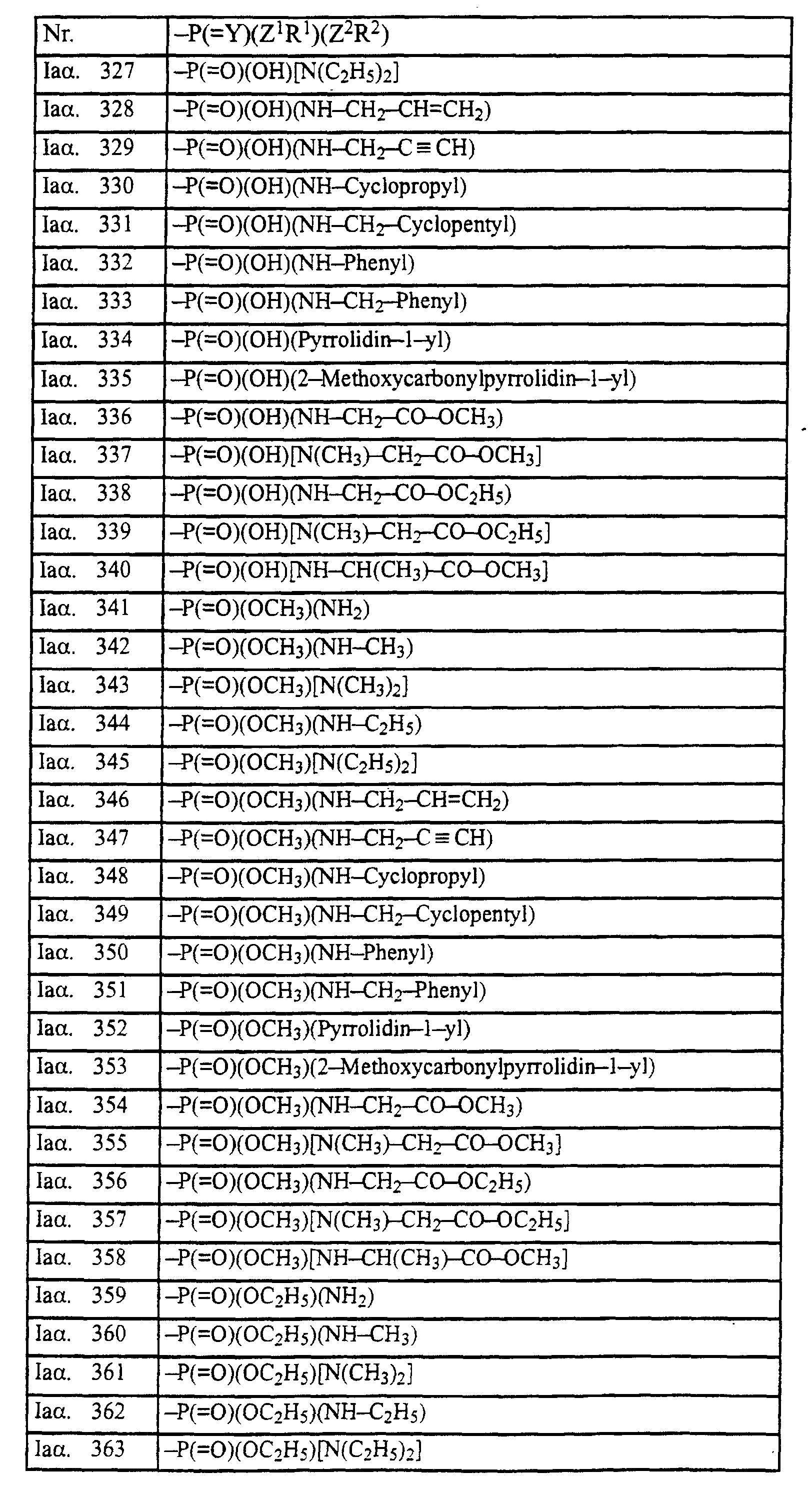

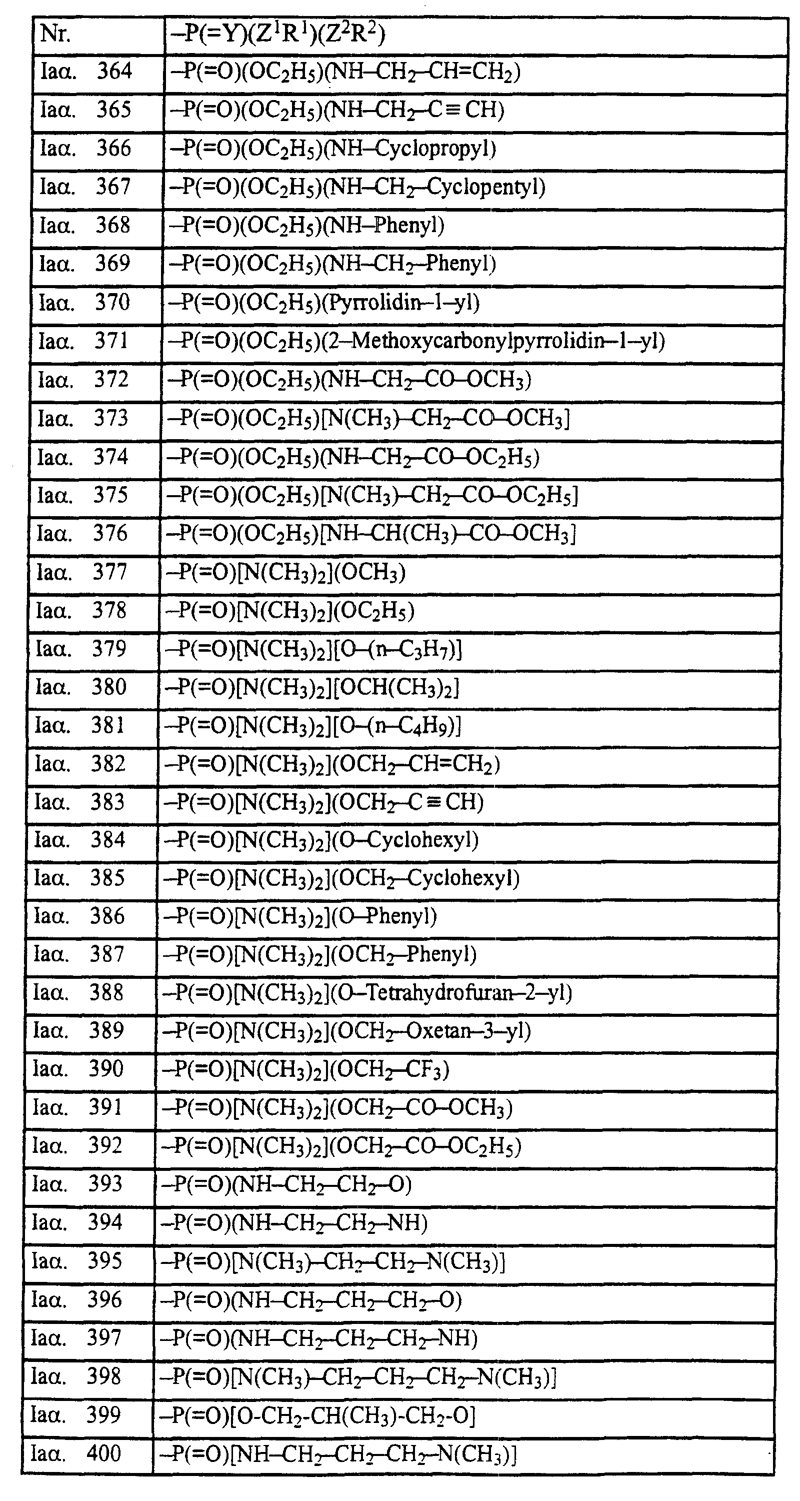

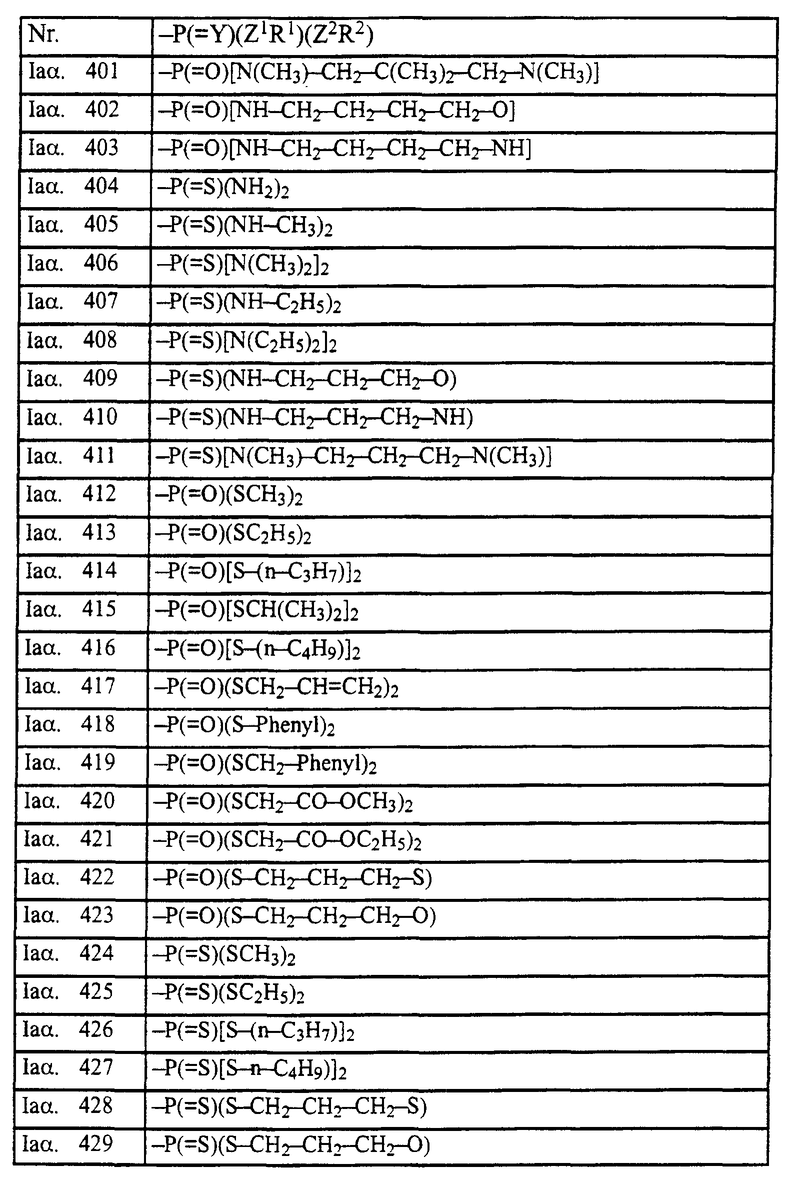

Des weiteren sind die folgenden substituierten 2-Phenylpyridine der Formeln Iaβ-Ioy besonders bevorzugt, insbesondere
- die Verbindungen Iaβ.1 - Iaβ.429, die sich von den entsprechenden Verbindungen Iaα.1 - Iaα.429 lediglich dadurch unterscheiden, daß R⁴ für Chlor steht: 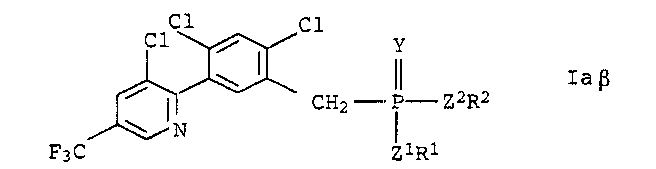
- die Verbindungen Iaγ.1 - Iaγ.429, die sich von den entsprechenden Verbindungen Iaα.1 - Iaα.429 lediglich dadurch unterscheiden, daß R⁴ für Fluor steht: 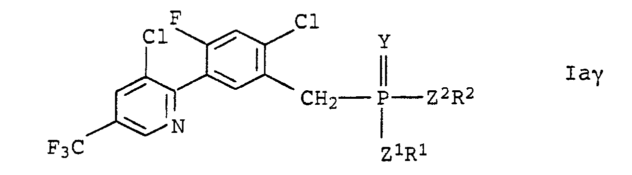
- die Verbindungen Ibα.1 - Ibα.429, die sich von den entsprechenden Verbindungen Iaα.1 - Iaα.429 lediglich dadurch unterscheiden, daß X für 1,2-Ethandiyl steht: 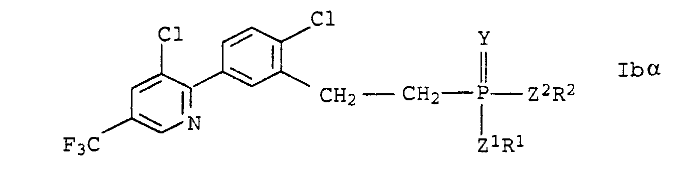
- die Verbindungen Ibβ.1 - Ibβ.429, die sich von den entsprechenden Verbindungen Iaα.1 - Iaα.429 lediglich dadurch unterscheiden, daß X für 1,2-Ethandiyl und R⁴ für Chlor stehen: 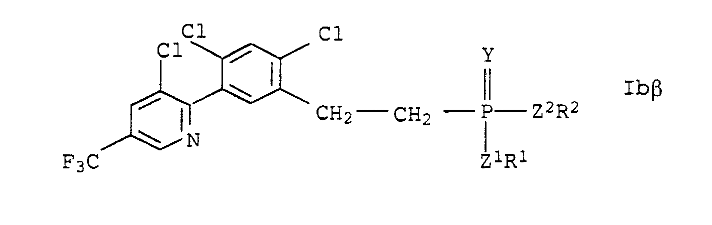
- die Verbindungen Ibγ.1 - Ibγ.429, die sich von den entsprechenden Verbindungen Iaα.1 - Iaα.429 lediglich dadurch unterscheiden, daß X für 1,2-Ethandiyl und R⁴ für Fluor stehen: 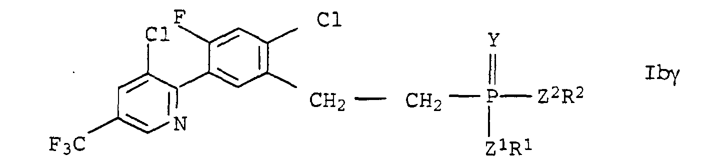
- die Verbindungen Icα.1 - Icα.429, die sich von den entsprechenden Verbindungen Iaα.1 - Iaα.429 lediglich dadurch unterscheiden, daß X für -CH₂-CH(Cl)- steht: 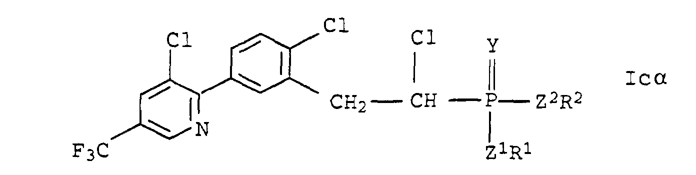
- die Verbindungen Icβ.1 - Icβ.429, die sich von den entsprechenden Verbindungen Iaα.1 - Iaα.429 lediglich dadurch unterscheiden, daß X für -CH₂-CH(Cl)- und R⁴ für Chlor stehen: 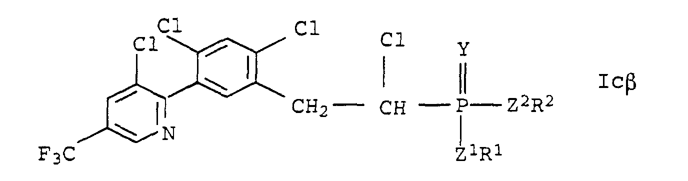
- die Verbindungen Icγ.1 - Icγ.429, die sich von den entsprechenden Verbindungen Iaα.1 - Iaα.429 lediglich dadurch unterscheiden, daß X für -CH₂-CH(Cl)- und R⁴ für Fluor stehen: 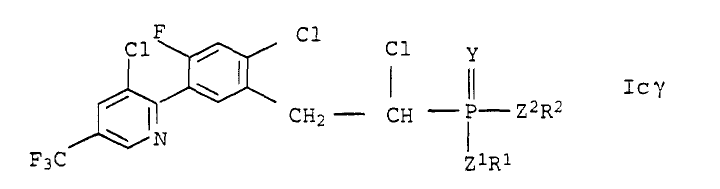
- die Verbindungen Idα.1 - Idα.429, die sich von den entsprechenden Verbindungen Iaα.1 - Iaα.429 lediglich dadurch unterscheiden, daß X für -CH₂-CH(Br)- steht: 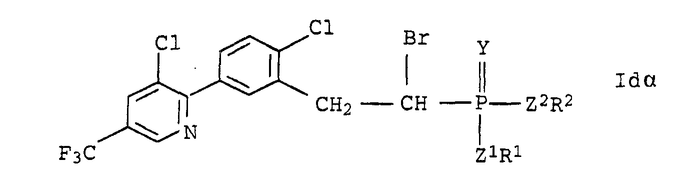
- die Verbindungen Idβ.1 - Idβ.429, die sich von den entsprechenden Verbindungen Iaα.1 - Iaα.429 lediglich dadurch unterscheiden, daß X für -CH₂-CH(Br)- und R⁴ für Chlor stehen: 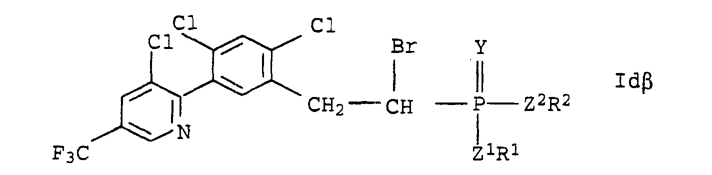
- die Verbindungen Idγ.1 - Idγ.429, die sich von den entsprechenden Verbindungen Iaα.1 - Iaα.429 lediglich dadurch unterscheiden, daß X für -CH₂-CH(Br)- und R⁴ für Fluor stehen: 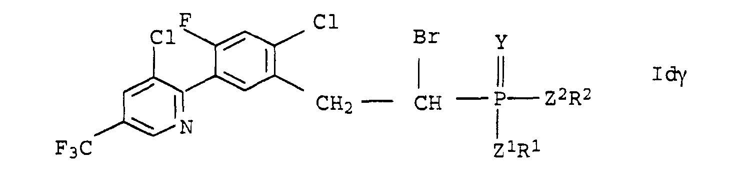
- die Verbindungen Ieα.1 - Ieα.429, die sich von den entsprechenden Verbindungen Iaα.1 - Iaα.429 lediglich dadurch unterscheiden, daß X für -CH₂-CH(CH₃)- steht: 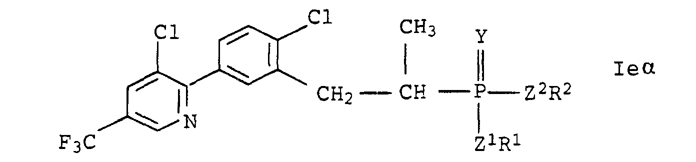
- die Verbindungen Ieβ.1 - Ieβ.429, die sich von den entsprechenden Verbindungen Iaα.1 - Iaα.429 lediglich dadurch unterscheiden, daß X für -CH₂-CH(CH₃)- und R⁴ für Chlor stehen: 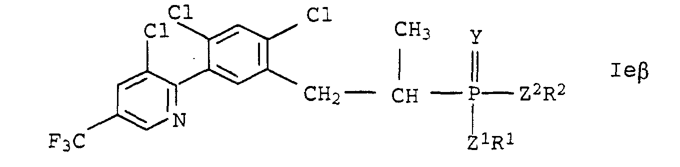
- die Verbindungen Ieγ.1 - Ieγ.429, die sich von den entsprechenden Verbindungen Iaα.1 - Iaα.429 lediglich dadurch unterscheiden, daß X für -CH₂-CH(CH₃)- und R⁴ für Fluor stehen: 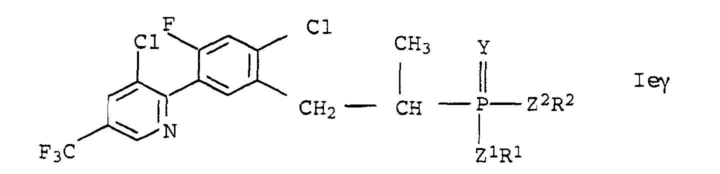
- die Verbindungen Ifα.1 - Ifα.429, die sich von den entsprechenden Verbindungen Iaα.1 - Iaα.429 lediglich dadurch unterscheiden, daß X für -CH₂-CH(CN)- steht: 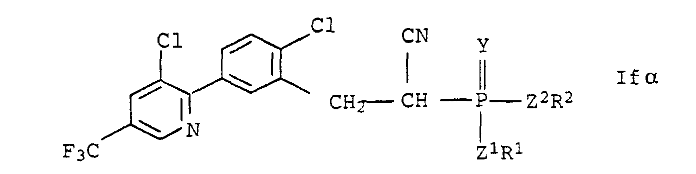
- die Verbindungen Ifβ.1 - Ifβ.429, die sich von den entsprechenden Verbindungen Iaα.1 - Iaα.429 lediglich dadurch unterscheiden, daß X für -CH₂-CH(CN)- und R⁴ für Chlor stehen: 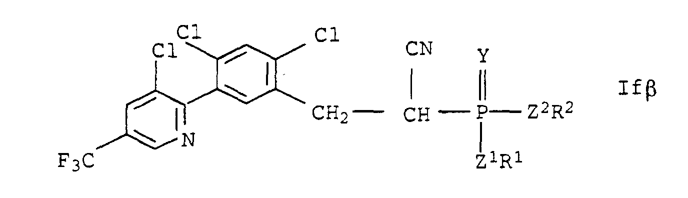
- die Verbindungen Ifγ.1 - Ifγ.429, die sich von den entsprechenden Verbindungen Iaα.1 - Iaα.429 lediglich dadurch unterscheiden, daß X für -CH₂-CH(CN)- und R⁴ für Fluor stehen: 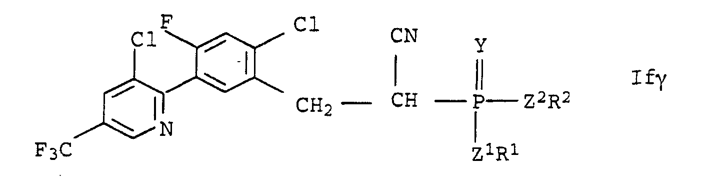
- die Verbindungen Igα.1 - Igα.429, die sich von den entsprechenden Verbindungen Iaα.1 - Iaα.429 lediglich dadurch unterscheiden, daß X für -CH₂-CH(COOCH₃) - steht: 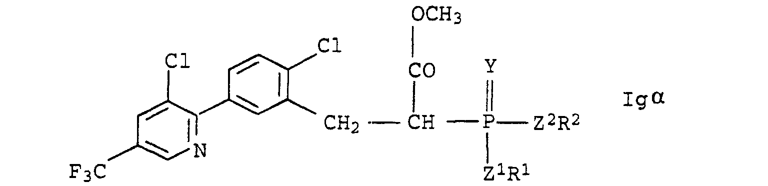
- die Verbindungen Igβ.1 - Igβ.429, die sich von den entsprecher den Verbindungen Iaα.1 - Iaα.429 lediglich dadurch unterscheiden, daß X für -CH₂-CH(COOCH₃)- und R⁴ für Chlor stehen: 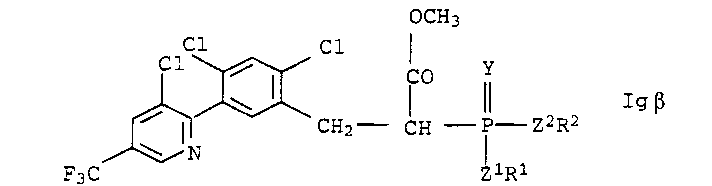
- die Verbindungen Igγ.1 - Igγ.429, die sich von den entsprechenden Verbindungen Iaα.1 - Iaα.429 lediglich dadurch unterscheiden, daß X für -CH₂-CH(COOCH₃)- und R⁴ für Fluor stehen: 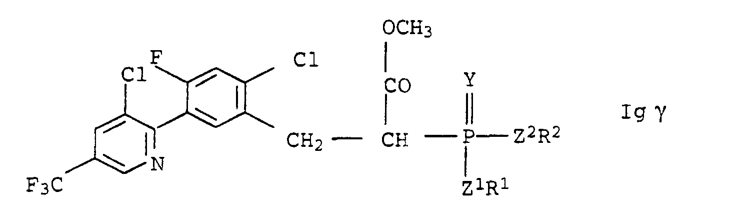
- die Verbindungen Ihα.1 - Ihα.429, die sich von den entsprechenden Verbindungen Iaα.1 - Iaα.429 lediglich dadurch unterscheiden, daß X für Ethen-1,2-diyl steht: 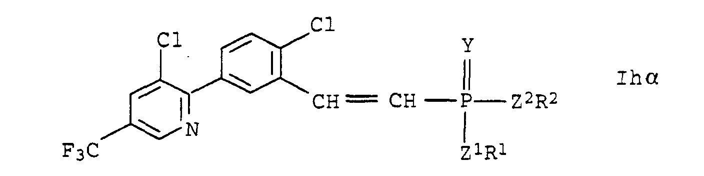
- die Verbindungen Ihβ.1 - Ihβ.429, die sich von den entsprechenden Verbindungen Iaα.1 - Iaα.429 lediglich dadurch unterscheiden, daß X für Ethen-1,2-diyl und R⁴ für Chlor stehen: 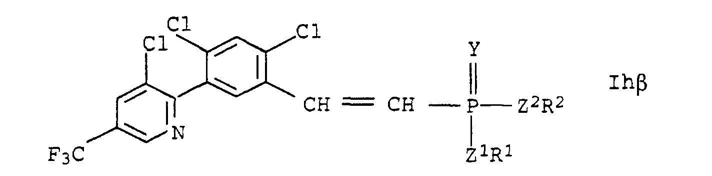
- die Verbindungen Ihγ.1 - Ihγ.429, die sich von den entsprechenden Verbindungen Iaα.1 - Iaα.429 lediglich dadurch unterscheiden, daß X für Ethen-1,2-diyl und R⁴ für Fluor stehen: 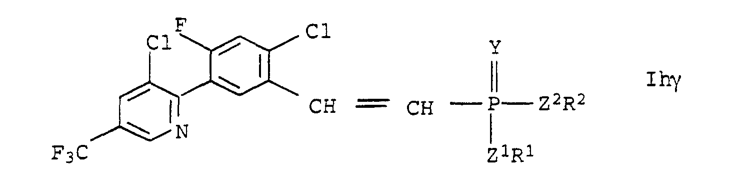
- die Verbindungen Iiα.1 - Iiα.429, die sich von den entsprechenden Verbindungen Iaα.1 - Iaα.429 lediglich dadurch unterscheiden, daß X für -CH=C(Cl)- steht: 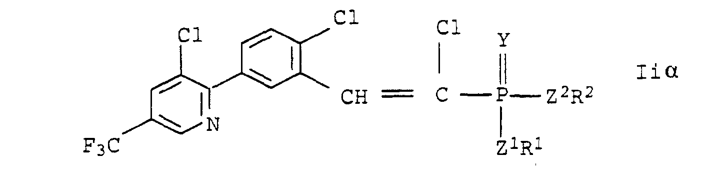
- die Verbindungen Iiβ.1 - Iiβ.429, die sich von den entsprechenden Verbindungen Iaα.1 - Iaα.429 lediglich dadurch unterscheiden, daß X für -CH=C(Cl)- und R⁴ für Chlor stehen: 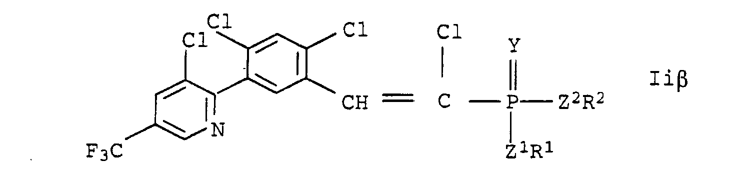
- die Verbindungen Iiγ.1 - Iiγ.429, die sich von den entsprechenden Verbindungen Iaα.1 - Iaα.429 lediglich dadurch unterscheiden, daß X für -CH=C(Cl)- und R⁴ für Fluor stehen: 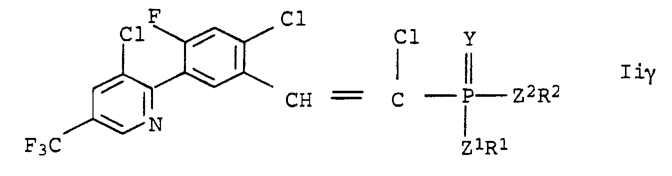
- die Verbindungen Ijα.1 - Ijα.429, die sich von den entsprechenden Verbindungen Iaα.1 - Iaα.429 lediglich dadurch unterscheiden, daß X für -CH=C(Br)- steht: 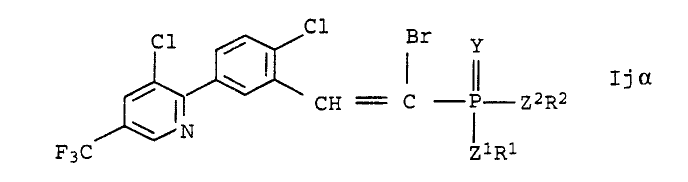
- die Verbindungen Ijβ.1 - Ijβ.429, die sich von den entsprechenden Verbindungen Iaα.1 - Iaα.429 lediglich dadurch unterscheiden, daß X für -CH=C(Br)- und R⁴ für Chlor stehen: 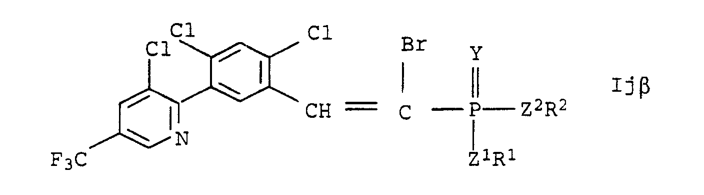
- die Verbindungen Ijγ.1 - Ijγ.429, die sich von den entsprechenden Verbindungen Iaα.1 - Iaα.429 lediglich dadurch unterscheiden, daß X für -CH=C(Br)- und R⁴ für Fluor stehen: 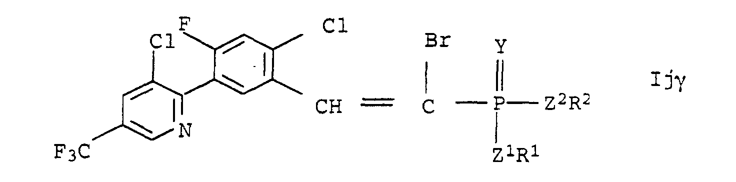
- die Verbindungen Ikα.1 - Ikα.429, die sich von den entsprechenden Verbindungen Iaα.1 - Iaα.429 lediglich dadurch unterscheiden, daß X für -CH=C(CH₃)- steht: 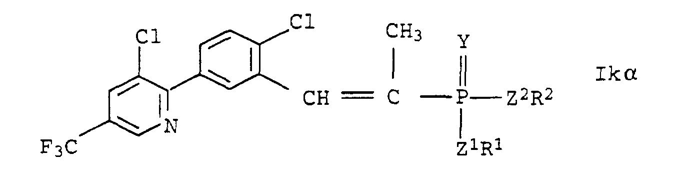
- die Verbindungen Ikβ.1 - Ikβ.429, die sich von den entsprechenden Verbindungen Iaα.1 - Iaα.429 lediglich dadurch unterscheiden, daß X für -CH=C(CH₃)- und R⁴ für Chlor stehen: 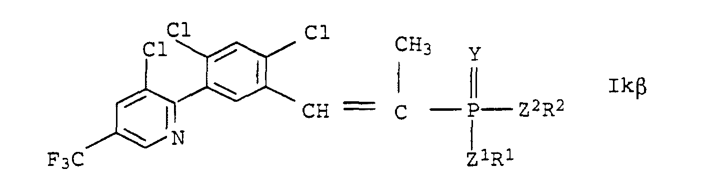
- die Verbindungen Ikγ.1 - Ikγ.429, die sich von den entsprechenden Verbindungen Iaα.1 - Iaα.429 lediglich dadurch unterscheiden, daß X für -CH=C(CH₃)- und R⁴ für Fluor stehen: 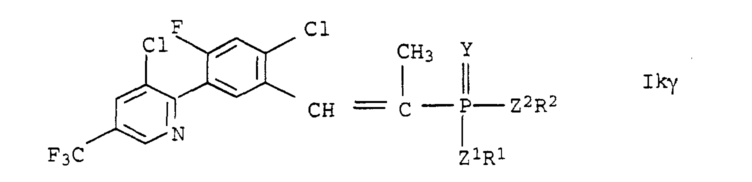
- die Verbindungen Ilα.1 - Ilα.429, die sich von den entsprechenden Verbindungen Iaα.1 - Iaα.429 lediglich dadurch unterscheiden, daß X für -CH=C(CN)- steht: 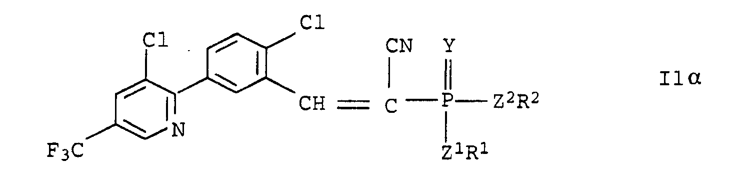
- die Verbindungen Ilβ.1 - Ilβ.429, die sich von den entsprechenden Verbindungen Iaα.1 - Iaα.429 lediglich dadurch unterscheiden, daß X für -CH=C(CN)- und R⁴ für Chlor stehen: 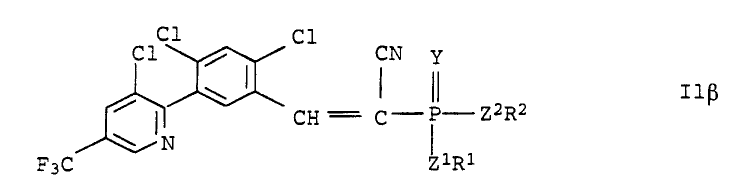
- die Verbindungen Ilγ.1 - Ilγ.429, die sich von den entsprechenden Verbindungen Iaα.1 - Iaα.429 lediglich dadurch unterscheiden, daß X für -CH=C(CN)- und R⁴ für Fluor stehen: 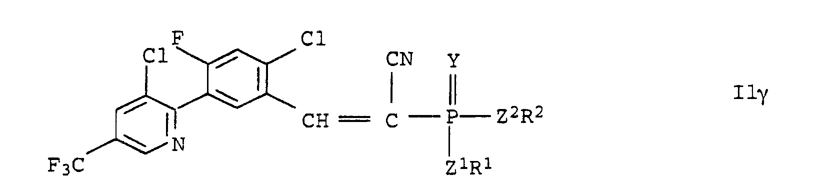
- die Verbindungen Imα.1 - Imα.429, die sich von den entsprechenden Verbindungen Iaα.1 - Iaα.429 lediglich dadurch unterscheiden, daß X für -CH=C(COOCH₃)- steht: 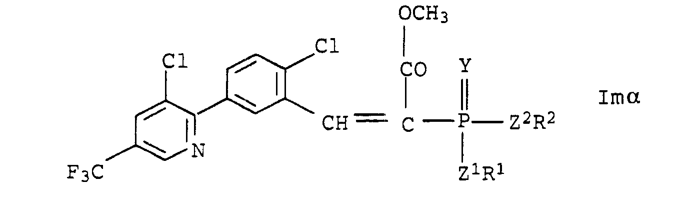
- die Verbindungen Imβ.1 - Imβ.429, die sich von den entsprechenden Verbindungen Iaα.1 - Iaα.429 lediglich dadurch unterscheiden, daß X für -CH=C(COOCH₃)- und R⁴ für Chlor stehen: 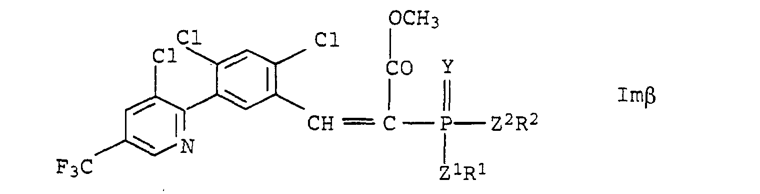
- die Verbindungen Imγ.1 - Imγ.429, die sich von den entsprechenden Verbindungen Iaα.1 - Iaα.429 lediglich dadurch unterscheiden, daß X für -CH=C(COOCH₃)- und R⁴ für Fluor stehen: 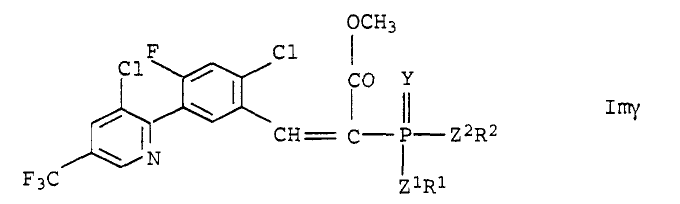
- die Verbindungen Inα.1 - Inα.429, die sich von den entsprechenden Verbindungen Iaα.1 - Iaα.429 lediglich dadurch unterscheiden, daß X für -CH₂-OCH₂- steht: 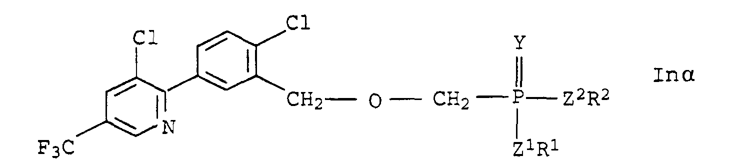
- die Verbindungen Inβ.1 - Inβ.429, die sich von den entsprechenden Verbindungen Iaα.1 - Iaα.429 lediglich dadurch unterscheiden, daß X für -CH₂-OCH₂- und R⁴ für Chlor stehen: 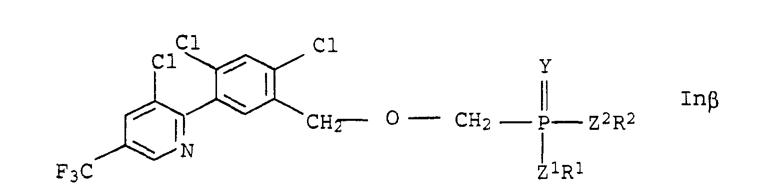
- die Verbindungen Inγ.1 - Inγ.429, die sich von den entsprechenden Verbindungen Iaα.1 - Iaα.429 lediglich dadurch unterscheiden, daß X für -CH₂-OCH₂- und R⁴ für Fluor stehen: 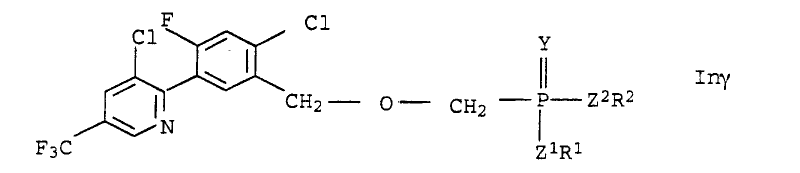
- die Verbindungen Ioα.1 - Ioα.429, die sich von den entsprechenden Verbindungen Iaα.1 - Iaα.429 lediglich dadurch unterscheiden, daß X für -OCH₂- steht: 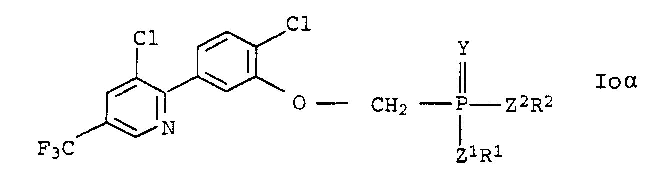
- die Verbindungen Ioβ.1 - Ioβ.429, die sich von den entsprechenden Verbindungen Iaα.1 - Iaα.429 lediglich dadurch unterscheiden, daß X für -OCH₂- und R⁴ für Chlor stehen: 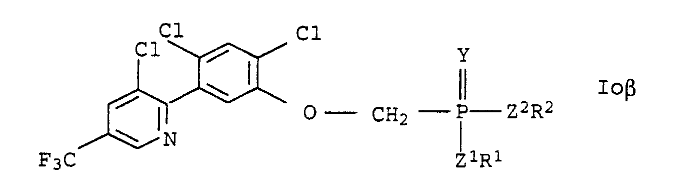
- die Verbindungen Ioγ.1 - Ioγ.429, die sich von den entsprechenden Verbindungen Iaα.1 - Iaα.429 lediglich dadurch unterscheiden, daß X für -OCH₂- und R⁴ für Fluor stehen:

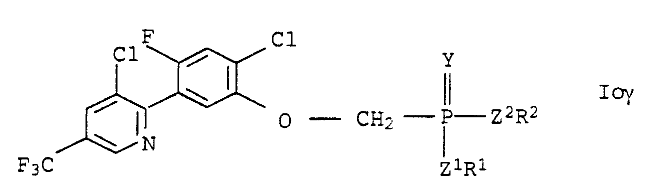

Die substituierten 2-Phenylpyridine der Formel I sind auf verschiedene Weise erhältlich, insbesondere nach einem der folgenden Verfahren:
A) Verknüpfung der Phosphonylgruppe mit dem Phenylpyridin-Teil
   A.1) durch Diazotierung von 3-Pyridylanilinen II und Umsetzung der hierbei erhaltenen Diazoniumsalze mit Vinyl- oder Alkinylphosphonsäurederivaten III nach der Methode von Meerwein {vgl. z.B. Org. Reactions 11, chapter 3, pp. 189-260 (1960) und Kogyo Kagaku Zasshi 67(12), 2093-2095 (1964)}: 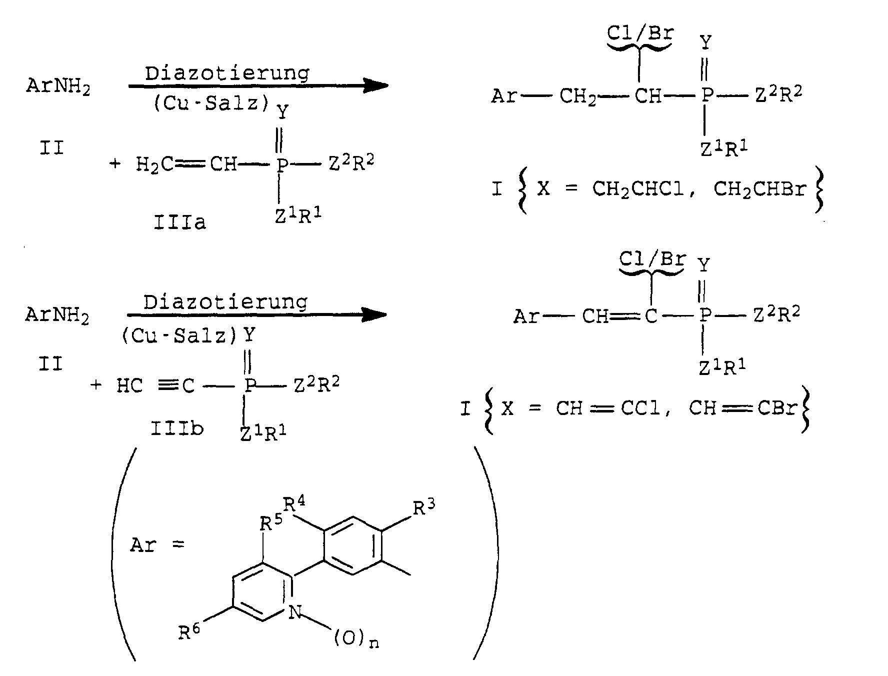
      Bei dieser Methode überführt man das 3-Pyridylanilin der Formel II, das entweder literaturbekannt oder in Analogie zu literaturbekannten Anilinen darstellbar ist, zunächst auf an sich bekannte Weise in das entsprechende Diazonium-Kation, welches dann mit IIIa oder IIIb in Gegenwart eines Kupfersalzes abreagiert.
      Das Diazoniumsalz erhält man im allgemeinen durch Umsetzung des 3-Pyridiylanilins II in einer wäßrigen Säurelösung, z.B. in wäßriger Flußsäure, Salzsäure, Bromwasserstoffsäure, Schwefelsäure oder Tetrafluorborsäure, mit einem Nitrit wie Natriumnitrit und Kaliumnitrit. Das Nitrit wird dabei normalerweise ca. äquimolar oder im Überschuß bis etwa zur fünffachen molaren Menge, bezogen auf die Menge an 3-Pyridylanilin II, eingesetzt.
      Die so erhaltene Lösung des Diazoniumsalzes oder das hieraus isolierte Diazoniumsalz wird dann in Gegenwart eines Kupfersalzes wie Kupfer(I)bromid, Kupfer(II)bromid, Kupfer(I)chlorid und Kupfer(II)chlorid mit einer Lösung oder Suspension des Vinyl- oder Alkinylphosphonsäurederivats IIIa/IIIb zur Reaktion gebracht.
      Geeignete Lösungsmittel sind z. B. Wasser, Acetonitril, Ketone wie Aceton, Diethylketon und Methylethylketon, Ether wie Diethylether und Tetrahydrofuran, ferner Alkohole wie Methanol oder Ethanol.
      Üblicherweise verwendet man die Vinyl- oder Alkinylphosphonsäurederivate IIIa/IIIb sowie das Kupferhalogenid in ca. äquimolaren Mengen oder im Überschuß, bis etwa zur dreißigfachen molaren Menge, bezogen auf das 3-Pyridylanilin II. Das Kupferhalogenid kann aber auch in geringerer bis katalytischer Menge eingesetzt werden.
      Diazotierung und Umsetzung des Diazoniumsalzes mit IIIa/ IIIb erfolgen in der Regel bei einer Temperatur von (-100) bis 50°C, vorzugsweise (-20) bis +30°C.
      Eine Verfahrensvariante besteht darin, zu einer Lösung oder Suspension des 3-Pyridylanilins II, des Vinyl- oder Alkinylphosphonsäurederivats IIIa/IIIb und des Kupferhalogenids in einem wasserfreien System, z.B. in Eisessig/ Chlorwasserstoff, absolutem Methanol oder Ethanol, in einem Ether wie Tetrahydrofuran und Dioxan oder in Acetonitril oder Aceton, einem Salpetrigsäureester wie tert.-Butylnitrit und Isopentylnitrit zuzugeben. Bezüglich der Reaktionstemperatur und der Mengenverhältnisse der Reaktanden gelten dabei die oben gemachten Angaben.
   A.2) durch Heck-Reaktion (siehe z.B. A. Burini, S. Cacchi, P. Pace, B.R. Pietroni, Synlett 1995, 677): 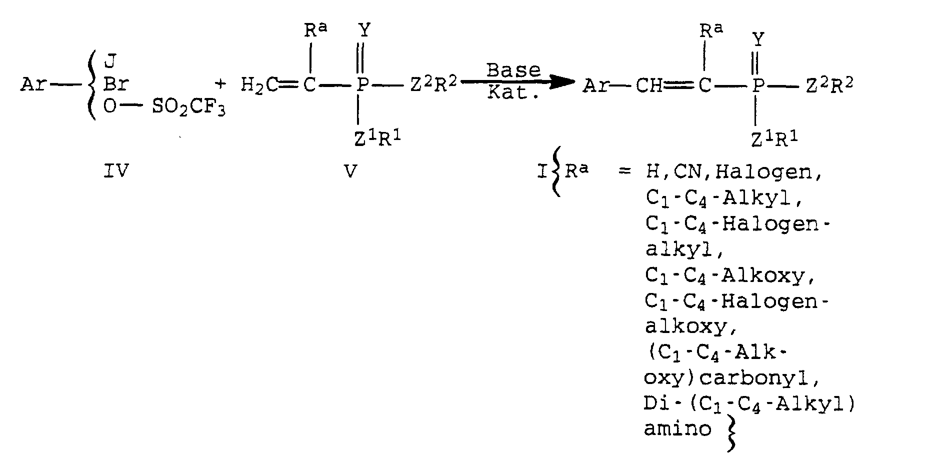
      Bezüglich der Definition von Ar siehe Verfahren A.1); Kat. steht für einem Übergangsmetallkatalysator, vorzugsweise einer Palladium(II)verbindung wie Palladiumacetat.
      In der Regel erfolgt die Reaktionsführung in einem inerten organischen Lösungsmittel, insbesondere in Dimethylformamid oder Tetrahydrofuran.
      Geeignete Basen sind z.B. Carbonate wie Kaliumcarbonat, Acetate wie Natriumacetat und tertiäre Amine wie Triethylamin.
      Die Reaktionsführung erfolgt allgemein bei Temperaturen von 0°C bis zur Siedetemperatur des Reaktionsgemisches, vorzugsweise bei 50 bis 100°C.
   A.3) durch Knoevenagel-Kondensation von aromatischen Aldehyden VIa oder Ketonen VIb mit Phosphonsäurederivaten VII: 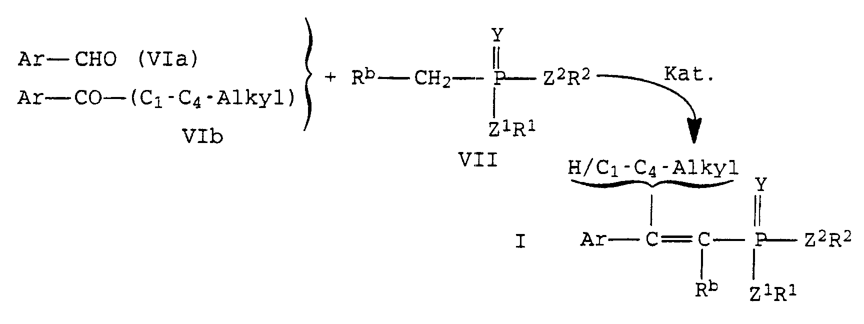
      Bezüglich der Definition von Ar siehe Verfahren A.1);
      - R^{b}: steht für Cyano, C₁-C₄-Alkoxy oder (C₁-C₄-Alkoxy)carbonyl;
      - Kat.: steht für einen Katalysator, z.B. für Piperidin/ Essigsäure, Natriummethanolat, Natriumethanolat, Titantetrachlorid/N-Methylmorpholin oder für Chlorotri(isopropoxy)-titan/Triethylamin.

      Üblicherweise arbeitet man in einem inerten organischen Lösungsmittel, z.B. in einem aromatischen Kohlenwasserstoff wie Toluol, einem niederen Alkohol wie Methanol und Ethanol oder in einem chlorierten Kohlenwasserstoff wie Dichlormethan.
      Die Reaktionstemperatur liegt allgemein bei 0°C bis zur Siedetemperatur des Reaktionsgemisches.
      Das bei der Reaktion freiwerdende Wasser kann gewünschtenfalls mittels azeotroper Destillation entfernt werden. Man arbeitet dann vorzugsweise in einem aromatischen Kohlenwasserstoff wie Benzol, Toluol und den Xylolen bei der jeweiligen Siedetemperatur des Reaktionsgemisches {siehe z.B. S. Abdallah-El Ayoubi, F. Texier-Boullet, J. Hamelin, Synthesis 1994, 258; D. Danion, R. Carrie, Tetrahdron Lett. 1968, 4537; F. Texier-Boullet, A. Foucaud, Tetrahedron Lett. 21 (1980) 2161; S. Patai, A. Schwartz, J. Org. Chem. 25 (1960), 1232; J.M. McIntosh, R.A. Sieler, Can. J. Chem. 56 (1978) 226; M.T. Reetz, R. Peter, M. v. Itzstein, Chem. Ber. 120 (1987) 121; K.A. Petrov, V.A. Chauzov, S.V. Agafonov, N.V. Pazhitnova, J. Gen. Chem. USSR 50 (1980) 1225}. Die aromatischen Aldehyde VIa oder Ketone VIb sind entweder bekannt oder auf an sich bekannte Weise herstellbar.
   A.4) durch Wittig-Horner-Olefinierung {vgl. z.B. B.M.G.T. Lowen, M.R. Almond, J. Org. Chem 59 (1994) 4548; P. Teulade, P. Savignac, E.E. Aboujaoude, S. Liétge, N. Collignon, J. Organomet. Chem. 304 (1986) 283; G.M. Parratt, J. Chem. Soc., Perkin Trans. 1 (1986), 1417; B. Costisella, I. Keitel H. Gross, Tetrahedron 37 (1981) 1227}: 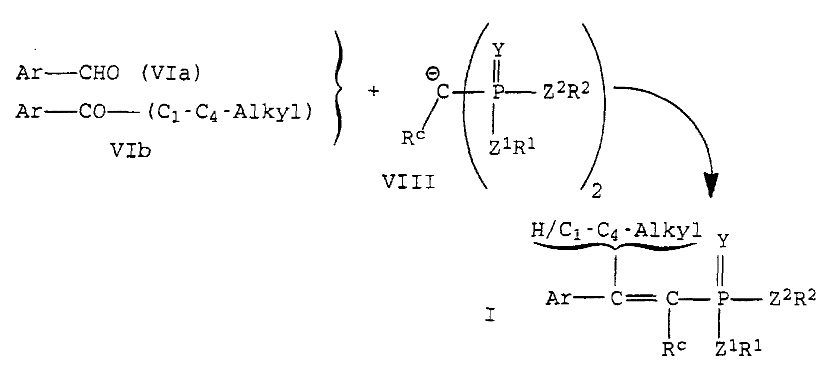 Bezüglich der Definition von Ar siehe Verfahren A.1);
      - R^{c}: steht für Wasserstoff, Halogen, C₁-C₄-Alkyl oder Di-(C₁-C₄-alkyl)amino.

      Üblicherweise arbeitet man in einem inerten organischen Lösungsmittel, z.B. in einem aromatischen Kohlenwasserstoff wie Toluol, einem halogenierten Kohlenwasserstoff wie Dichlormethan oder einem Ether wie Diethylether, Tetrahydrofuran, Dioxan und 1,2-Dimethoxyethan.
      Das Anion VIII ist beispielsweise durch Deprotonierung des entsprechenden Methandiphosphonsäurederivats mit einer starken Base wie Lithiumdiisopropylamid, Natriumhydrid und n-Butyllithium erhältlich.
      Im allgemeinen erfolgt die Reaktionsführung bei (-100)°C bis zur Siedetemperatur des Reaktionsgemisches, vorzugsweise bei (-78) bis + 30°C.
   A.5) durch Wittig-Olefinierung {siehe hierzu z.B. GB-A 12 43 214}: 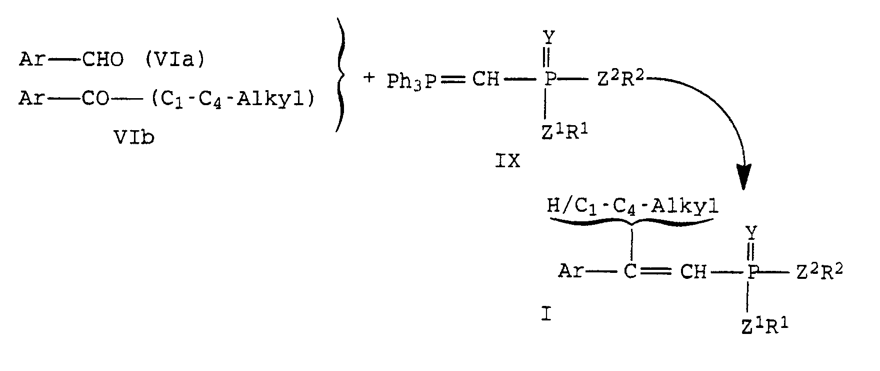
   Bezüglich der Definition von Ar siehe Verfahren A.1);
      - Ph: steht für die Phenylgruppe.

      Üblicherweise arbeitet man in einem inerten organischen Lösungsmittel, z.B. in einem aromatischen Kohlenwasserstoff wie Toluol, einem halogenierten Kohlenwasserstoff wie Dichlormethan oder einem Ether wie Diethylether, Tetrahydrofuran, Dioxan und 1,2-Dimethoxyethan.
      Im allgemeinen erfolgt die Reaktionsführung bei (-100)°C bis zur Siedetemperatur des Reaktionsgemisches, vorzugsweise bei 20 bis 60°C.
   A.6) durch Peterson-Olefinierung {siehe hierzu z.B. O.I. Kolodyazhnyi, D.B. Golokhov, J. Gen. Chem. USSR 57 (1987) 2353; F.A. Carey, A.S. Court, J. Org. Chem. 37 (1972) 939}: 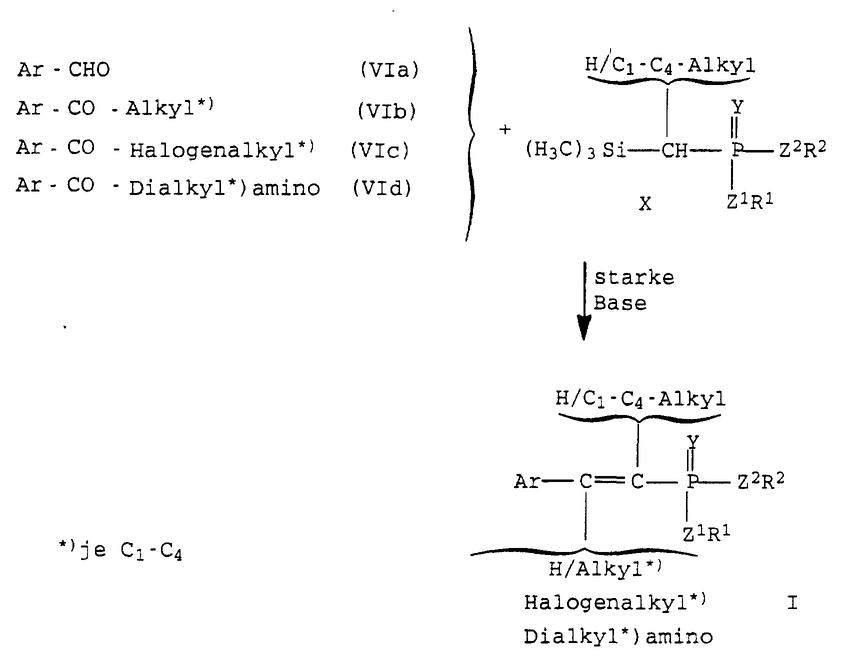
      Üblicherweise arbeitet man in einem inerten organischen Lösungsmittel, z.B. in einem aromatischen Kohlenwasserstoff wie Toluol oder einem Ether wie Diethylether, Tetrahydrofuran, Dioxan und 1,2-Dimethoxyethan.
      Geeignete starke Basen sind z.B. Lithiumdiisopropylamid, Natriumhydrid oder Butyllithium.
      Im allgemeinen erfolgt die Reaktionsführung bei (-100)°C bis zur Siedetemperatur des Reaktionsgemisches, vorzugsweise bei (-70) bis +30°C.
      Die aromatischen Aldehyde VIa, Ketone VIb und VIc sowie die N,N-Dialkylbenzamide VId sind entweder bekannt oder auf an sich bekannte Weise herstellbar.
   A.7) durch Kupplung eines Styrylhalogenids XI mit einem Trialkylphosphit XII oder einem Dialkylphosphit XIII {vgl. hierzu z.B. R.S. Gross, S. Mehdi, J.R. McCarthy, Tetrahedron Lett. 34 (1993) 7197; G. Axelrad, S. Laosooksathit, R. Engel, J. Org. Chem. 46 (1981) 5200}: 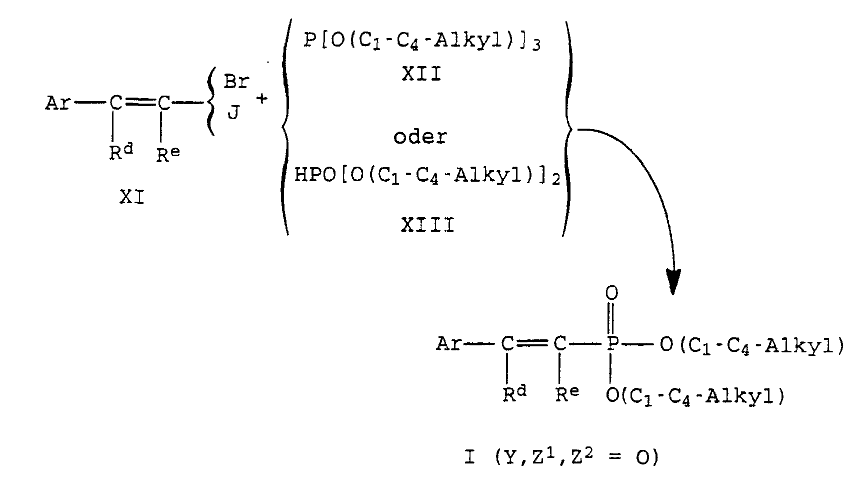
   Bezüglich der Definition von Ar siehe Verfahren A.1);
      - R^{d}, R^{e}: stehen für Wasserstoff, Halogen oder C₁-C₄-Alkyl.

      Üblicherweise arbeitet man in einem inerten organischen Lösungsmittel, vorzugsweise in einem aromatischen Kohlenwasserstoff wie Toluol oder einem Ether wie Tetrahydrofuran.
      Bei der Umsetzung von XI mit einem Trialkylphosphit XII arbeitet man vorteilhaft in Gegenwart von Kupfer(I)bromid oder -chlorid.
      Bei der Umsetzung von XI mit einem Dialkylphosphit XIII arbeitet man vorteilhaft in Gegenwart eines Übergangsmetallkatalysators, vorzugsweise einer Palladium(II)verbindung wie Dichlorobis(triphenylphosphin)palladium, und gewünschtenfalls in Gegenwart einer Base, z.B. Triethylamin.
      Im allgemeinen erfolgt die Reaktionsführung bei (-100)°C bis zur Siedetemperatur des Reaktionsgemisches, vorzugsweise bei ca. +25°C
      Die Styrylhalogenide XI sowie die Phosphorverbindungen XII und XIII sind entweder bekannt oder auf an sich bekannte Weise herstellbar.
   A.8) durch Reaktion eines Phenylacetylens XIV
      - mit einem Trialkylphosphit XII oder
      - nacheinander mit Phosphorpentachlorid und einem Alkohol, Mercaptan oder Amin (HZ¹R¹/HZ²R²) in Gegenwar einer Base
         {vgl. hierzu z.B. C.E. Griffin, T.D. Mitchell, J. Org. Chem. 30 (1965) 1935; A. Meisters, J.M. Swan, Aust. J. Chem. 18 (1965) 155; L. Maier, Synth. Inorg. Met. Org. Chem. 3 (1973) 329; A.A. Petrov, J. Gen. Chem. USSR 41 (1971) 1670}:

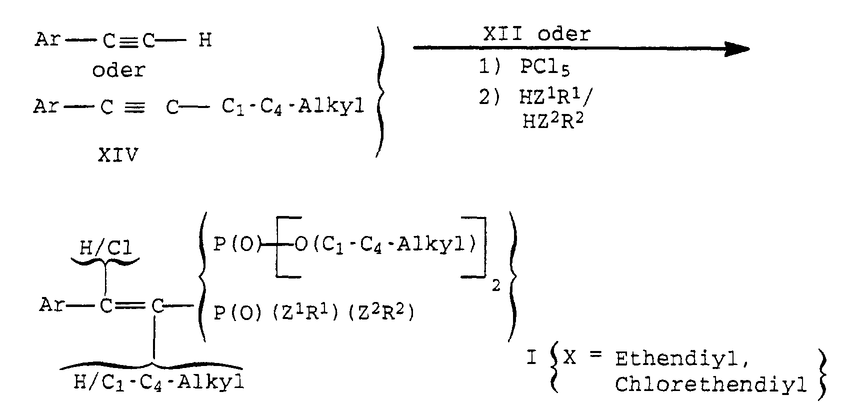

      Bezüglich der Definition von Ar siehe Verfahren A.1).
      Die Umsetzung von XIV mit XII erfolgt vorzugsweise lösungsmittelfrei bei Reaktionstemperaturen von 20°C bis Siedetemperatur des Trialkylphosphits XII, insbesondere bei der Siedetemperatur der Reaktionsgemisches.
      Geeignete Basen bei der Umsetzung des Phenylacetylens XIV mit PCl₅ und (HZ¹R¹/HZ²R²) sind insbesondere tertiäre Amine wie Pyridin und Triethylamin.
      Die Umsetzung von XIV mit PCl₅ erfolgt vorzugsweise bei 50 bis 200°C, die anschließende Reaktion mit (HZ¹R¹/HZ²R²) dagegen bei einer Reaktionstemperatur von (-100)°C bis Siedetemperatur des Reaktionsgemisches.
      Die Phenylacetylene XIV sowie die Alkohole, Mercaptane und Amine (HZ¹R¹/HZ²R²) sind bekannt oder auf an sich bekannte Weise herstellbar.
   A.9) durch Umsetzung von Benzylidentriphenylphosphoranen XV mit einem Perfluoralkancarbonsäureanhydrid und anschließend mit einem Lithiumdialkylphosphit auf an sich bekannte Weise {vgl. hierzu z.B. Y. Shen, Q. Liao, W. Qiu, J. Chem. Soc., Perkin Trans 1, 695 (1990)}: 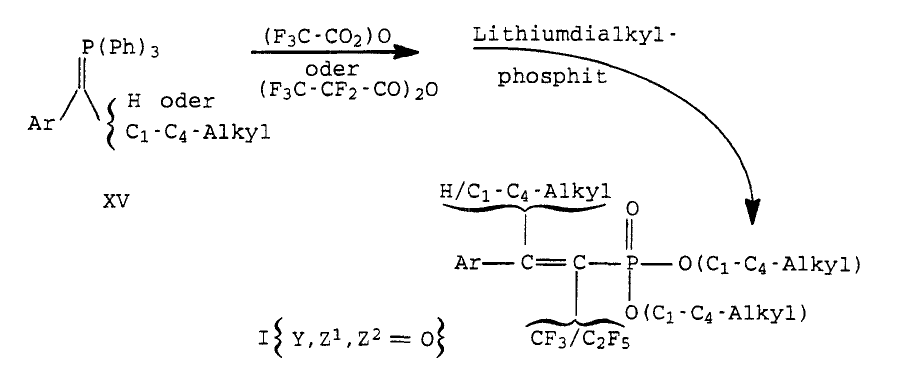
   Bezüglich der Definition von Ar siehe Verfahren A.1);
      - Ph: steht für die Phenylgruppe.

      Die Benzylidentriphenylphosphorane XV sind bekannt oder auf an sich bekannte Weise herstellbar.
   A.10) durch Alkylierung eines Phosphonsäurederivates XVI auf an sich bekannte Weise mit einem 3-Pyridylbenzylhalogenid XVII, in Gegenwart einer starken Base {vgl. hierzu z.B. G.M. Blackburn, M.J. Parratt, J. Chem. Soc., Perkin Trans 1, 1425 (1986); G.M. Kosolapoff, J.S. Powell, J. Am. Chem. Soc. 72 (1950) 4198; R.M. Keenan et al., J. Med. Chem. 35 (1992) 3858; H. Ahlbrecht, W. Farnung, Synthesis, 336 (1977); E. D'Incan, J. Seyden-Penne, Synthesis, 516 (1975); S. Hanessian, Y.L. Bennani, D. Delorme, Tetrahedron Lett. 31 (1990) 6461}: 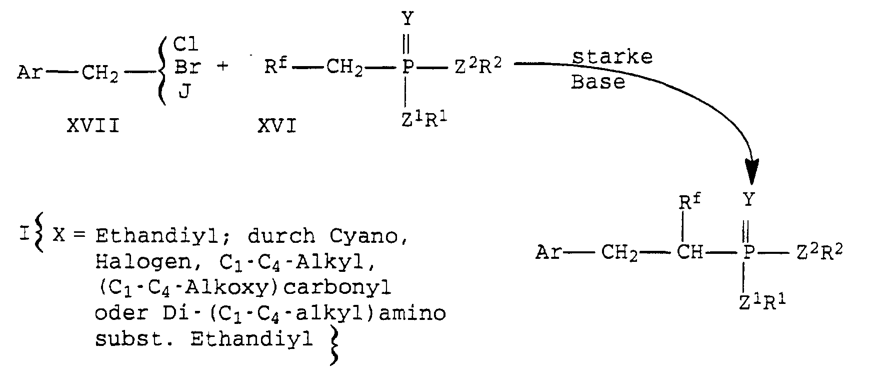
      Bezüglich der Definition von Ar siehe Verfahren A.1;
      - R^{f}: steht für Wasserstoff, Cyano, Halogen, C₁-C₄-Alkyl, (C₁-C₄-Alkoxy)carbonyl oder Di-(C₁-C₄-alkyl)amino.

      Geeignete starken Base sind z.B. Natriumhydroxid, Butyllithium und Lithiumdiisopropylamid.
      Üblicherweise arbeitet man in einem inerten organischen Lösungsmittel, vorzugsweise in einem aromatischen Kohlenwasserstoff wie Toluol oder einem cyclischen Ether wie Tetrahydrofuran.
      Allgemein arbeitet man bei Temperaturen von (-100)°C bis zum Siedepunkt des Reaktionsgemisches, vorzugsweise von (-78)°C bis +25°C.
      Die Phosphonsäurederivate XVI sowie die Benzylhalogenide XVII sind bekannt oder auf an sich bekannte Weise herstellbar.
   A.11) durch Umsetzung von Aldehyden XVIIIa/XVIIIb mit Dialkylphosphiten XIII, gewünschtenfalls in Gegenwart von Ammoniak oder einem primären oder sekundären Amin {vgl. hierzu z.B. M.E. Chalmers, G.M. Kosolapoff, J. Am. Chem. Soc. 75 (1953) 5278; C. Li, C. Yuan, Tetrahedron Lett. 34 (1993) 1515}: 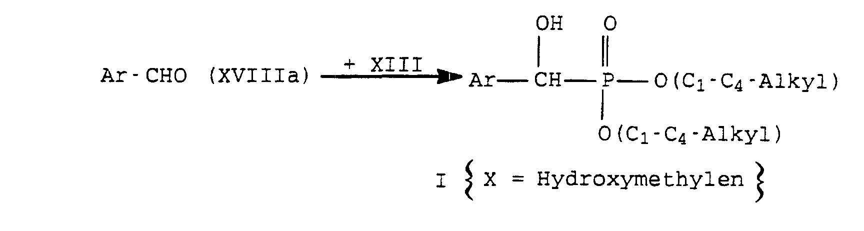 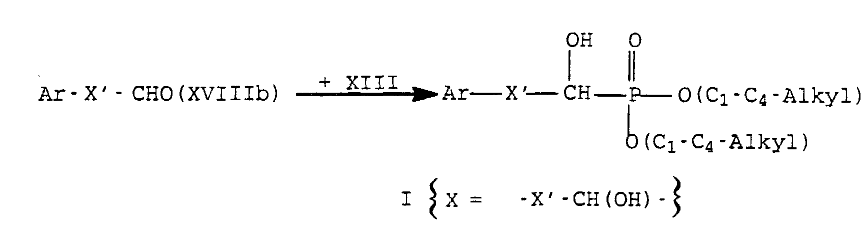 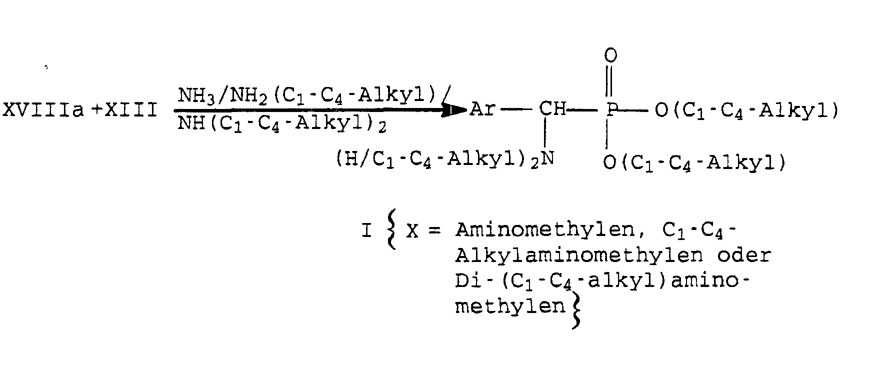 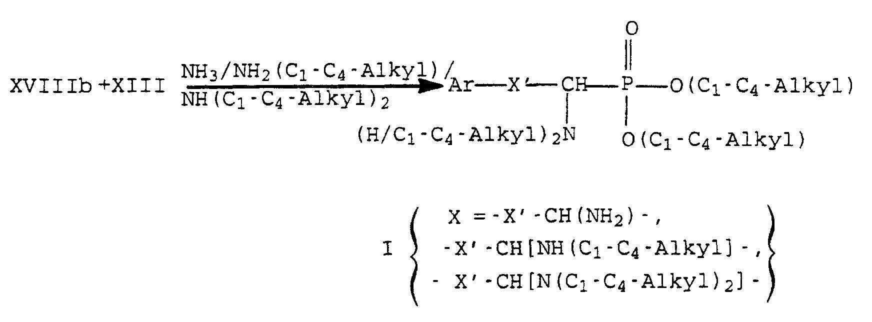
      Bezüglich der Definition von Ar siehe Verfahren A.1);
      - X': steht für geg. subst. -CH₂-, -CH₂CH₂-, -OCH₂- oder -SCH₂-, wobei die gleichen Substituenten wie bei den entsprechenden Bedeutungen für X in Betracht kommen.

      Als Lösungsmittel eignen sich beispielsweise Wasser, die niederen Alkohole wie Methanol, Ether wie Tetrahydrofuran und Diethylether sowie Pyridin.
      Allgemein arbeitet man bei Temperaturen von (-100)°C bis zum Siedepunkt des Reaktionsgemisches, vorzugsweise von 20 bis 50°C.
      Die Aldehyde XVIIIa/XVIIIb sind bekannt oder auf an sich bekannte Weise herstellbar.
   A.12) durch Umsetzung von Alkylhalogeniden XVII oder XIX mit Trialkylphosphiten XII auf an sich bekannte Weise nach der Methode von Arbuzov {siehe hierzu z.B. A.Y. Garner, E.C. Chapin, P.M. Scanlon, J. Org. Chem. 24 (1959) 532; A.G. Schultz, J.J. Napier, R. Ravichandran, J. Org. Chem. 48 (1983) 3408; Y. Vo-Quang, D. Carniato, L. Vo-Quang, F. Le Goffic, J. Chem. Soc., Chem. Commun., 1505 (1983)}: 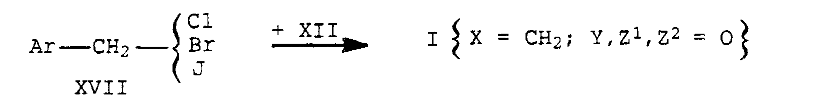 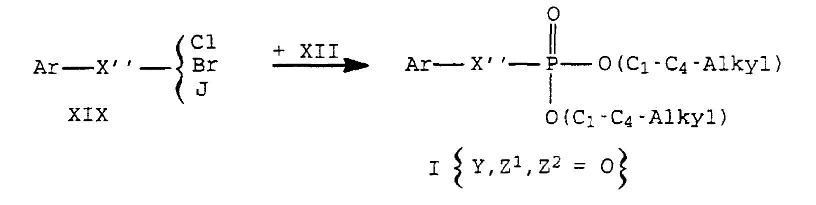
      Bezüglich der Definition von Ar siehe Verfahren A.1);
      - X'': steht hier für -OCH₂-, -SCH₂- oder -Q-CH₂- mit Q = geg. subst. Methylen, 1,2-Ethandiyl, Oxymethylen, Thiamethylen, Methylenoxy oder Methylenthia.

      Die Umsetzung erfolgt vorzugsweise lösungsmittelfrei, wobei Reaktionstemperaturen von 0°C bis zum Siedepunkt des Trialkylphosphits XII, vorzugsweise von 20 bis 150°C, in Betracht kommen.
      Die Alkylhalogenide XIX sind bekannt oder auf an sich bekannte Weise herstellbar.
   A.13) durch nucleophile Substitutionsreaktion an Phosphonsäurederivaten XXI in Gegenwart von Base {vgl. hierzu beispielsweise J.L. Kelley, J.A. Linn, E.W. McLean, J.V. Tuttle, J. Med. Chem. 36 (1993) 3455}: 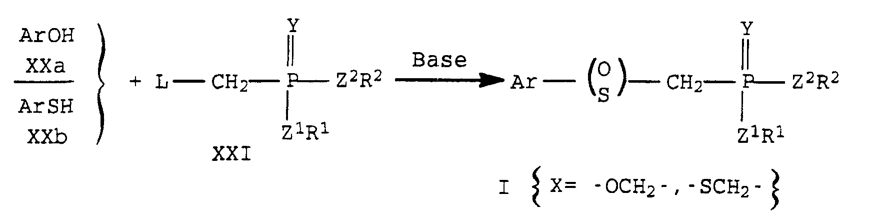
      Bezüglich der Definition von Ar siehe Verfahren A.1);
      - L: steht für Halogen oder eine übliche Abgangsgruppe wie Methylsulfonyloxy oder 4-Tolylsulfonyloxy.

      Üblicherweise arbeitet man in einem inerten organischen Lösungsmittel, vorzugsweise in Pyridin, einem Keton wie Aceton oder in einem Ether wie Tetrahydrofuran.
      Als Basen eignen sich z.B. Butyllithium sowie Alkalimetallhydride wie Natriumhydrid oder Alkalimetallcarbonate wie Kaliumcarbonat.
      Allgemein arbeitet man bei Temperaturen von (-100)°C bis zum Siedepunkt des Reaktionsgemisches, vorzugsweise von 20 bis 50°C.
      Eine weitere Möglichkeit zur Synthese von Verbindungen I mittels nucleophiler Substitutionsreaktion besteht darin, 3-Pyridylbenzylhalogenide XVII auf an sich bekannte Weise mit Phosphonsäurederivaten XXII, in Gegenwart von Base, umzusetzen {siehe hierzu neben der o.g. Literatur auch S. Jarosz, E. Koslowska, Z. Ciunik, Pol. J. Chem. 68 (1994) 2209}: 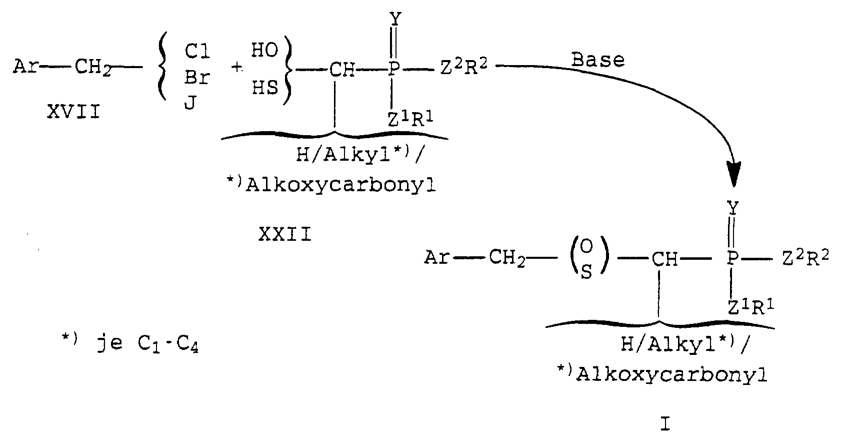
      Bezüglich Ar, Lösungsmittel, Base und Reaktionstemperatur sei auf die obigen Angaben zur Umsetzung von XX mit XXI verwiesen.
      Die Phenole XXa und Thiophenole XXb, die Phosphonsäurederivate XXI, die Benzylhalogenide XVII sowie die Phosphonsäurederivate XXII sind bekannt oder auf an sich bekannte Weise herstellbar.
   A.14) durch Umsetzung eines Phenolx XXa mit einem Halogenmethylthioether XXIII in Gegenwart einer Base, halogenolytischer Spaltung des erhaltenen Alkylthioalkylethers XXIV und nachfolgender Arbuzov-Reaktion: 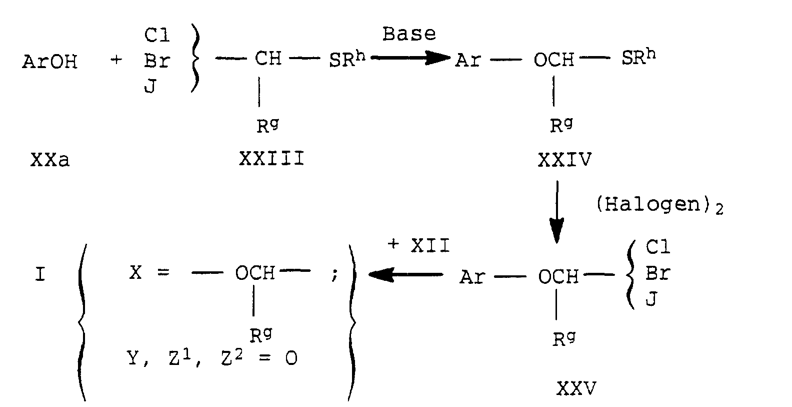
      Bezüglich der Definition von Ar siehe Verfahren A.1);
      R^{g}, R^{h} stehen unabhängig voneinander für C₁-C₄-Alkylreste (XXIIIa = XXIII mit R^{g} = H und R^{h} = CH₃; XXIVa = XXIV mit R^{g} = H und R^{h} = CH₃).
      Bezüglich der Durchführung der nucleophilen Substitutionsreaktion XXa + XXIII sei auf die Angaben im Abschnitt A.13) verwiesen.
      Die nachfolgende Spaltung des Reaktionsprodukts XXIV erfolgt mit einem Halogen, vorzugsweise mit Chlor oder Brom, bei einer Temperatur zwischen dem Schmelz- und Siedepunkt des Reaktionsgemisches, vorzugsweise bei 0-100°C.
      In der Regel erfolgt die Reaktionsführung in einem inerten organischen Lösungsmittel, z.B. einem Kohlenwasserstoff wie n-Hexan, einem halogenierten Kohlenwasserstoff wie Dichlormethan oder einem Ether wie Tetrahydrofuran.
      Der Halogenmethylether XXV wird schließlich einer Arbuzov-Reaktion mit einem Trialkylphosphit XII unterworfen. Bezüglich der Durchführung dieser Reaktion sei auf die Angaben bei Abschnitt A.12) verwiesen.
   A.15) durch Umsetzung eines Aldehyds VIa mit einem Trichlormethanphosphonsäurederivat XXVI in Gegenwart einer Alkyllithiumverbindung XXVII: 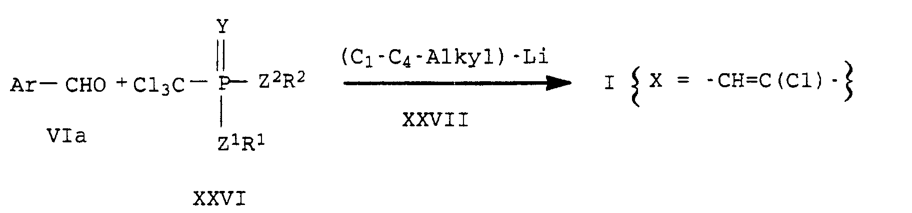
      Bezüglich der Definition von Ar siehe Verfahren A.1).
      Normalerweise wird das Phosphonsäurederivat XXVI zunächst mit der Alkyllithiumverbindung XXVII bei einer Temperatur zwischen dem Schmelz- und Siedepunkt des Reaktionsgemisches, vorzugsweise bei (-80) bis (-50)°C, umgesetzt. Üblicherweise erfolgt die Reaktionsführung dabei in einem inerten organischen Lösungs-/Verdünnungsmittel, z.B. einem Kohlenwasserstoff wie n-Hexan oder einem Ether wie Tetrahydrofuran.
      Das Reaktionsprodukt wird danach, vorzugsweise ohne Aufarbeitung, mit dem Aldehyd VIa umgesetzt, wobei die Reaktionstemperatur vorzugsweise auf ca. 20°C erhöht wird.
   A.16) durch Diazotierung von Pyridylanilinen II, Reaktion der hierbei gebildeten Diazoniumsalze mit Phosphortrichlorid und Umsetzung der Reaktionsprodukte mit Nucleophilen H-OR¹ oder H-OR² {s. z.B. E. Klumpp, G. Eifert, P. Born, J. Szulagyi, Chem. Ber. 122, 2021 (1989); G.O. Doak et al., J. Am. Chem. Soc. 75, S. 683, 1379, 4903 und 4905 (1953)}: 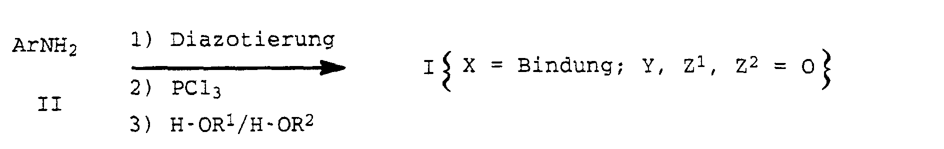
      Bezüglich der Diazotierung sei auf die Angaben im Abschnitt A.1) verwiesen.
      Das Diazoniumsalz wird vorzugsweise vor der Reaktion mit Phosphortrichlorid isoliert, beispielsweise als Halogenid, Tetrafluoroborat oder Hexafluorophosphat. Die Reaktion selbst erfolgt in der Regel in einem inerten organischen Lösungsmittel, z.B. einem Kohlenwasserstoff wie n-Hexan und Toluol, einem halognierten Kohlenwasserstoff wie Dichlormethan, einem Ether wie Tetrahydrofuran, oder einem aprotischen Solvens wie Acetonitril, Dimethylformamid und Dimethylsulfoxid.
      Allgemein arbeitet man zwischen dem Schmelz- und Siedepunkt des Reaktionsgemisches, vorzugsweise bei 0 bis 100°C.
      Die abschließende Überführung in I wird vorzugsweise mit Wasser als Nucleophil vorgenommen.
   A.17) durch Umsetzung eines Arylhalogenids/-triflats der Formel IV mit einem Dialkylphosphit XIII in Gegenwart einer Base und eines Übergangsmetallkatalysators {s. z.B. A. Castelnuovo, J. Calabrese, J. Am. Chem. Soc. 112, 4324 (1990); T. Hirao et al., Bull. Chem. Soc. Jpn. 55, 909 (1982)}: 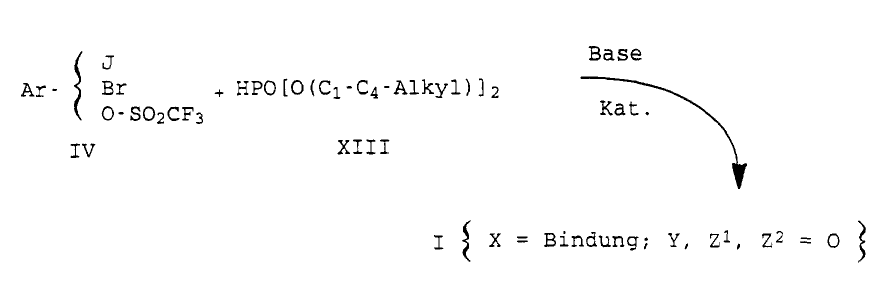
      Geeignete Basen sind z.B. Amine wie Triethylamin.
      Als Katalysator kommt vorzugsweise eine Palladiumverbindung, beispielsweise Tetrakis(triphenylphosphin)palladium in Betrach. Im übrigen sei auf die Angaben im Abschnitt A.2) verwiesen.
B) Derivatisierung von substituierten 2-Phenylpyridinen der Formel I:
   B.1) Hydrierung von substituierten 2-Phenylpyridinen I, bei denen X für 1,2-Ethendiyl oder eine durch Halogen substituierte Methylen-, 1,2-Ethandiyl- oder 1,3-Propandiylbrücke steht {vgl. z.B. C.N. Robinson, P.K. Li. J.F. Addison, J. Org. Chem. 37 (1972) 2939; G.T. Lowen, M.R. Almond, J. Org. Chem. 59 (1994) 4548}: 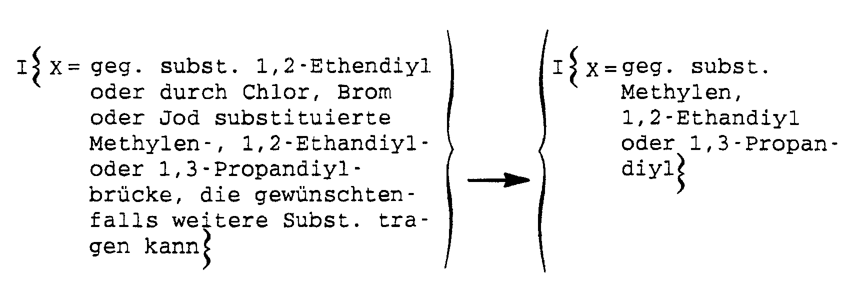
      Bezüglich der Definition von Ar siehe Verfahren A.1).
      Die Hydrierung erfolgt entweder mit Wasserstoff in Gegenwart eines hierfür üblichen Katalysators wie Palladium oder Platin auf Aktivkohle oder Raney-Nickel bei 0 bis 150°C und ca. 1 bis 200 bar Wasserstoffdruck, oder mit einem Metallhydrid wie Natriumborhydrid und Lithiumaluminiumhydrid, bei Temperaturen von 0°C bis zum Siedepunkt des Reaktionsgemisches.
      Für die Hydrierung mit Wasserstoff geeignete Lösungsmittel sind beispielsweise Wasser, die niederen Alkohole wie Methanol und Ethanol, Ether wie Diethylether und Tetrahydrofuran oder Ester wie Ethylacetat.
      Bei der Umsetzung der Ausgangsverbindung mit einem Metallhydrid arbeitet man vorzugsweise in einem inerten organischen Lösungsmittel, insbesondere einem Ether wie Diethylether und Tetrahydrofuran.
   B.2) Hydrolyse von substituierten 2-Phenylpyridinen I, Überführung der Verfahrensprodukte in Phosphonylhalogenide und deren Umsetzung mit Nucleophilen: 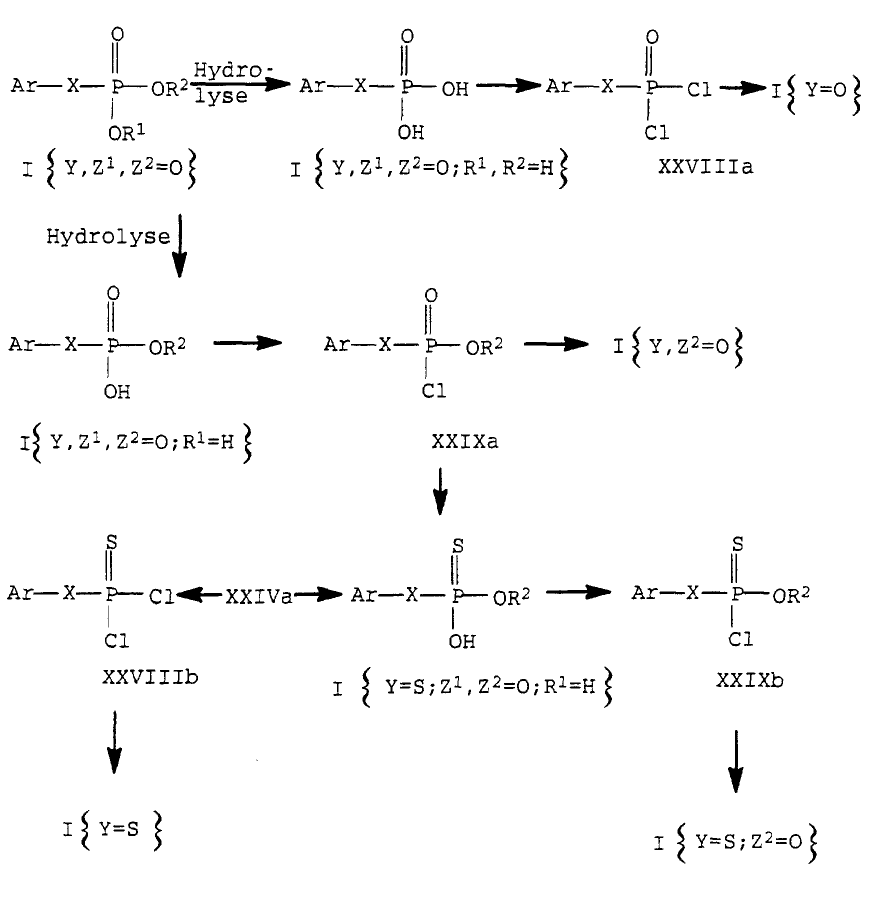
      Bezüglich der Definition von Ar siehe Verfahren A.1).
      Bei diesem Verfahren werden die substituierten 2-Phenylpyridine I zunächst hydrolytisch (sauer oder basisch) oder, falls R¹ und/oder R² ein Benzyl- oder Allylrest ist, auch hydrogenolytisch zu Phosphonsäuren und Phosphonsäurehalbestern I gespalten. Die Spaltung kann gewünschtenfalls auch durch Umsetzung mit einem Tri-(C₁-C₄-alkyl)silylhalogenid wie Chlortrimethylsilan, Iodtrimethylsilan oder einem Gemisch aus Chlortrimethylsilan und Alkalimetalliodid erfolgen.
      Die Spaltprodukte können dann durch Reaktion mit einem Halogenierungsmittel wie Oxalylchlorid, Thionylchlorid und Phosphorpentachlorid in die entsprechenden Phosphonylmono- oder -dichloride XXVIIIa und XXIXa übergeführt werden.
      Die Phosphonyldichloride XXVIIIa können gewünschtenfalls in an sich bekannter Weise mit einem Schwefelungsmittel wie Phosphor(V)sulfid und 2,4-Bis(4-methoxyphenyl)-1,3,2,4-dithiadiphosphetan-2,4-dithion ("Lawesson-Reagenz") zu Thionophosphonyldichloriden XXVIIIb geschwefelt werden. Bezüglich brauchbarer Lösungsmittel, Temperatur und Mengenverhältnissen sei auf die Ausführungen in der DE-A 19 504 188 unter Verfahren D) verwiesen.
      Durch Reaktion von XXVIII und XXIX mit Nucleophilen HZ¹R¹ oder HZ²R² sind schließlich weitere substituierte 2-Phenylpyridine I zugänglich.
      Die Phosphonsäuremonoesterchloride XXIXa sind z.B. durch Umsetzung mit Natriumhydrogensulfid in die Thionophosphonsäuremonoester XXIXb überführbar.
      Bezüglich der Reaktionsdurchführung und den Mengenverhältnissen der Reaktanden sei z.B. auf Houben-Weyl, Methoden der Organischen Chemie, Georg Thieme Verlag, Stuttgart, Bd. 12/1, 4. Auflage 1963, S. 387ff., 407ff. und 557ff.; Bd. E2 1982, S. 300ff. und 419ff. verwiesen.
   B.3) Halogenwasserstoff-Eliminierung an Verbindungen I mit X = -CH₂-CH(Halogen)- oder -CH=C(Halogen)-: 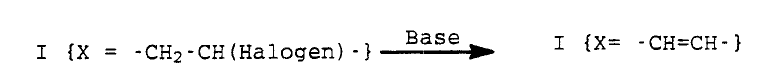 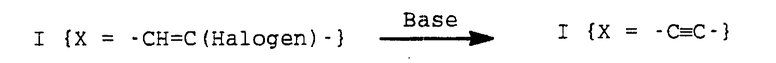
      Üblicherwiese arbeitet man in Wasser oder einem inerten organischen Lösungsmittel, z.B. einem Alkohol wie Ethanol, einem Ether wie Diethylether, Tetrahydrofuran und Dioxan, oder einem aprotischen Solvens wie Acetonitril, Dimethylformamid und Dimethylsulfoxid.
      Als Basen eignen sich z.B. Alkalimetallhydroxide, -carbonate, -hydride, Alkyllithiumverbindungen wie Butyllithium, oder organische Amine wie Triethylamin, 1,4-Diazabicyclo[2.2.2.]octan (DABCO) und 1,8-Diazabicyclo[5.4.0.]undec-7-en (DBU).
      Allgemein erfolgt die Reaktionsführung bei Temperaturen von (-100)°C bis zum Siedepunkt des Reaktionsgemisches, vorzugsweise bei 20 bis 100°C.
C) Oxidation von substituierten Phenylpyridinen der Formel I, bei denen n Null bedeutet und der Substituent -X-P(=Y)(Z¹R¹)(Z²R²) keinen Schwefel enthält, auf an sich bekannte Weise {vgl. z.B. A. Albini & S. Pietra, Heterocyclic N-Oxides, CRC-Press Inc., Boco Raton, USA 1991; H.S. Mosher et al., Org. Synth. Coll. Vol. IV 1963, Seite 828; E.C. Taylor et al., Org. Synth. Coll. Vol. IV 1963, Seite 704; T.W. Bell et. al., Org. Synth. 69, Seite 226 (1990)}: 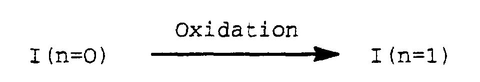
   Unter den zur Oxidation des Pyridinrings üblichen Oxidationsmitteln sei beispielhaft auf Peressigsäure, Trifluorperessigsäure, Perbenzoesäure, m-Chlorperbenzoesäure, Monopermaleinsäure, Magnesiummonoperphthalat, Natriumperborat, Oxone® (enthält Peroxidisulfat), Perwolframsäure und Wasserstoffperoxid verwiesen.
   Geeignete Lösungsmittel sind z.B. Wasser, Schwefelsäure, Carbonsäuren wie Essigsäure und Trifluoressigsäure sowie halogenierte Kohlenwasserstoffe wie Dichlormethan und Chloroform.
   Normalerweise gelingt die Oxidation bei Temperaturen von 0°C bis Siedetemperatur des Reaktionsgemisches.
   Das Oxidationsmittel wird normalerweise in mindestens äuqimolaren Mengen, bezogen auf die Ausgangsverbindung, eingesetzt. Im allgemeinen hat sich ein Überschuß an Oxidationsmittel als besonders vorteilhaft erwiesen.

Sofern nicht anders angegeben werden alle vorstehend beschriebenen Verfahren zweckmäßigerweise bei Atmosphärendruck oder unter dem Eigendruck des jeweiligen Reaktionsgemisches vorgenommen. Im Allgemeinen setzt man die Reaktionspartner in einem Molverhältnis von 0,95:1 bis 5:1 ein.

Die Aufarbeitung der Reaktionsgemische erfolgt in der Regel nach an sich bekannten Methoden, beispielsweise durch Verdünnen der Reaktionslösung mit Wasser und anschließender Isolierung des Produktes mittels Filtration, Kristallisation oder Lösungsmittel extraktion, oder
durch Entfernen des Lösungsmittels, Verteilen des Rückstandes in einem Gemisch aus Wasser und einem geeigneten organischen Lösungsmittel und Aufarbeiten der organischen Phase auf das Produkt hin.

Die substituierten 2-Phenylpyridine I können bei der Herstellung als Isomerengemische anfallen, die jedoch gewünschtenfalls nach den hierfür üblichen Methoden wie Kristallisation oder Chromatographie, auch an einem optisch aktiven Adsorbat, in die reinen Isomeren getrennt werden können. Reine optisch aktive Isomere lassen sich vorteilhaft aus entsprechenden optisch aktiven Ausgangsprodukten herstellen.

Landwirtschaftlich brauchbare Salze der Verbindungen I können durch Reaktion mit einer Base des entsprechenden Kations, vorzugsweise einem Alkalimetallhydroxid oder -hydrid, oder durch Reaktion mit einer Säure des entsprechenden Anions, vorzugsweise der Chlorwasserstoffsäure, Bromwasserstoffsäure, Schwefelsäure, Phosphorsäure oder Salpetersäure, gebildet werden.

Salze von I, deren Metallion kein Alkalimetallion ist, können auch durch Umsalzen des entsprechenden Alkalimetallsalzes in üblicher Weise hergestellt werden, ebenso Ammonium-, Phosphonium-, Sulfonium- und Sulfoxoniumsalze mittels Ammoniak, Phosphonium-, Sulfonium- oder Sulfoxoniumhydroxiden.

Die Verbindungen I und deren landwirtschaftlich brauchbaren Salze eignen sich - sowohl als Isomerengemische als auch in Form der reinen Isomeren - als Herbizide. Die I enthaltenden herbiziden Mittel bekämpfen Pflanzenwuchs auf Nichtkulturflächen sehr gut, besonders bei hohen Aufwandmengen. In Kulturen wie Weizen, Reis, Mais, Soja und Baumwolle wirken sie gegen Unkräuter und Schadgräser, ohne die Kulturpflanzen nennenswert zu schädigen. Dieser Effekt tritt vor allem bei niedrigen Aufwandmengen auf.

In Abhängigkeit von der jeweiligen Applikationsmethode können die Verbindungen I bzw. sie enthaltenden herbiziden Mittel noch in einer weiteren Zahl von Kulturpflanzen zur Beseitigung unerwünschter Pflanzen eingesetzt werden. In Betracht kommen beispielsweise folgende Kulturen:
Allium cepa, Ananas comosus, Arachis hypogaea, Asparagus officinalis, Beta vulgaris spec. altissima, Beta vulgaris spec. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa , Phaseolus lunatus, Phaseolus vulgaris, Picea abies, Pinus spec., Pisum sativum, Prunus avium, Prunus persica, Pyrus communis, Ribes sylvestre, Ricinus communis, Saccharum of ficinarum, Secale cereale, Solanum tuberosum, Sorghum bicolor (s. vulgare), Theobroma cacao, Trifolium pratense, Triticum aestivum, Triticum durum, Vicia faba, Vitis vinifera und Zea mays.

Darüber hinaus können die Verbindungen I auch in Kulturen, die durch Züchtung einschließlich gentechnischer Methoden gegen die Wirkung von Herbiziden tolerant sind, verwandt werden.

Des weiteren eignen sich die substituierten 2-Phenylpyridine I auch zur Desikkation und/oder Defoliation von Pflanzen.

Als Desikkantien eignen sie sich insbesondere zur Austrocknung der oberirdischen Teile von Kulturpflanzen wie Kartoffel, Raps, Sonnenblume und Sojabohne. Damit wird ein vollständig mechanisches Beernten dieser wichtigen Kulturpflanzen ermöglicht.

Von wirtschaftlichem Interesse ist ferner die Ernteerleichterung, die durch das zeitlich konzentrierte Abfallen oder Vermindern der Haftfestigkeit am Baum bei Zitrusfrüchten, Oliven oder bei anderen Arten und Sorten von Kern-, Stein- und Schalenobst ermöglicht wird. Derselbe Mechanismus, das heißt die Förderung der Ausbildung von Trenngewebe zwischen Frucht- oder Blatt- und Sproßteil der Pflanzen ist auch für ein gut kontrollierbares Entblättern von Nutzpflanzen, insbesondere Baumwolle, wesentlich.

Außerdem führt die Verkürzung des Zeitintervalls, in dem die einzelnen Baumwollpflanzen reif werden, zu einer erhöhten Faserqualität nach der Ernte.

Die Verbindungen I bzw. die sie enthaltenden Mittel können beispielsweise in Form von direkt versprühbaren wäßrigen Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feinste Verteilung der erfindungsgemäßen Wirkstoffe gewährleisten.

Als inerte Hilfsstoffe kommen im Wesentlichen in Betracht: Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Methanol, Ethanol, Propanol, Butanol und Cyclohexanol, Ketone wie Cyclohexanon, stark polare Lösungsmittel, z.B. Amine wie N-Methylpyrrolidon und Wasser.

Wäßrige Anwendungsformen können aus Emulsionskonzentraten, Suspensionen, Pasten, netzbaren Pulvern oder wasserdispergierbaren Granulaten durch Zusatz von Wasser bereitet werden. Zur Herstellung von Emulsionen, Pasten oder Öldispersionen können die Substrate als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Konzentrationen der Wirkstoffe I in den anwendungsfertigen Zubereitungen können in weiten Bereichen variiert werden. Im allgemeinen enthalten die Formulierungen etwa von 0,001 bis 98 Gew.%, vorzugsweise 0,01 bis 95 Gew.%, mindestens eines Wirkstoffs. Die Wirkstoffe werden dabei in einer Reinheit von 90% bis 100%, vorzugsweise 95% bis 100% (nach NMR-Spektrum) eingesetzt.

Die folgenden Formulierungsbeispiele verdeutlichen die Herstellung solcher Zubereitungen:
I. 20 Gewichtsteile der Verbindung Nr. Iaα.3 werden in einer Mischung gelöst, die aus 80 Gewichtsteilen alkyliertem Benzol, 10 Gewichtsteilen des Anlagerungsproduktes von 8 bis 10 Mol Ethylenoxid an 1 Mol Ölsäure-N-monoethanolamid, 5 Gewichtsteilen Calciumsalz der Dodecylbenzolsulfonsäure und 5 Gewichtsteilen des Anlagerungsproduktes von 40 Mol Ethylenoxid an 1 Mol Ricinusöl besteht. Durch Ausgießen und feines Verteilen der Lösung in 100000 Gewichtsteilen Wasser erhält man eine wäßrige Dispersion, die 0,02 Gew.% des Wirkstoffs enthält.
II. 20 Gewichtsteile der Verbindung Nr. Icα.3 werden in einer Mischung gelöst, die aus 40 Gewichtsteilen Cyclohexanon, 30 Gewichtsteilen Isobutanol, 20 Gewichtsteilen des Anlagerungsproduktes von 7 Mol Ethylenoxid an 1 Mol Isooctylphenol und 10 Gewichtsteilen des Anlagerungsproduktes von 40 Mol Ethylenoxid an 1 Mol Ricinusöl besteht. Durch Eingießen und feines Verteilen der Lösung in 100000 Gewichtsteilen Wasser erhält man eine wäßrige Dispersion, die 0,02 Gew.% des Wirkstoffs enthält.
III. 20 Gewichtsteile des Wirkstoffs Nr. Idα.2 werden in einer Mischung gelöst, die aus 25 Gewichtsteilen Cyclohexanon, 65 Gewichtsteilen einer Mineralölfraktion vom Siedepunkt 210 bis 280°C und 10 Gewichtsteilen des Anlagerungsproduktes von 40 Mol Ethylenoxid an 1 Mol Ricinusöl besteht. Durch Eingießen und feines Verteilen der Lösung in 100000 Gewichtsteilen Wasser erhält man eine wäßrige Dispersion, die 0,02 Gew.% des Wirkstoffs enthält.
IV. 20 Gewichtsteile des Wirkstoffs Nr.Ifα.3 werden mit 3 Gewichtsteilen des Natriumsalzes der Diisobutylnaphthalin-α-sulfonsäure, 17 Gewichtsteilen des Natriumsalzes einer Ligninsulfonsäure aus einer Sulfit-Ablauge und 60 Gewichtsteilen pulverförmigem Kieselsäuregel gut vermischt und in einer Hammermühle vermahlen. Durch feines Verteilen der Mischung in 20 000 Gewichtsteilen Wasser enthält man eine Spritzbrühe, die 0,1 Gew.% des Wirkstoffs enthält.
V. 3 Gewichtsteile des Wirkstoffs Nr. Icγ.2 werden mit 97 Gewichtsteilen feinteiligem Kaolin vermischt. Man erhält auf diese Weise ein Stäubemittel, das 3 Gew.% des Wirkstoffs enthält.
VI. 20 Gewichtsteile des Wirkstoffs Nr. Icγ.3 werden mit 2 Gewichtsteilen Calciumsalz der Dodecylbenzolsulfonsäure, 8 Gewichtsteilen Fettalkohol-polyglykolether, 2 Gewichtsteilen Natriumsalz eines Phenol-Harnstoff-Formaldehyd-Kondensates und 68 Gewichtsteilen eines paraffinischen Mineralöls innig vermischt. Man erhält eine stabile ölige Dispersion.
VII. 1 Gewichtsteil der Verbindung Nr. Inα.3 wird in einer Mischung gelöst, die aus 70 Gewichtsteilen Cyclohexanon, 20 Gewichtsteilen ethoxyliertem Isooctylphenol und 10 Gewichtsteilen ethoxyliertem Ricinusöl besteht. Anschließend kann mit Wasser auf die gewünschte Wirkstoffkonzentration verdünnt werden. Man erhält ein stabiles Emulsionskonzentrat.
VIII. 1 Gewichtsteil der Verbindung Nr. Iiα.38 wird in einer Mischung gelöst, die aus 80 Gewichtsteilen Cyclohexanon und 20 Gewichtsteilen Wettol® EM 31 (= nichtionischer Emulgator auf der Basis von ethoxyliertem Rizinusöl) besteht. Danach kann mit Wasser auf die gewünschte Wirkstoffkonzentration verdünnt werden. Man erhält ein stabiles Emulsionskonzentrat.

Die Applikation der Wirkstoffe I bzw. der herbiziden Mittel kann im Vorauflauf- oder im Nachauflaufverfahren erfolgen. Sind die Wirkstoffe für gewisse Kulturpflanzen weniger verträglich, so können Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die Aufwandmengen an Wirkstoff I betragen je nach Bekämpfungsziel, Jahreszeit, Zielpflanzen und Wachstumsstadium 0,001 bis 3,0, vorzugsweise 0,01 bis 1,0 kg/ha aktive Substanz (a.S.).

Zur Verbreiterung des Wirkungsspektrums und zur Erzielung synergistischer Effekte können die substituierten 2-Phenylpyridine I mit zahlreichen Vertretern anderer herbizider oder wachstumsregulierender Wirkstoffgruppen gemischt und gemeinsam ausgebracht werden. Beispielsweise kommen als Mischungspartner 1,2,4-Thiadiazole, 1,3,4-Thiadiazole, Amide, Aminophosphorsäure und deren Derivate, Aminotriazole, Anilide, Aryloxy-/Heteroaryloxyalkansäuren und deren Derivate, Benzoesäure und deren Derivate, Benzothiadiazinone, 2-(Hetaroyl/Aroyl)-1,3-cyclohexandione, Heteroaryl-Aryl-Ketone, Benzylisoxazolidinone, meta-CF₃-Phenylderivate, Carbamate, Chinolincarbonsäure und deren Derivate, Chloracetanilide, Cyclohexan-1,3-dionderivate, Diazine, Dichlorpropionsäure und deren Derivate, Dihydrobenzofurane, Dihydrofuran-3-one, Dinitroaniline, Dinitrophenole, Diphenylether, Dipyridyle, Halogencarbonsäuren und deren Derivate, Harnstoffe, 3-Phenyluracile, Imidazole, Imidazolinone, N-Phenyl-3,4,5,6-tetrahydrophthalimide, Oxadiazole, Oxirane, Phenole, Aryloxy- und Heteroaryloxyphenoxypropionsäureester, Phenylessigsäure und deren Derivate, 2-Phenylpropionsäure und deren Derivate, Pyrazole, Phenylpyrazole, Pyridazine, Pyridincarbonsäure und deren Derivate, Pyrimidylether, Sulfonamide, Sulfonylharnstoffe, Triazine, Triazinone, Triazolinone, Triazolcarboxamide und Uracile in Betracht.

Außerdem kann es von Nutzen sein, die Verbindungen I allein oder in Kombination mit anderen Herbiziden auch noch mit weiteren Pflanzenschutzmitteln gemischt, gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate zugesetzt werden.

### Herstellungsbeispiele

### Beispiel 1

### 1-Chlor-2-(2-chlor-5-(3-chlor-5-trifluormethylpyrid-2-yl)-4-fluorphenyl)ethylphosphonsäurediethylester (Nr. Icγ.3)

Zu einer Lösung von 30,3 g (0,19 mol) Vinylphosphonsäurediethylester, 1,4 g Kupfer(II)chlorid (10 mmol) und 1 g (10 mmol) tert.-Butylnitrit in 150 ml Acetonitril wurden 3 g (9 mmol) 2-Chlor-5-(3-chlor-5-trifluormethylpyrid-2-yl)-4-fluoranilin gegeben. Nach 3 Std. versetzte man das Reaktionsgemisch mit 200 ml Methyl-tert.-butylether. Anschließend wurde die organische Phase zweimal mit Wasser gewaschen, dann über Magnesiumsulfat getrocknet und schließlich eingeengt. Die Reinigung des Rohprodukts erfolgte mittels Säulenchromatographie (Eluens: Hexan/Ethylacetat = 4:1). Ausbeute: 1,6 g.

### Beispiel 2

### 1-Chlor-2-(2-chlor-5-(3-chlor-5-trifluormethylpyrid-2-yl)-4-fluorphenyl)vinylphosphonsäurediethylester (Nr. Iiγ.3)

Zu einer auf (-70)°C gekühlten Lösung von 2,3 g (9 mmol) Trichlormethanphosphonsäurediethylester in 30 ml Tetrahydrofuran wurden 3 ml einer Butyllithium-Lösung (1,5 M in Hexan; 4,5 mmol) so zugegeben, daß die Temperatur nicht über (-65)°C stieg. Danach rührte man noch 1 Std. bei (-65) bis (-70)°C, wonach eine Lösung von 1 g (3 mmol) 2-Chlor-5-(3-chlor-5-trifluormethylpyrid-2-yl)-4-fluorbenzaldehyd in 20 ml Tetrahydrofuran langsam zugetropft wurde. Nach weiteren 30 Minuten Rühren entfernte man das Kühlbad und ließ auf Raumtemperatur kommen. Anschließend wurde die Reaktionslösung mit gesättigter wässriger Kochsalzlösung gewaschen, dann über Magnesiumsulfat getrocknet und schließlich eingeengt. Die Reinigung des Rohprodukts erfolgte mittels Säulenchromatographie an Kieselgel (Eluens: Hexan/Ethylacetat = 4:1). Ausbeute: 0,8 g.

### Beispiel 3

### 1-Brom-2-[2-chlor-5-(3-chlor-5-trifluormethylpyrid-2-yl)phenyl]ethylphosphonsäuredimethylester (Nr. Idα.2)

Analog Beispiel 1 erhielt man unter Verwendung von 32,6 g (0,24 mol) Vinylphosphonsäuredimethylester, 3,13 g (14 mmol) Kupfer(II)bromid, 1,33 g (13 mmol) tert.-Butylnitrit und 3,6 g (12 mmol) 2-Chlor-5-(3-chlor-5-trifluormethylpyrid-2-yl)anilin 1,2 g des gewünschten Wertproduktes.

### Beispiel 4

### 2-Chlor-5-(3-chlor-5-trifluormethylpyrid-2-yl)benzyloxymethylphosphonsäurediethylester (Nr. Inα.3)

Zu einer Lösung von 0,66 g (3,9 mmol) Hydroxymethylphosphonsäurediethylester in 30 ml Tetrahydrofuran wurden 0,1 g (3,6 mmol) Natriumhydrid und, nach 15 Minuten Rühren, 1 g (2,6 mmol) 2-Chlor-5-(3-chlor-5-trifluormethylpyrid-2-yl)benzylbromid gegeben. Anschließend rührte man 16 Stunden. Danach wurde die Reaktionsmischung eingeengt. Die Reinigung des erhaltenen Rohprodukts erfolgte mittels Kieselgelchromatographie (Eluens: Hexan/Ethylacetat = 1:1). Ausbeute: 0,8 g.

### Beispiel 5

### 2-Chlor-5-(3-chlor-5-trifluormethylpyrid-2-yl)-4-fluorphenoxymethylphosphonsäurediethylester (Nr. Ioγ.3)

Zu einer Lösung von 0,3 g (0,78 mmol) 3-Chlor-2-[4-chlor-2-fluor-5-(methylthiomethoxy)phenyl]-5-trifluormethylpyridin in 10 ml Tetrachlormethan wurden 0,14 g (0,78 mmol) Brom gegeben. Nach 2 Stunden Rühren engte man ein. Der Rückstand wurde mit 20 ml Triethylphosphit versetzt. Anschließend rührte man noch 16 Stunden und entfernte danach überschüssiges Phosphit im Hochvakuum. Ausbeute: 0,2 g.

### Vorstufe 5.1

### 3-Chlor-2-[4-chlor-2-fluor-5-(methylthiomethoxy)phenyl]-5-trifluormethylpyridin

Zu einer Lösung von 1,3 g (4 mmol) 2-Chlor-5-(3-chlor-5-trifluormethylpyrid-2-yl)-4-fluorphenol in 50 ml Dimethylformamid wurden 0,1 g (4,4 mmol) Natriumhydrid gegeben. Nach 1 Stunde Rühren versetzte man die Mischung mit 0,5 g (5,2 mmol) Methylthiomethylchlorid. Anschließend wurde wieder 1 Stunde gerührt. Zur Aufarbeitung versetzte man das Reaktionsgemisch mit 50 ml Wasser. Dann wurde das Produkt mit 100 ml Methyl-tert.-butylether extrahiert. Man trocknete die organische Phase noch über Magnesiumsulfat und engte schließlich ein. Ausbeute: 0,3 g.
¹H-NMR (270 MHz; in CDCl₃) : δ [ppm] = 2,31 (s, 3H), 5,24 (s, 2H), 7,12 (d, 1H), 7,30 (d, 1H), 8,08 (s, 1H), 8,88 (s, 1H).

### Beispiel 6

### 2-Chlor-5-(3-chlor-5-trifluormethylpyrid-2-yl)benzylphosphonsäurediethylester (Nr. Iaα.3)

Eine Lösung von 1 g (2,6 mmol) 2-Chlor-5-(3-chlor-5-trifluormethylpyrid-2-yl)benzylbromid in 10 ml Triethylphosphit wurde 12 Stunden auf 80 bis 90°C erwärmt, wonach man überschüssiges Triethylphosphit im Hochvakuum abdestillierte. Ausbeute: 1,1 g.

### Beispiel 7

### 1-Chlor-2-[2-chlor-5-(3-chlor-5-trifluormethylpyrid-2-yl)-4-fluorphenyl]ethylphosphonsäure (Nr. Icγ.1)

Zu einer Lösung von 0,7 g (1,4 mmol) 1-Chlor-2-[2-chlor-5-(3-chlor-5-trifluormethylpyrid-2-yl)-4-fluorphenyl]ethylphosphonsäurediethylester in 20 ml Acetonitril wurden 0,7 g (4,2 mmol) Kaliumiodid und 0,46 g (4,2 mmol) Chlortrimethylsilan gegeben. Dann erwärmte man 4 Stunden auf 50 bis 60°C, wonach die Mischung eingeengt wurde. Zum Rückstand gab man 20 ml Wasser und 50 ml Ethylacetat. Die organische Phase wurde abgetrennt, über Magnesiumsulfat getrocknet und schließlich eingeengt. Ausbeute: quantitativ.

### Beispiel 8

### 1-Cyano-2-[2-chlor-5-(3-chlor-5-trifluormethylpyrid-2-yl)phenyl]ethylphosphonsäurediethylester (Nr. Ifα.3)

Zu einer auf (-78)°C gekühlten Lösung von 0,69 g (3,89 mmol) Cyanomethylphosphonsäurediethylester in 50 ml Tetrahydrofuran wurden 2,27 ml (3,6 mmol) einer 1,6 M Butyllithium-Lösung in n-Hexan gegeben. Nach 1 Stunde rühren versetzte man die Mischung mit 1 g (2,6 mmol) 2-Chlor-5-(3-chlor-5-trifluormethylpyrid-2-yl)benzylbromid, gelöst in 10 ml Tetrahydrofuran. Anschließend wurde noch 16 Stunden bei ca. 20°C gerührt. Dann engte man ein und versetzte den verbleibenden Rückstand mit 50 ml Ethylacetat. Die produkthaltige organische Phase wurde abgetrennt, mit Wasser und gesättigter wässriger Kochsalzlösung gewaschen, über Magnesiumsulfat getrocknet und schließlich eingeengt. Die Reinigung des Rohprodukts erfolgte mittels Kieselgelchromatographie (Eluens: Hexan/ Ethylacetat = 4:1). Ausbeute: 0,6 g.

### Beispiel 9

### 1-Chlor-2-[2-chlor-5-(3-chlor-5-trifluormethylpyrid-2-yl)phenyl]-vinylphosphonsäurediethylester (Nr. Iiα.3)

Analog Beispiel 2 erhielt man unter Verwendung von 33,7 g (0,13 mol) Trichlormethanphosphonsäurediethylester, 41 ml einer Butyllithiumlösung (1,6 M in n-Hexan; 63 mmol n-Butyllithium) und 8,3 g (26 mmol) 2-Chlor-5-(3-chlor-5-trifluormethylpyrid-2-yl)benzaldehyd 10 g des gewünschten Wertproduktes.

### Beispiel 10

### 1-Chlor-2-[2-chlor-5-(3-chlor-5-trifluormethylpyrid-2-yl)phenyl]-vinylphosphonsäure (Nr. Iiα.1)

Analog Beispiel 7 erhielt man unter Verwendung von 4 g (8,1 mmol) 1-Chlor-2-[2-chlor-5-(3-chlor-5-trifluormethylpyrid-2-yl)phenyl]-vinylphosphonsäurediethylester, 4 g (24 mmol) Kaliumiodid und 2,7 g (24 mmol) Chlortrimethylsilan 3 g des gewünschten Wertproduktes.

### Beispiel 11

### 1-Chlor-2-[2-chlor-5-(3-chlor-5-trifluormethylpyrid-2-yl)phenyl]-vinylphosphonsäurediallylester (Nr. Iiα.32)

Zu einer Lösung von 1 g (2,3 mmol) 1-Chlor-2-[2-chlor-5-(3-chlor-5-trifluormethylpyrid-2-yl)phenyl]-vinylphosphonsäure in 15 ml 1,2-Dichlorethan wurden 0,9 g (7 mmol) Oxalylchlorid gegeben. Anschließend erhitzte man kurz auf Rückflußtemperatur und engte die Reaktionsmischung dann ein. Das so erhaltene Säurechlorid wurde in 50 ml Dichlormethan gelöst. Nach Zugabe von 0,55 g (6,3 mmol) Pyridin und 0,4 g (6,3 mmol) Allylalkohol rührte man noch 16 Stunden. Dann wurde das Gemisch mit Wasser versetzt. Abschließend trennte man die organische Phase ab, trocknete sie über Magnesiumsulfat und engte ein. Das Rohprodukt wurde mittels Kieselgelchromatographie gereinigt (Eluens: Hexan/Ethylacetat = 4:1). Ausbeute: 0,2 g.

In der folgenden Tabelle 2 sind neben den vorstehend beschriebenen noch weitere substituierte 2-Phenylpyridine aufgeführt, die in analoger Weise hergestellt wurden oder herstellbar sind:

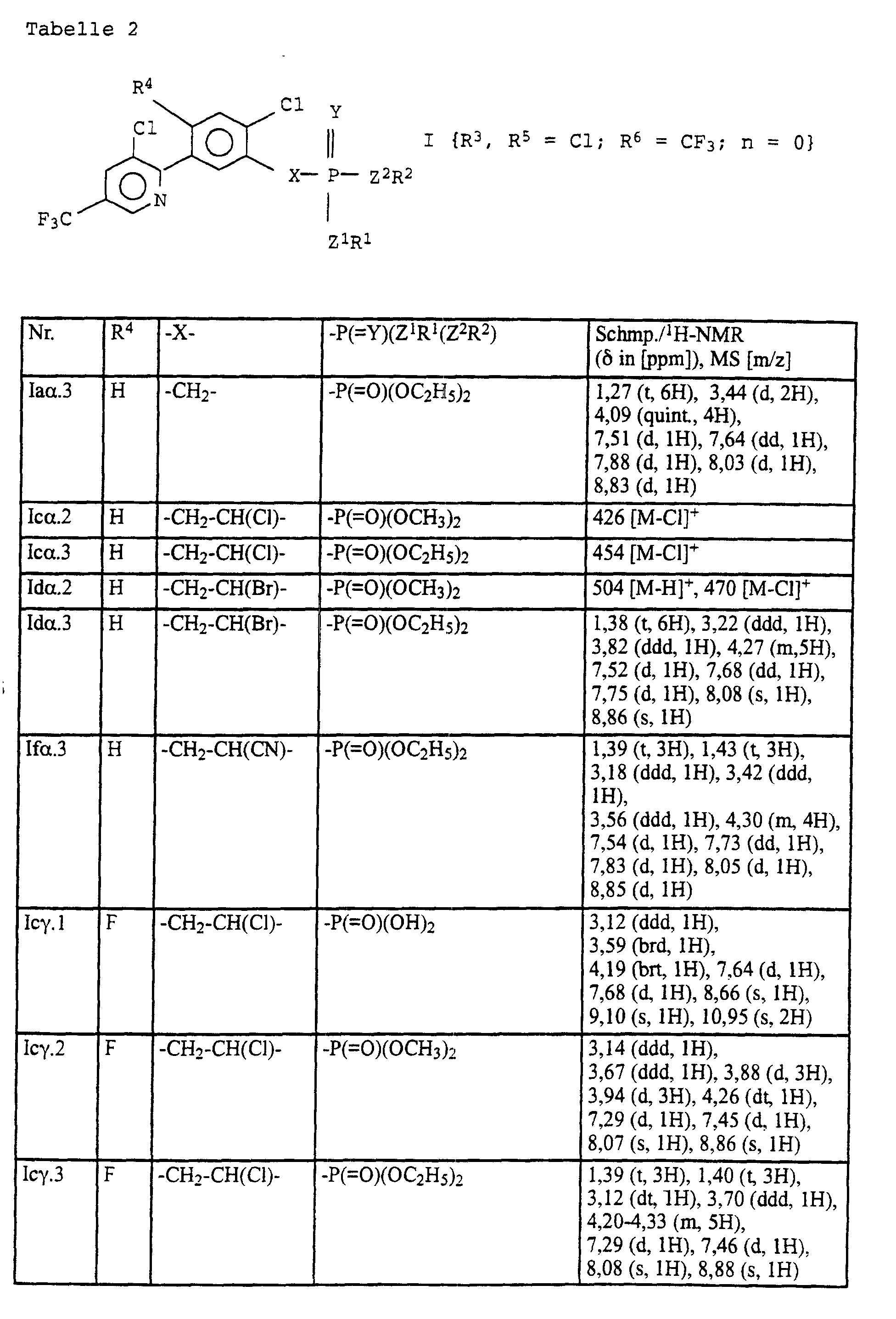

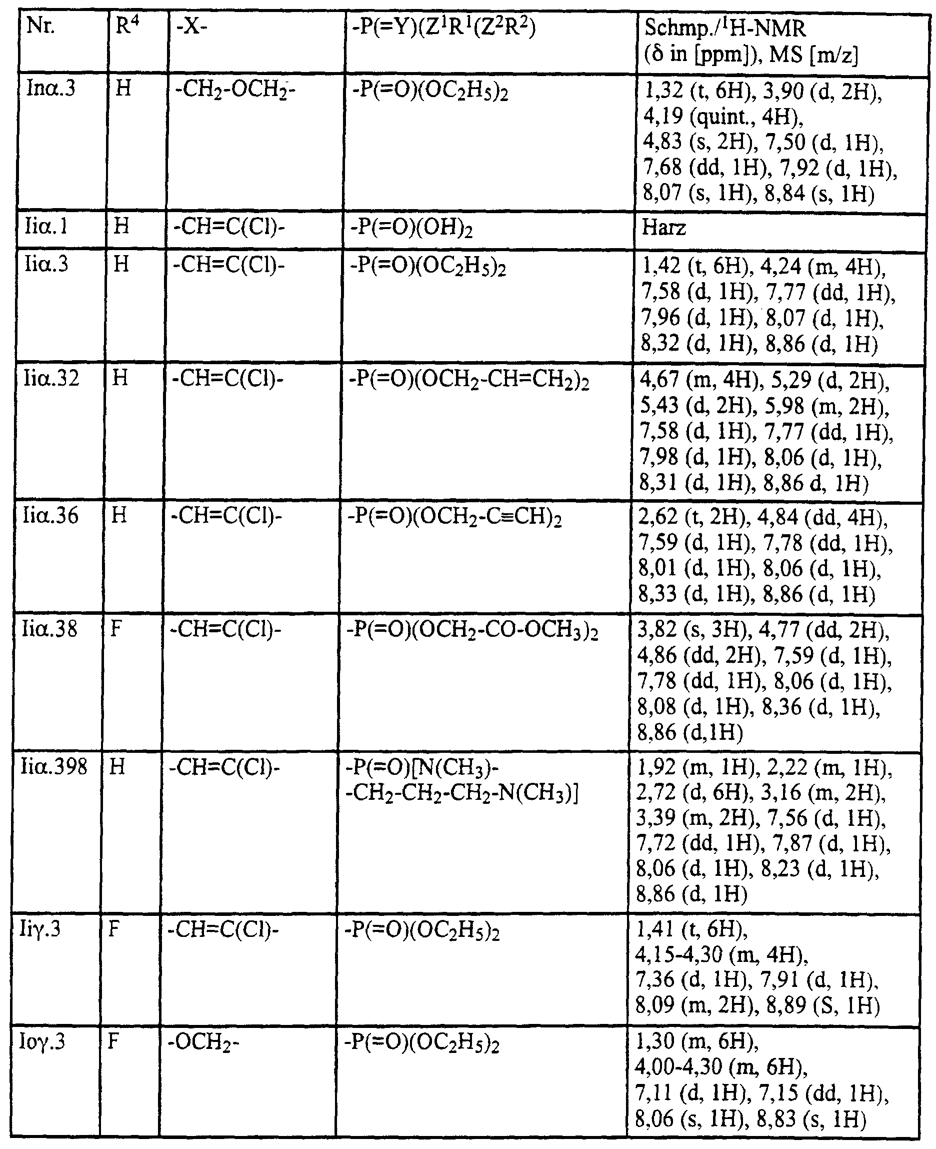

### Anwendungsbeispiele (herbizide Wirksamkeit)

Die herbizide Wirkung der substituierten 2-Phenylpyridine I ließ sich durch die folgenden Gewächshausversuche zeigen:

Als Kulturgefäße dienten Plastikblumentöpfe mit lehmigem Sand mit etwa 3,0 % Humus als Substrat. Die Samen der Testpflanzen wurden nach Arten getrennt eingesät. Bei Vorauflaufbehandlung wurden die in Wasser suspendierten oder emulgierten Wirkstoffe direkt nach Einsaat mittels fein verteilender Düsen aufgebracht. Die Gefäße wurden leicht beregnet, um Keimung und Wachstum zu fördern, und anschließend mit durchsichtigen Plastikhauben abgedeckt, bis die Pflanzen angewachsen waren. Diese Abdeckung bewirkt ein gleichmäßiges Keimen der Testpflanzen, sofern dies nicht durch die Wirkstoffe beeinträchtigt wurde.

Zum Zweck der Nachauflaufbehandlung wurden die Testpflanzen je nach Wuchsform erst bis zu einer Wuchshöhe von 3 bis 15 cm angezogen und erst dann mit den in Wasser suspendierten oder emulgierten Wirkstoffen behandelt. Die Testpflanzen wurden dafür entweder direkt gesät und in den gleichen Gefäßen aufgezogen oder sie wurden erst als Keimpflanzen getrennt angezogen und einige Tage vor der Behandlung in die Versuchsgefäße verpflanzt. Die Aufwandmenge für die Nachauflaufbehandlung betrug 15,6, 7,8, 3,9 oder 1,9 g/ha a.S. (aktive Substanz).

Die Pflanzen wurden artenspezifisch bei Temperaturen von 10 - 25°C bzw. 20 - 35°C gehalten. Die Versuchsperiode erstreckte sich über 2 bis 4 Wochen. Während dieser Zeit wurden die Pflanzen gepflegt, und ihre Reaktion auf die einzelnen Behandlungen wurde ausgewertet.

Bewertet wurde nach einer Skala von 0 bis 100. Dabei bedeutet 100 kein Aufgang der Pflanzen bzw. völlige Zerstörung zumindest der oberirdischen Teile und 0 keine Schädigung oder normaler Wachstumsverlauf.

Die in den Gewächshausversuchen verwendeten Pflanzen setzten sich aus folgenden Arten zusammen:

| Lateinischer Name | Deutscher Name | Englischer Name |
|---|---|---|
| Amaranthus retroflexus | Zurückgekrümmter Fuchsschwanz | redroot pigweed |
| Chenopodium album | Weißer Gänsefuß | lambsquarters (goose foot) |
| Galium aparine | Klettenlabkraut | catchweed bedstraw |
| Ipomoea subspecies | Prunkwindearten | morningglory |
| Polygonum persicaria | Flohknöterich | ladysthumb |
| Solanum nigrum | Schwarzer Nachtschatten | black nightshade |

Bei Aufwandmengen von 3,9 und 1,9 g/ha a.S. zeigte die Verbindung Nr. Icγ.3 im Nachauflaufverfahren eine sehr gute Wirkung gegen die o.g. Pflanzen.

Bei Aufwendungen von 15,6 und 7,8 g/ha a.S. bekämpfte die Verbindung Nr. Icγ.3 Amaranthus retroflexus, Galium aparine, Ipomoea subspecies, Polygonum persicaria und Solanum nigrum wesentlich besser als die aus ACS Symp. Ser. 584, 90 (1995) bekannte Vergleichsverbindung A

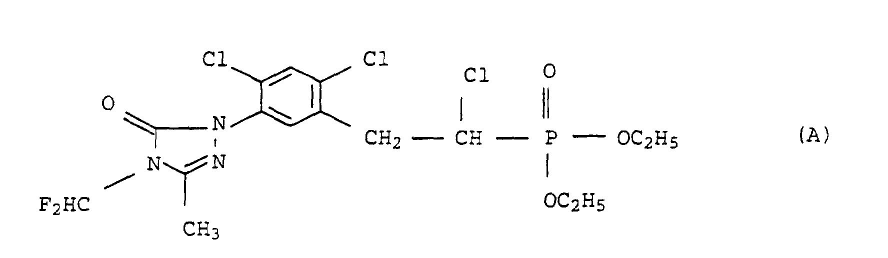

### Anwendungsbeispiele (desikkative/defoliante Wirksamkeit)

Als Testpflanzen dienten junge, 4-blättrige (ohne Keimblätter) Baumwollpflanzen, die unter Gewächshausbedingungen angezogen wurden (rel. Luftfeuchtigkeit 50 bis 70 %; Tag-/Nachttemperatur 27/20°C).

Die jungen Baumwollpflanzen wurden tropfnaß mit wäßrigen Aufbereitungen der Wirkstoffe (unter Zusatz von 0,15 Gew.-% des Fettalkoholalkoxylats Plurafac® LF 700¹⁾, bezogen auf die Spritzbrühe) blattbehandelt. Die ausgebrachte Wassermenge betrug umgerechnet 1000 l/ha. Nach 13 Tagen wurde die Anzahl der abgeworfenen Blätter und der Grad der Entblätterung in % bestimmt.
¹⁾ ein schaumarmes, nichtionisches Tensid der BASF AG

Bei den unbehandelten Kontrollpflanzen trat kein Blattfall auf.

## Patentansprüche

1. Substituierte 2-Phenylpyridine der Formel I 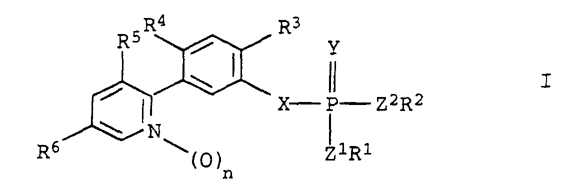 in der die Variablen folgende Bedeutungen haben:
X eine chemische Bindung, 1,2-Ethindiyl oder
- eine Methylen-, 1,2-Ethandiyl- oder 1,3-Propylen-Brücke, die gewünschtenfalls einen Hydroxy-, Amino- oder C₁-C₄-Alkylamino-Substituenten tragen kann;
- Methylenoxymethylen, Methylenthiamethylen, Ethen-1,2-diyl oder
- über das Heteroatom an den Phenylring gebundenes Oxymethylen, Thiamethylen, Oxyethylen oder Thiaethylen, wobei die letzten beiden Ketten gewünschtenfalls am dem Phosphor benachbarten Kohlenstoffatom eine Hydroxy, Amino oder C₁-C₄-Alkylamino tragen kann;
und wobei die letztgenannten 10 Brücken jeweils einen oder zwei der folgenden Substituenten tragen können: Cyano, Carboxy, Halogen, C₁-C₄-Alkyl, C₁-C₄-Halogenalkyl, C₁-C₄-Alkoxy, C₁-C₄-Halogenalkoxy, (C₁-C₄-Alkoxy)carbonyl und/oder Di-(C₁-C₄-alkyl)amino;
Y Sauerstoff oder Schwefel;
Z¹ Sauerstoff, Schwefel oder -N(R⁷)-;
Z² Sauerstoff, Schwefel oder -N(R⁸)-;
R¹, R², R⁷, R⁸ unabhängig voneinander
Wasserstoff, C₁-C₆-Alkyl, C₁-C₆-Halogenalkyl, Hydroxy-C₁-C₄-alkyl, Cyano-C₁-C₄-alkyl, C₁-C₄-Alkoxy-C₁-C₄-alkyl, C₁-C₄-Halogenalkoxy-C₁-C₄-alkyl, C₃-C₄-Alkenyloxy-C₁-C₄-alkyl, C₃-C₄-Alkinyloxy-C₁-C₄-alkyl, C₃-C₈-Cycloalkoxy-C₁-C₄-alkyl, Amino-C₁-C₄-alkyl, C₁-C₄-Alkylamino-C₁-C₄-alkyl, Di-(C₁-C₄-alkyl)amino-C₁-C₄-alkyl, C₁-C₄-Alkylthio-C₁-C₄-alkyl, C₁-C₄-Halogenalkylthio-C₁-C₄-alkyl, C₃-C₄-Alkenylthio-C₁-C₄-alkyl, C₃-C₄-Alkinylthio-C₁-C₄-alkyl, C₁-C₄-Alkylsulfinyl-C₁-C₄-alkyl, C₁-C₄-Halogenalkylsulfinyl-C₁-C₄-alkyl, C₃-C₄-Alkenylsulfinyl-C₁-C₄-alkyl, C₃-C₄-Alkinylsulfinyl-C₁-C₄-alkyl, C₁-C₄-Alkylsulfonyl-C₁-C₄-alkyl, C₁-C₄-Halogenalkylsulfonyl-C₁-C₄-alkyl, C₃-C₄-Alkenylsulfonyl-C₁-C₄-alkyl, C₃-C₄-Alkinylsulfonyl-C₁-C₄-alkyl, C₃-C₆-Alkenyl, C₃-C₆-Halogenalkenyl, Cyano-C₃-C₆-alkenyl, C₃-C₆-Alkinyl, C₃-C₆-Halogenalkinyl, Cyano-C₃-C₆-alkinyl, Hydroxycarbonyl-C₁-C₄-alkyl, (C₁-C₄-Alkoxy)carbonyl-C₁-C₄-alkyl, (C₁-C₄-Alkylthio)carbonyl-C₁-C₄-alkyl, Aminocarbonyl-C₁-C₄-alkyl, (C₁-C₄-Alkyl)aminocarbonyl-C₁-C₄-alkyl, Di- (C₁-C₄-alkyl)aminocarbonyl-C₁-C₄-alkyl,
C₃-C₈-Cycloalkyl, C₃-C₈-Cycloalkyl-C₁-C₄-alkyl, Phenyl, Phenyl-C₁-C₄-alkyl oder
3- bis 7-gliedriges Heterocyclyl oder Heterocyclyl-C₁-C₄-alkyl, wobei alle Heterocyclen gewünschtenfalls ein Carbonyl- oder Thiocarbonyl-Ringglied enthalten können,
und wobei alle Cycloalkyl-, Phenyl- und Heterocyclylringe unsubstituiert sein oder ein bis vier Substituenten tragen können, jeweils ausgewählt aus der Gruppe bestehend aus Halogen, Cyano, Nitro, Amino, Hydroxy, Carboxy, C₁-C₄-Alkyl, C₁-C₄-Halogenalkyl, C₁-C₄-Alkoxy, C₁-C₄-Halogenalkoxy, C₁-C₄-Alkylthio, C₁-C₄-Halogenalkylthio, C₁-C₄-Alkylsulfonyl, C₁-C₄-Halogenalkylsulfonyl, (C₁-C₄-Alkyl)carbonyl, (C₁-C₄-Halogenalkyl)carbonyl, (C₁-C₄-Alkoxy)carbonyl, (C₁-C₄-Alkyl)carbonyloxy, (C₁-C₄-Halogenalkyl)carbonyloxy und Di-(C₁-C₄-alkyl)amino,
oder
R¹ und R² und/oder R¹ und R⁷ und/oder R² und R⁸ bilden jeweils zusammen eine 1,2-Ethandiyl-, 1,3-Propylen-, Tetramethylen-, Pentamethylen- oder Ethylenoxyethylen-Kette, die gewünschtenfalls durch ein bis vier C₁-C₄-Alkyl- und/oder ein oder zwei (C₁-C₄-Alkoxy)carbonylgruppen substituiert sein kann,
oder
R¹ und R² bedeuten zusammen 1,2-Phenylen, das unsubstituiert sein oder ein bis drei Substituenten tragen kann, jeweils ausgewählt aus der Gruppe bestehend aus Cyano, Nitro, Halogen, C₁-C₄-Alkyl, C₁-C₄-Halogenalkyl, C₁-C₄-Alkoxy und C₁-C₄-Halogenalkoxy;
R³ Cyano, Halogen, C₁-C₄-Alkyl, C₁-C₄-Halogenalkyl, C₁-C₄-Alkoxy oder C₁-C₄-Halogenalkoxy;
R⁴, R⁵ jeweils Wasserstoff oder Halogen;
R⁶ Halogen oder C₁-C₄-Halogenalkyl;
n null oder eins;
sowie die landwirtschaftlich brauchbaren Salze der Verbindungen I.

2. Verwendung der substituierten 2-Phenylpyridine der Formel I und ihrer landwirtschaftlich brauchbaren Salze, gemäß Anspruch 1, als Herbizide oder zur Desikkation/Defoliation von Pflanzen.

3. Herbizides Mittel, enthaltend eine herbizid wirksame Menge mindestens eines substituierten 2-Phenylpyridins der Formel I oder eines landwirtschaftlich brauchbaren Salzes von I, gemäß Anspruch 1, und mindestens einen inerten flüssigen und/oder festen Trägerstoff sowie gewünschtenfalls mindestens einen oberflächenaktiven Stoff.

4. Mittel zur Desikkation und/oder Defoliation von Pflanzen, enthaltend eine desikkant und/oder defoliant wirksame Menge mindestens eines substituierten 2-Phenylpyridins der Formel I oder eines landwirtschaftlich brauchbaren Salzes von I, gemäß Anspruch 1, und mindestens einen inerten flüssigen und/oder festen Trägerstoff sowie gewünschtenfalls mindestens einen oberflächenaktiven Stoff.

5. Verfahren zur Herstellung von herbizid wirksamen Mitteln, dadurch gekennzeichnet, daß man eine herbizid wirksame Menge mindestens eines substituierten 2-Phenylpyridins der Formel I oder eines landwirtschaftlich brauchbaren Salzes von I, gemäß Anspruch 1, mit mindestens einem flüssigen und/oder festen Trägerstoff sowie gewünschtenfalls mindestens einem oberflächenaktiven Stoff mischt.

6. Verfahren zur Herstellung von desikkant und/oder defoliant wirksamen Mitteln, dadurch gekennzeichnet, daß man eine desikkant/defoliant wirksame Menge mindestens eines substituierten 2-Phenylpyridins der Formel I oder eines landwirtschaftlich brauchbaren Salzes von I, gemäß Anspruch 1, mit mindestens einem flüssigen und/oder festen Trägerstoff und gewünschtenfalls mindestens einem oberflächenaktiven Stoff mischt.

7. Verfahren zur Bekämpfung von unerwünschtem Pflanzenwuchs, dadurch gekennzeichnet, daß man eine herbizid wirksame Menge mindestens eines substituierten 2-Phenylpyridins der Formel I oder eines landwirtschaftlich brauchbaren Salzes von I, gemäß Anspruch 1, auf Pflanzen, deren Lebensraum oder auf Saatgut einwirken läßt.

8. Verfahren zur Desikkation und/oder Defoliation von Pflanzen, dadurch gekennzeichnet, daß man eine desikkant/defoliant wirksame Menge mindestens eines substituierten 2-Phenylpyridins der Formel I oder eines landwirtschaftlich brauchbaren Salzes von I, gemäß Anspruch 1, auf Pflanzen einwirken läßt.

9. Verfahren nach Anspruch 8, dadurch gekennzeichnet, daß man Baumwolle behandelt.

10. Verfahren zur Herstellung von substituierten 2-Phenylpyridinen der Formel I, bei denen X für -CH₂-CH(Cl)- oder -CH₂-CH(Br)- steht, dadurch gekennzeichnet, daß man 3-Pyridylaniline der Formel II 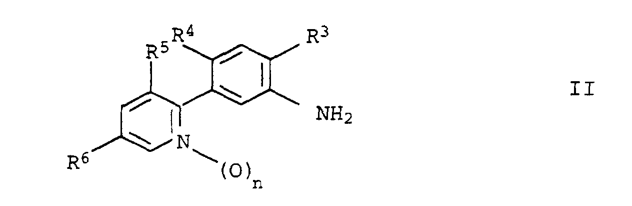 diazotiert und die erhaltenen Diazominium-Kationen in Gegenwart eines Kupfersalzes mit Vinyl- oder Alkinylphosphonsäurederivaten IIIa/IIIb 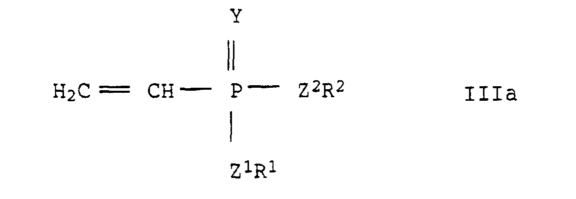 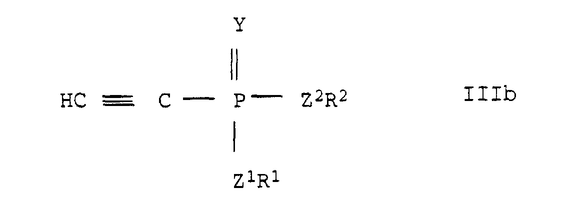 umsetzt.

11. Verfahren zur Herstellung von substituierten 2-Phenylpyridinen der Formel I, bei denen X für -CH=C(CN)- oder -CH=C[CO-O-(C₁-C₄-Alkyl)]- steht, dadurch gekennzeichnet, daß man aromatische Aldehyde der Formel VIa 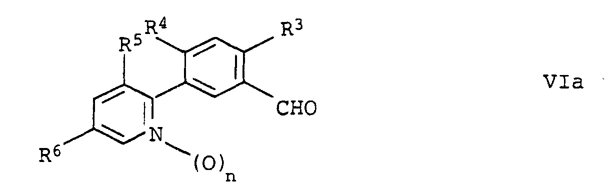 mit Phosphonsäurederivaten VIIa oder VIIb 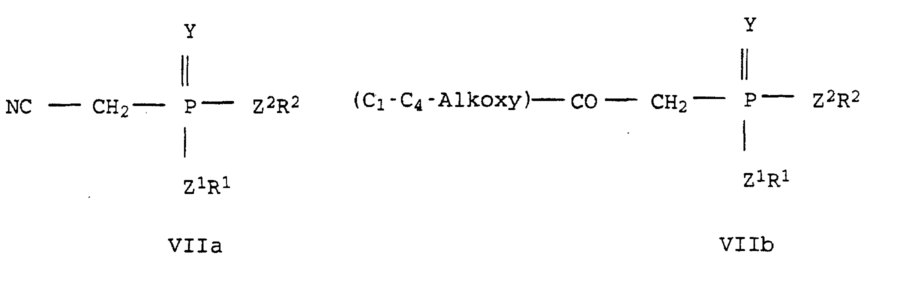 umsetzt.

12. Verfahren zur Herstellung von substituierten 2-Phenylpyridinen der Formel I, bei denen X für -CH=CH-, -CH=C(Halogen)oder -CH=C(C₁-C₄-Alkyl)- steht, dadurch gekennzeichnet, daß man Aldehyde der Formel VIa mit Anionen VIIIa, VIIIb oder VIIIc 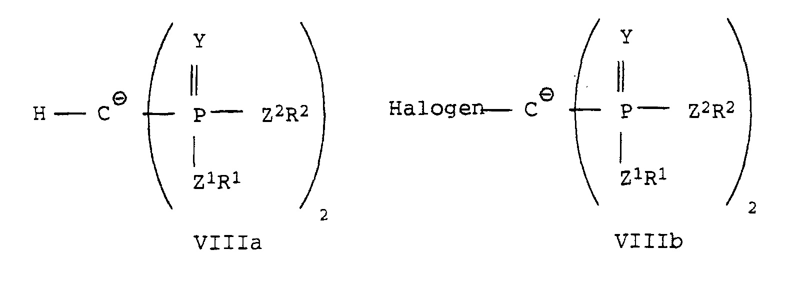 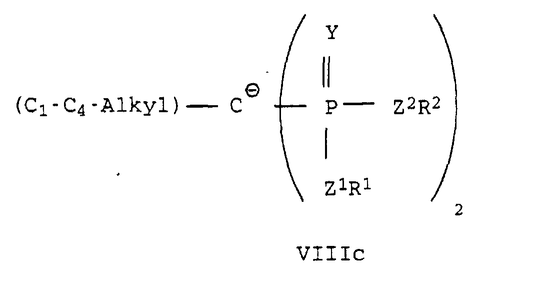 umsetzt.

13. Verfahren zur Herstellung von substituierten 2-Phenylpyridinen der Formel I, bei denen X für -CH₂-CH(CN)- oder -CH₂-CH[CO-O-(C₁-C₄-Alkyl)]- steht, dadurch gekennzeichnet, daß man Phosphonsäurederivate XVIa oder XVIb 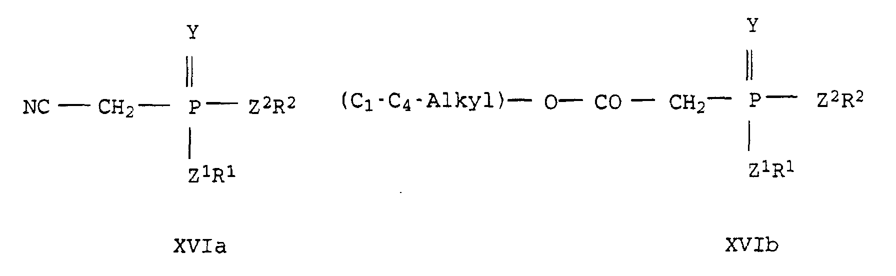 in Gegenwart einer starken Base mit 3-Pyridylbenzylhalogeniden der Formel XVII 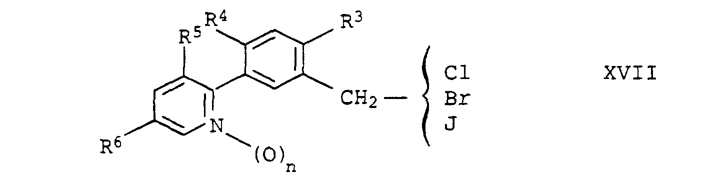 umsetzt.

14. Verfahren zur Herstellung von substituierten 2-Phenylpyridinen der Formel I, bei denen X für Methylen und Y für Sauerstoff stehen, dadurch gekennzeichnet, daß man 3-Pyridylbenzylhalogenide der Formel XVII 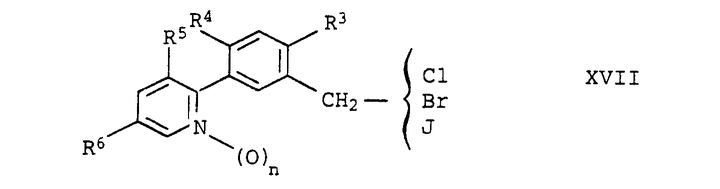 mit Trialkylphosphiten XII 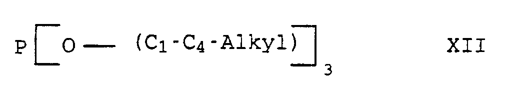 umsetzt.

15. Verfahren zur Herstellung von substituierten 2-Phenylpyridinen der Formel I, bei denen X für -CH₂-O-CH₂- steht, dadurch gekennzeichnet, daß man 3-Pyridylbenzylhalogenide der Formel XVII 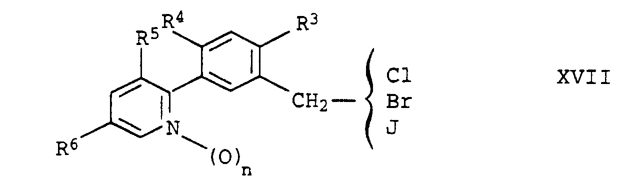 in Gegenwart einer Base mit Phosphonsäurederivaten XXIIa 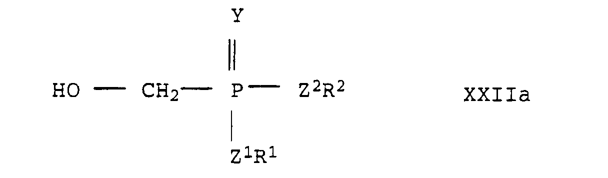 umsetzt.

16. Verfahren zur Herstellung von substituierten 2-Phenylpyridinen der Formel I, bei denen X für -O-CH₂- und Y, Z¹ und Z² jeweils für Sauerstoff stehen, dadurch gekennzeichnet, daß man Phenole der Formel XXa 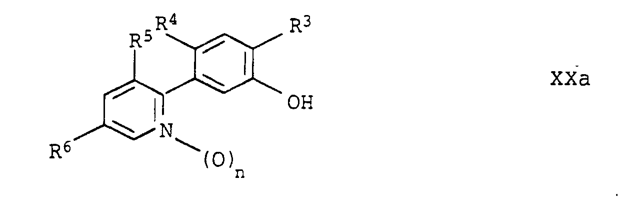 in Gegenwart einer Base mit Halogenmethylthioethern XXIIa 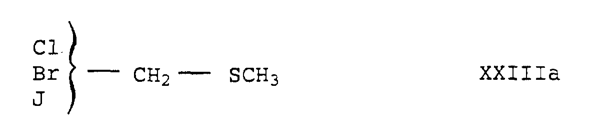 umsetzt, die Umsetzungsprodukte XXIVa 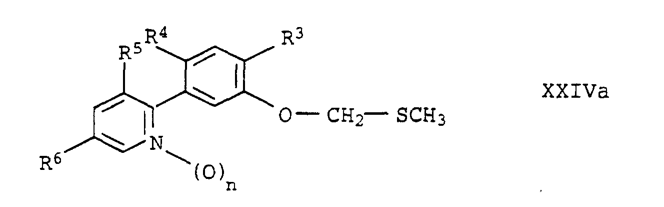 mit einem Halogen spaltet und die Spaltprodukte XXVa 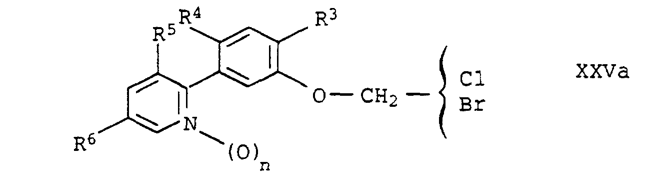 schließlich mit Trialkylphosphiten XII 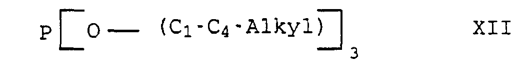 zusammen einer Arbuzov-Reaktion unterwirft.

17. Verfahren zur Herstellung von substituierten 2-Phenylpyridinen der Formel I, bei denen X für -CH=C(C1)- steht, dadurch gekennzeichnet, daß man Aldehyde der Formel VIa 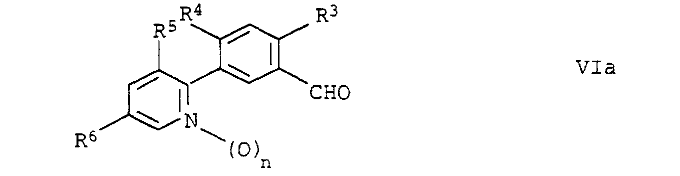 in Gegenwart einer Alkyllithiumverbindung XXVII
(C₁-C₄-Alkyl)-Li XXVII
mit Trichlormethanphosphonsäurederivaten XXVI 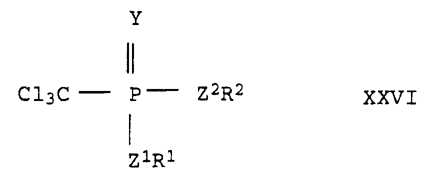 umsetzt.

18. Verfahren zur Herstellung von substituierten 2-Phenylpyridinen der Formel I, bei denen Y, Z¹ und Z² für Sauerstoff und R¹ und R² für Wasserstoff stehen, dadurch gekennzeichnet, daß man Verbindungen der Formel I, bei denen Y, Z¹ und Z² jeweils Sauerstoff und R¹ und R² jeweils C₁-C₆-Alkyl bedeuten, entweder mit einer Halogenwasserstoffsäure hydrolysiert, oder zunächst mit einem Tri-(C₁-C₄-Alkyl)silylhalogenid umsetzt und dann mit Wasser hydrolysiert.

19. Verfahren zur Herstellung von substituierten 2-Phenylpyridinen der Formel I, bei denen Y für Sauerstoff steht, dadurch gekennzeichnet, daß man Verbindungen der Formel I, wobei Y, Z¹ und Z² Sauerstoff und R¹ und R² Wasserstoff bedeuten, chloriert und die Produkte anschließend mit Nucleophilen HZ¹R¹ und/oder HZ²R² umsetzt.

## Claims

1. A substituted 2-phenylpyridine of the formula I 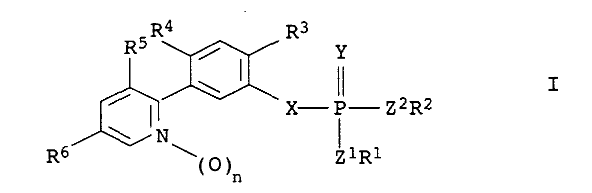 where the variables have the following meanings:
X is a chemical bond, 1,2-ethynediyl or
- a methylene, 1,2-ethanediyl or 1,3-propylene bridge, which, if desired, can have attached to it a hydroxyl, amino or C₁-C₄-alkylamino substituent;
- methyleneoxymethylene, methylenethiamethylene, ethene-1,2-diyl or
- oxymethylene, thiamethylene, oxyethylene or thiaethylene, bonded to the phenyl ring via the hetero atom, it being possible, if desired, for the last two chains to have a hydroxyl, amino or C₁-C₄-alkylamino attached to the carbon atom adjacent to the phosphorous;
and it being possible for each of the last-mentioned 10 bridges to have attached to it one or two of the following substituents: cyano, carboxyl, halogen, C₁-C₄-alkyl, C₁-C₄-haloalkyl, C₁-C₄-alkoxy, C₁-C₄-haloalkoxy, (C₁-C₄-alkoxy)carbonyl and/or di-(C₁-C₄-alkyl)amino;
Y is oxygen or sulfur;
Z¹ is oxygen, sulfur or -N(R⁷)-;
Z² is oxygen, sulfur or -N(R⁸)-;
R¹, R², R⁷ and R⁸ independently of one another are hydrogen, C₁-C₆-alkyl, C₁-C₆-haloalkyl, hydroxy-C₁-C₄-alkyl, cyano-C₁-C₄-alkyl, C₁-C₄-alkoxy-C₁-C₄-alkyl, C₁-C₄-haloalkoxy-C₁-C₄-alkyl, C₃-C₄-alkenyloxy-C₁-C₄-alkyl, C₃-C₄-alkynyloxy-C₁-C₄-alkyl, C₃-C₈-cycloalkoxy-C₁-C₄-alkyl, amino-C₁-C₄-alkyl, C₁-C₄-alkylamino-C₁-C₄-alkyl, di(C₁-C₄-alkyl)amino-C₁-C₄-alkyl, C₁-C₄-alkylthio-C₁-C₄-alkyl, C₁-C₄-haloalkylthio-C₁-C₄-alkyl, C₃-C₄-alkenylthio-C₁-C₄-alkyl, C₃-C₄-alkynylthio-C₁-C₄-alkyl, C₁-C₄-alkylsulfinyl-C₁-C₄-alkyl, C₁-C₄-haloalkylsulfinyl-C₁-C₄-alkyl, C₃-C₄-alkenylsulfinyl-C₁-C₄-alkyl, C₃-C₄-alkynylsulfinyl-C₁-C₄-alkyl, C₁-C₄-alkylsulfonyl-C₁-C₄-alkyl, C₁-C₄-haloalkylsulfonyl-C₁-C₄-alkyl, C₃-C₄-alkenylsulfonyl-C₁-C₄-alkyl, C₃-C₄-alkynylsulfonyl-C₁-C₄-alkyl, C₃-C₆-alkenyl, C₃-C₆-haloalkenyl, cyano-C₃-C₆-alkenyl, C₃-C₆-alkynyl, C₃-C₆-haloalkynyl, cyano-C₃-C₆-alkynyl, hydroxycarbonyl-C₁-C₄-alkyl, (C₁-C₄-alkoxy)carbonyl-C₁-C₄-alkyl, (C₁-C₄-alkylthio)carbonyl-C₁-C₄-alkyl, aminocarbonyl-C₁-C₄-alkyl, (C₁-C₄-alkyl)aminocarbonyl-C₁-C₄-alkyl, di(C₁-C₄-alkyl)aminocarbonyl-C₁-C₄-alkyl,
C₃-C₈-cycloalkyl, C₃-C₈-cycloalkyl-C₁-C₄-alkyl, phenyl,
phenyl-C₁-C₄-alkyl or
3- to 7-membered heterocyclyl or heterocyclyl-C₁-C₄-alkyl, it being possible, if desired, for all heterocycles to contain a carbonyl or thiocarbonyl ring member,
and it being possible for all cycloalkyl, phenyl and heterocyclyl rings to be unsubstituted or to have attached to them one to four substituents, in each case selected from the group consisting of halogen, cyano, nitro, amino, hydroxyl, carboxyl, C₁-C₄-alkyl, C₁-C₄-haloalkyl, C₁-C₄-alkoxy, C₁-C₄-haloalkoxy, C₁-C₄-alkylthio, C₁-C₄-haloalkylthio, C₁-C₄-alkylsulfonyl, C₁-C₄-haloalkylsulfonyl, (C₁-C₄-alkyl)carbonyl, (C₁-C₄-haloalkyl)carbonyl, (C₁-C₄-alkoxy)carbonyl, (C₁-C₄-alkyl)carbonyloxy, (C₁-C₄-haloalkyl)carbonyloxy and di(C₁-C₄-alkyl)amino,
or
R¹ and R² and/or R¹ and R⁷ and/or R² and R⁸ in each case together form a 1,2-ethanediyl, 1,3-propylene, tetramethylene, pentamethylene or ethyleneoxyethylene chain which, if desired, can be substituted by one to four C₁-C₄-alkyl and/or one or two (C₁-C₄-alkoxy)carbonyl groups,
or
R¹ and R² together are 1,2-phenylene which can be unsubstituted or have attached to it one to three substituents, in each case selected from the group consisting of cyano, nitro, halogen, C₁-C₄-alkyl, C₁-C₄-haloalkyl, C₁-C₄-alkoxy and C₁-C₄-haloalkoxy;
R³ is cyano, halogen, C₁-C₄-alkyl, C₁-C₄-haloalkyl, C₁-C₄-alkoxy or C₁-C₄-haloalkoxy;
R⁴, R⁵ in each case are hydrogen or halogen;
R⁶ is halogen or C₁-C₄-haloalkyl;
n is zero or one;
or an agriculturally useful salt of a compound I.

2. The use of the substituted 2-phenylpyridines of the formula I and of the agriculturally useful salts thereof, as claimed in claim 1, as herbicides or for the desiccation/defoliation of plants.

3. A herbicidal composition comprising a herbicidally active amount of at least one substituted 2-phenylpyridine of the formula I or of an agriculturally useful salt of I, as claimed in claim 1, and at least one inert liquid and/or solid carrier and, if desired, at least one surfactant.

4. A composition for the desiccation and/or defoliation of plants comprising such an amount of at least one substituted 2-phenylpyridine of the formula I or of an agriculturally useful salt of I, as claimed in claim 1, that it acts as a desiccant and/or defoliant, and at least one inert liquid and/or solid carrier and, if desired, at least one surfactant.

5. A process for the preparation of herbicidally active compositions, which comprises mixing a herbicidally active amount of at least one substituted 2-phenylpyridine of the formula I or of an agriculturally useful salt of I, as claimed in claim 1, and at least one liquid and/or solid carrier and, if desired, at least one surfactant.

6. A process for the preparation of compositions which act as desiccants and/or defoliants, which comprises mixing such an amount of at least one substituted 2-phenylpyridine of the formula I or of an agriculturally useful salt of I, as claimed in claim 1, that it acts as a desiccant/defoliant, and at least one liquid and/or solid carrier and, if desired, at least one surfactant.

7. A method of controlling undesirable vegetation, which comprises allowing a herbicidally active amount of at least one substituted 2-phenylpyridine of the formula I or of an agriculturally useful salt of I, as claimed in claim 1, to act on plants, their environment, or on seed.

8. A method for the desiccation and/or defoliation of plants, which comprises allowing such an amount of at least one substituted 2-phenylpyridine of the formula I or of an agriculturally useful salt of I, as claimed in claim 1, to act on plants that it acts as a desiccant/defoliant.

9. A method as claimed in claim 8, wherein cotton is treated.

10. A process for the preparation of substituted 2-phenylpyridines of the formula I where X is -CH₂-CH(Cl)- or -CH₂-CH(Br)-, which comprises diazotizing 3-pyridylanilines of the formula II 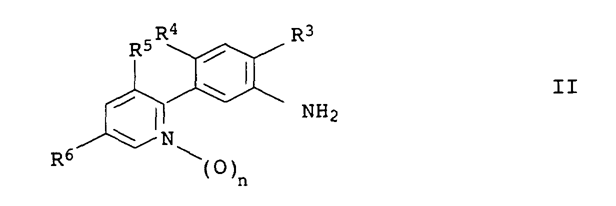 and reacting the resulting diazonium cations in the presence of a copper salt with vinyl- or alkynylphosphonic acid derivatives IIIa/IIIb

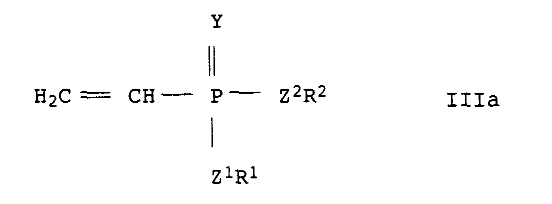

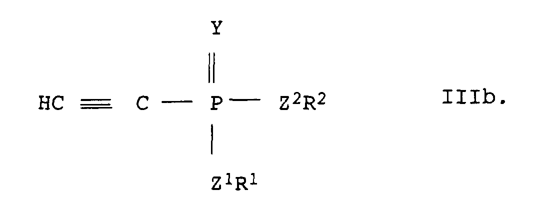

11. A process for the preparation of substituted 2-phenylpyridines of the formula I where X is -CH=C(CN)- or -CH=C[CO-O-(C₁-C₄-alkyl)]-, which comprises reacting aromatic aldehydes of the formula VIa 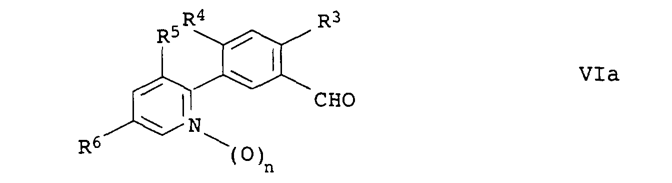 with phosphonic acid derivatives VIIa or VIIb

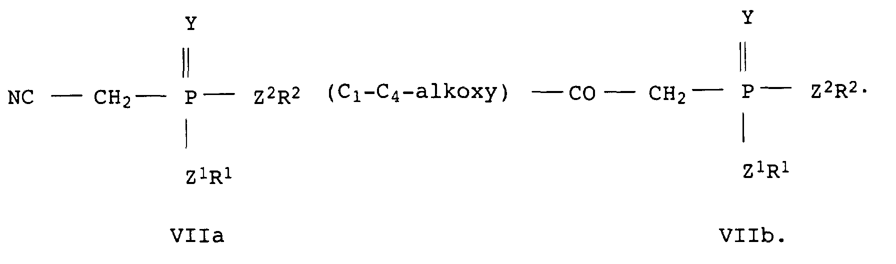

12. A process for the preparation of substituted 2-phenylpyridines of the formula I where X is -CH=CH-, -CH=C(halogen)- or -CH=C(C₁-C₄-alkyl)-, which comprises reacting aldehydes of the formula VIa with anions VIIIa, VIIIb or VIIIc

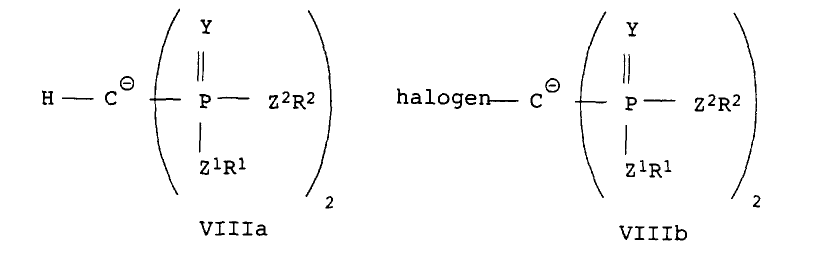

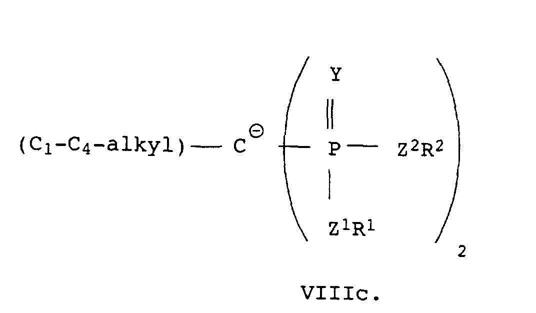

13. A process for the preparation of substituted 2-phenylpyridines of the formula I where X is -CH₂-CH(CN)- or -CH₂-CH[CO-O-(C₁-C₄-alkyl)]-, which comprises reacting phosphonic acid derivatives XVIa or XVIb 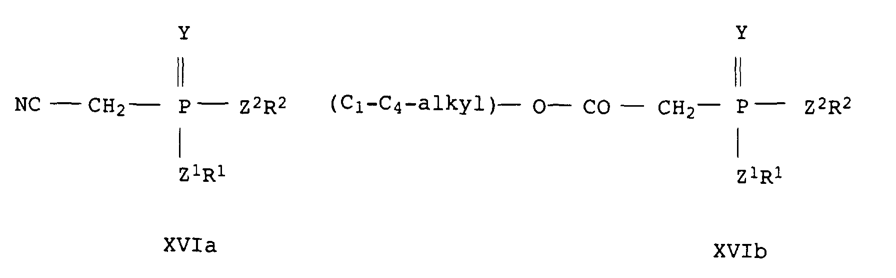 with 3-pyridylbenzyl halides of the formula XVII 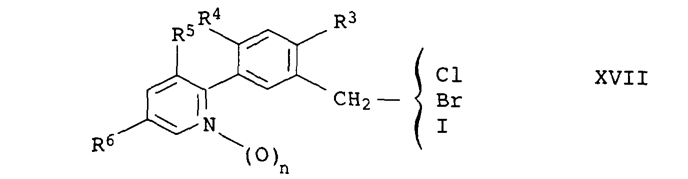 in the presence of a strong base.

14. A process for the preparation of substituted 2-phenylpyridines of the formula I where X is methylene and Y is oxygen, which comprises reacting 3-pyridylbenzyl halides of the formula XVII 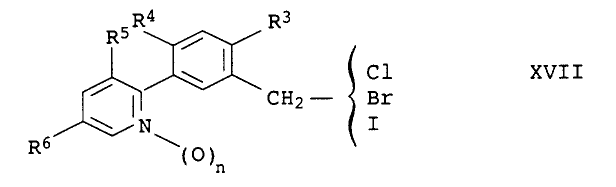 with trialkyl phosphites XII

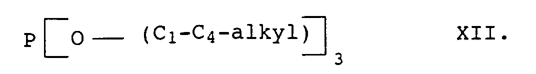

15. A process for the preparation of substituted 2-phenylpyridines of the formula I where X is -CH₂-O-CH₂-, which comprises reacting 3-pyridylbenzyl halides of the formula XVII 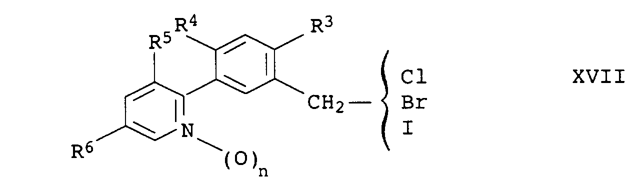 with phosphonic acid derivatives XXIIa 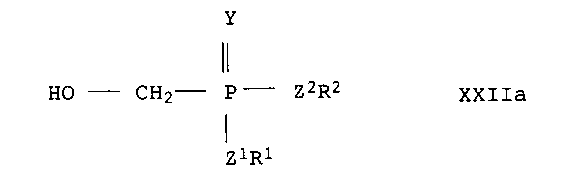 in the presence of a base.

16. A process for the preparation of substituted 2-phenylpyridines of the formula I where X is -O-CH₂- and Y, Z¹ and Z² are in each case oxygen, which comprises reacting phenols of the formula XXa 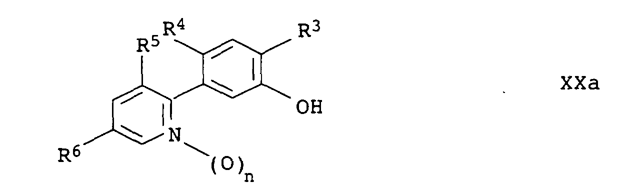 with halomethyl thioethers XXIIa 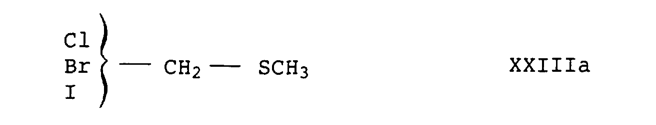 in the presence of a base, cleaving the reaction products XXIVa 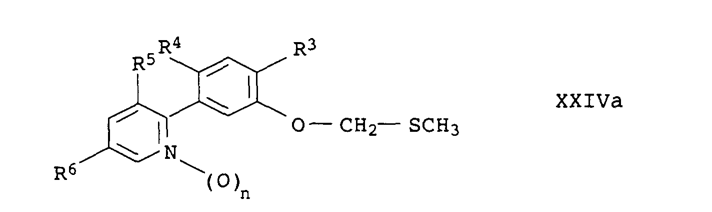 with a halogen and finally subjecting the cleavage products XXVa 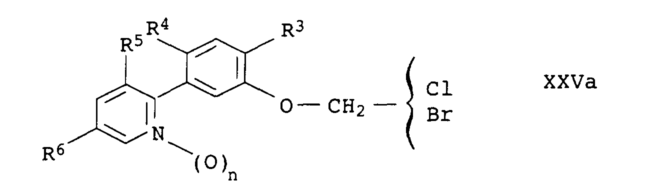 together with trialkyl phosphites XII 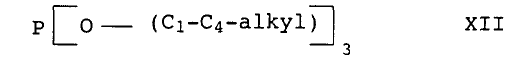 to an Arbuzov reaction.

17. A process for the preparation of substituted 2-phenylpyridines of the formula I where X is -CH=C(Cl)-, which comprises reacting aldehydes of the formula VIa 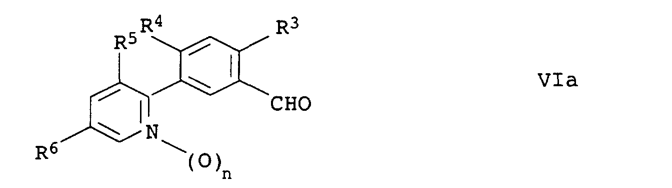 with trichloromethanephosphonic acid derivatives XXVI 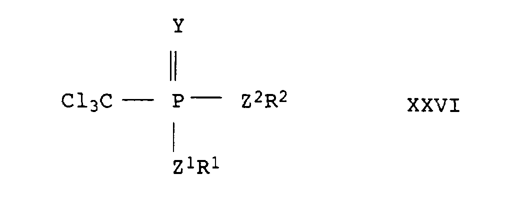 in the presence of an alkyllithium compound XXVII
(C₁-C₄-alkyl)-Li XXVII.

18. A process for the preparation of substituted 2-phenylpyridines of the formula I where Y, Z¹ and Z² are oxygen and R¹ and R² are hydrogen, which comprises either hydrolyzing compounds of the formula I where Y, Z¹ and Z² are in each case oxygen and R¹ and R² are in each case C₁-C₆-alkyl with a hydrohalic acid or first reacting compounds of the formula I where Y, Z¹ and Z² are in each case oxygen and R¹ and R² are in each case C₁-C₆-alkyl with a tri(C₁-C₄-alkyl)silyl halide and then hydrolyzing the product with water.

19. A process for the preparation of substituted 2-phenylpyridines of the formula I where Y is oxygen, which comprises chlorinating compounds of the formula I, where Y, Z¹ and Z² are oxygen and R¹ and R² are hydrogen and subsequently reacting the products with nucleophiles HZ¹R¹ and/or HZ²R².

## Revendications

1. 2-phénylpyridines substituées de formule I 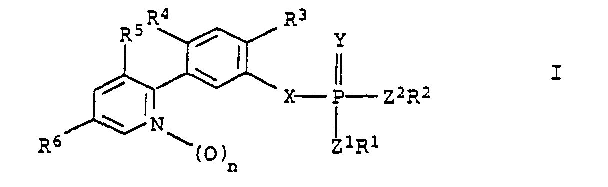 dans laquelle les symboles ont les significations suivantes :
X : une liaison chimique, un groupe 1,2-éthynediyle ou bien
- un pont méthylène, 1,2-éthanediyle ou 1,3-propylène qui peut porter le cas échéant un substituant hydroxy, amino ou alkylamino en C1-C4 ;
- méthylène-oxyméthylène, méthylène-thiaméthylène, éthène-1,2-diyle ou bien
- un groupe oxyméthylène, thiaméthylène, oxyéthylène ou thiaéthylène relié au cycle phényle par l'intermédiaire de l'hétéroatome, les deux chaînes mentionnées en dernier pouvant le cas échéant porter un groupe hydroxy, amino ou alkylamino en C1-C4 sur l'atome de carbone voisin du phosphore ;
les dix ponts mentionnés en dernier pouvant porter chacun un ou deux des substituants suivants :
cyano, carboxy, halogéno, alkyle en C1-C4, halogénoalkyle en C1-C4, alcoxy en C1-C4, halogénoalcoxy en C1-C4, (alcoxy en C1-C4)carbonyle et/ou di-(alkyle en C1-C4)amino ;
Y : l'oxygène ou le soufre ;
Z¹: l'oxygène, le soufre ou un groupe -N(R⁷)- ;
Z² : l'oxygène, le soufre ou un groupe -N(R⁸)- ;
R¹, R², R⁷, R⁸, indépendamment les uns des autres :
l'hydrogène, des groupes alkyle en C1-C6, halogénoalkyle en C1-C6, hydroxyalkyle en C1-C4, cyano-alkyle en C1-C4, (alcoxy en C1-C4)alkyle en C1-C4, (halogénoalcoxy en C1-C4)alkyle en C1-C4, (alcényloxy en C3-C4)alkyle en C1-C4, (alcynyloxy en C3-C4)alkyle en C1-C4, (cycloalcoxy en C1-C3)alkyle en C1-C4, aminoalkyle en C1-C4, (alkylamino en C1-C4)alkyle en C1-C4, di-(alkyle en C1-C4)amino-alkyle en C1-C4, (alkylthio en C1-C4)alkyle en C1-C4, (halogénoalkylthio en C1-C4)alkyle en C1-C4, (alcényle en C3-C4)thioalkyle en C1-C4), (alcynyle en C3-C4)thioalkyle en C1-C4, (alkylsulfinyle en C1-C4)alkyle en C1-C4, (halogénoalkylsulfinyle en C1-C4)alkyle en C1-C4, (alcénylsulfinyle en C3-C4)alkyle en C1-C4), (alcynylsulfinyle en C3-C4)alkyle en C1-C4, (alkylsulfonyle en C1-C4)alkyle en C1-C4, (halogénoalkylsulfonyle en C1-C4)alkyle en C1-C4, (alcénylsulfonyle en C3-C4)alkyle en C1-C4, (alcynylsulfonyle en C3-C4)alkyle en C1-C4, alcényle en C3-C6, halogénoalcényle en C3-C6, cyano-alcényle en C3-C6, alcynyle en C3-C6, halogénoalcynyle en C3-C6, cyano-alcynyle en C3-C6, hydroxycarbonylalkyle en C1-C4, (alcoxy en Cl-C4)carbonyl-alkyle en C1-C4, (alkylthio en C1-C4)carbonylalkyle en C1-C4, aminocarbonyl-alkyle en C1-C4, (alkyle en C1-C4)aminocarbonyl-alkyle en C1-C4, di-(alkyle en C1-C4)aminocarbonyl-alkyle en C1-C4,
cycloalkyle en C3-C8, (cycloalkyle en C3-C8)alkyle en C1-C4, phényle, phényl-alkyle en C1-C4 ou bien
hétérocyclyle de trois à sept chaînons ou hétérocyclyl-alkyle en C1-C4, tous les hétérocycles pouvant contenir le cas échéant un chaînon carbonyle ou thiocarbonyle,
tous les cycles cycloalkyle, phényle et hétérocycle pouvant être non substitués ou pouvant porter un à quatre substituants choisis parmi les halogènes, les groupes cyano, nitro, amino, hydroxy, carboxy, alkyle en C1-C4, halogénoalkyle en C1-C4, alcoxy en C1-C4, halogénoalcoxy en C1-C4, alkylthio en C1-C4, halogénoalkylthio en C1-C4, alkylsulfonyle en C1-C4, halogénoalkylsulfonyle en C1-C4, (alkyle en C1-C4)carbonyle, (halogénoalkyle en C1-C4)carbonyle, (alcoxy en C1-C4)carbonyle, (alkyle en C1-C4)carbonyloxy, (halogénoalkyle en C1-C4)carbonyloxy et di-(alkyle en C1-C4)amino,
ou bien
R¹ et R² et/ou R¹ et R⁷ et/ou R² et R⁸ forment ensemble, respectivement, une chaîne 1,2-éthanediyle, 1,3-propylène, tétraméthylène, pentaméthylène ou éthylène-oxyéthylène qui peut le cas échéant porter un à quatre substituants alkyle en C1-C4 et/ou un ou deux substituants (alcoxy en C1-C4)carbonyle,
ou bien
R¹ et R² représentent ensemble un groupe 1,2-phénylène qui peut être non substitué ou peut porter un à trois substituants choisis parmi les groupes cyano, nitro, les halogènes, les groupes alkyle en C1-C4, halogénoalkyle en C1-C4, alcoxy en C1-C4 et halogénoalcoxy en C1-C4 ;
R³ représente un groupe cyano, un halogène, un groupe alkyle en C1-C4, halogénoalkyle en C1-C4, alcoxy en C1-C4 ou halogénoalcoxy en C1-C4 ;
R⁴ et R⁵ représentent chacun l'hydrogène ou un halogène ;
R⁶ représente un halogène ou un groupe halogénoalkyle en C1-C4 ;
n est égal à 0 ou 1 ;
ainsi que les sels des composés I convenant pour les applications agricoles.

2. Utilisation des 2-phénylpyridines substituées de formule I et de leurs sels aptes aux applications agricoles selon la revendication 1 en tant qu'herbicides et/ou pour la dessiccation/défoliation de végétaux.

3. Produit herbicide contenant une quantité herbicide efficace d'au moins une 2-phénylpyridine substituée de formule I ou d'un sel de I apte aux applications agricoles selon la revendication 1 et au moins un véhicule inerte liquide et/ou solide ainsi que, le cas échéant, au moins une substance tensio-active.

4. Produit pour la dessiccation et/ou la défoliation de végétaux, contenant une quantité dessiccante et/ou défoliante efficace d'au moins une 2-phénylepyridine substituée de formule I ou d'un sel de I apte aux applications agricoles selon la revendication 1 et au moins un véhicule inerte liquide et/ou solide ainsi que, le cas échéant, au moins une substance tensio-active.

5. Procédé de préparation des produits à activité herbicide, caractérisé par le fait que l'on mélange une quantité herbicide efficace d'au moins une 2-phénylpyridine substituée de formule I ou d'un sel de I apte aux applications agricoles selon la revendication 1 avec au moins un véhicule liquide et/ou solide ainsi que, le cas échéant, au moins une substance tensio-active.

6. Procédé de préparation de produits à activité dessiccante et/ou défoliante, caractérisé par le fait que l'on mélange une quantité dessiccante/défoliante efficace d'au moins une 2-phénylpyridine substituée de formule I ou d'un sel de I apte aux applications agricoles selon la revendication 1 avec au moins un véhicule liquide et/ou solide et le cas échéant au moins une substance tensio-active.

7. Produit pour combattre les croissances de végétaux indésirables, caractérisé par le fait que l'on fait agir une quantité herbicide efficace d'au moins une 2-phénylpyridine substituée de formule I ou d'un sel de I apte aux applications agricoles selon la revendication 1 sur les végétaux, leur habitat ou leurs semences.

8. Procédé pour la dessiccation et/ou la défoliation des végétaux, caractérisé par le fait que l'on fait agir une quantité dessiccante/défoliante efficace d'au moins une 2-phénylpyridine substituée de formule I ou d'un sel de I apte aux applications agricoles selon la revendication 1 sur les végétaux.

9. Procédé selon la revendication 8, caractérisé par le fait que l'on traite le coton.

10. Procédé pour la préparation des 2-phénylpyridines substituées de formule I dans laquelle R représente -CH₂(Cl)- ou -CH₂-CH(Br)-, caractérisé par le fait que l'on diazote des 3-pyridylanilines de formule II 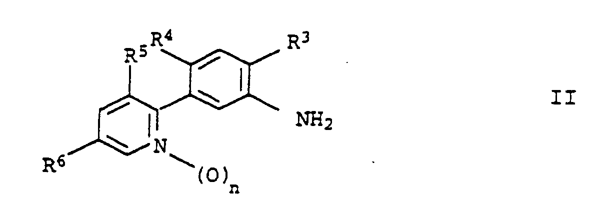 ce qui donne des cations diazominium qu'on fait réagir en présence d'un sel de cuivre avec des dérivés d'acides vinyl- ou alcynylphosphoniques IIIa/IIIb

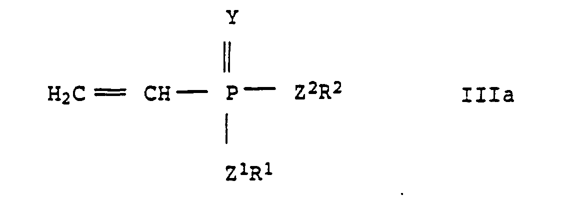

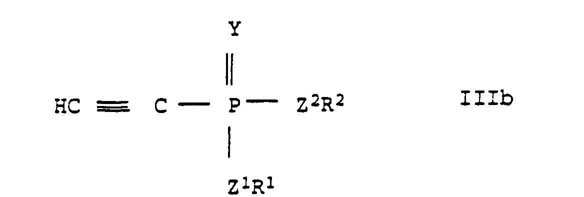

11. Procédé de préparation des 2-phénylpyridines substituées de formule I dans laquelle X représente -CH=C(CN)- ou -CH=C[CO-O-(alkyle en C1-C4)]-, caractérisé par le fait que l'on fait réagir des aldéhydes aromatiques de formule VIa 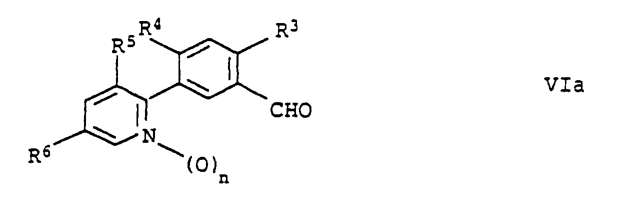 avec des dérivés d'acides phosphoniques VIIa ou VIIb

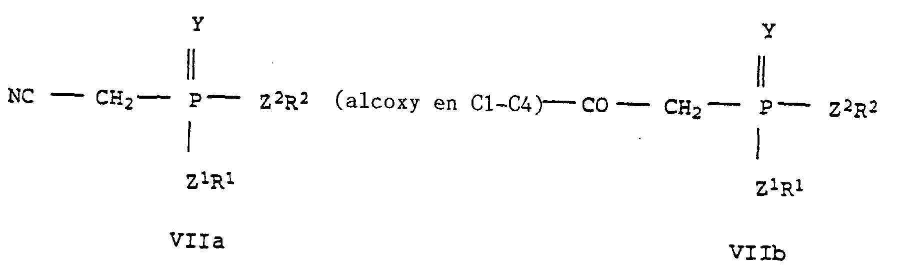

12. Procédé de préparation des 2-phénylpyridines substituées de formule I dans laquelle X représente -CH=CH-, -CH=C(halogéno)- ou -CH=C(alkyle en C1-C4)-, caractérisé par le fait que l'on fait réagir des aldéhydes de formule Via avec des anions VIIIa, VIIIb ou VIIIc

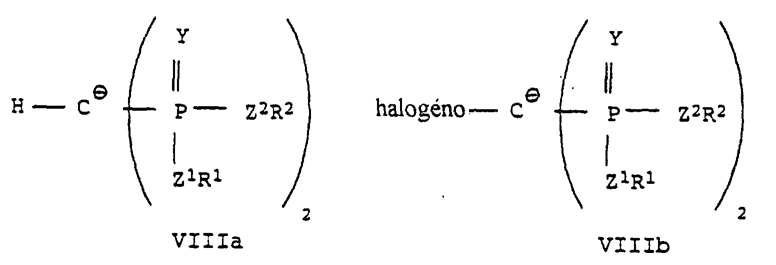

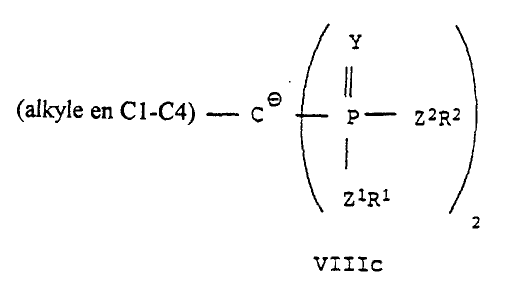

13. Procédé de préparation des 2-phénylpyridines substituées de formule I dans laquelle X représente -CH₂-CH(CN)- ou -CH₂-CH[CO-O-(alkyle en C1-C4))-, caractérisé par le fait que l'on fait réagir des dérivés d'acides phosphoniques XVIa ou XVIb 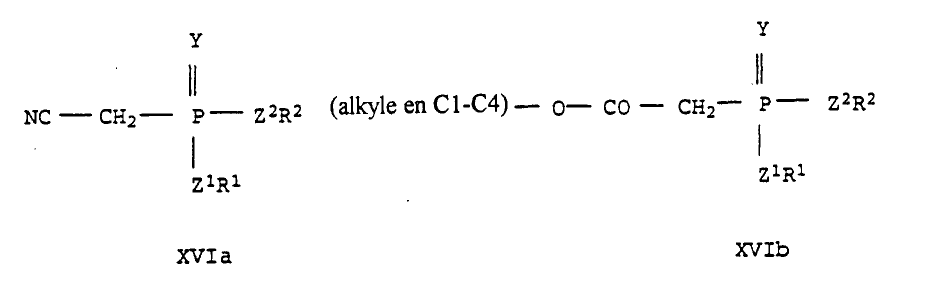 en présence d'une base forte, avec des halogénures de 3-pyridylbenzyle de formule XVII

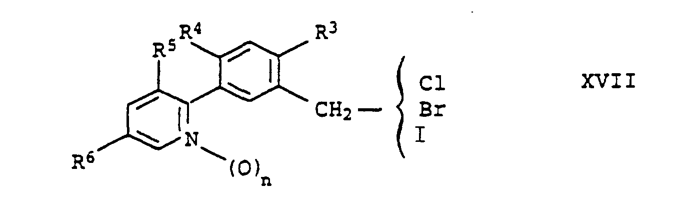

14. Procédé de préparation des 2-phénylpyridines substituées de formule I dans laquelle X représente un groupe méthylène et Y l'oxygène, caractérisé par le fait que l'on fait réagir des halogénures de 3-pyridylbenzyle de formule XVII 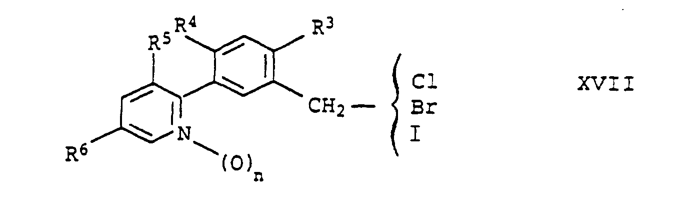 avec des phosphites de trialkyle XII

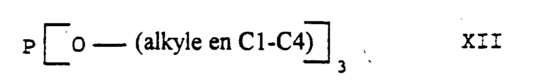

15. Procédé de préparation des 2-phénylpyridines substituées de formule I dans laquelle X représente -CH₂-O-CH₂- caractérisé par le fait que l'on fait réagir des halogénures de 3-pyridylbenzyle de formule XVII 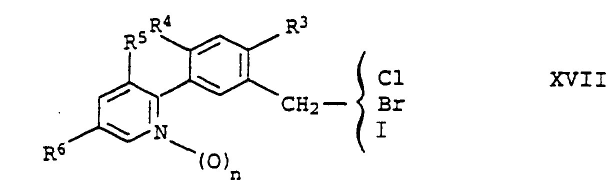 en présence d'une base, avec des dérivés d'acides phosphoniques XXIIa

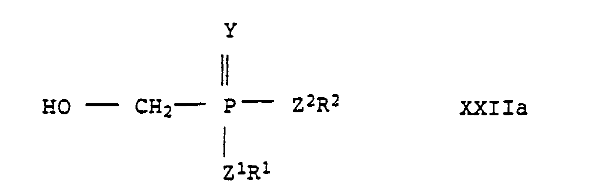

16. Procédé de préparation des 2-phénylpyridines substituées de formule I dans laquelle X représente -O-CH₂- et Y, Z¹ et Z² représentent chacun l'oxygène, caractérisé par le fait que l'on fait réagir des phénols de formule XXa 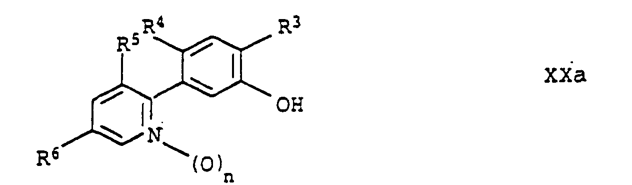 en présence d'une base, avec des thioéthers halogénométhyliques XXIIa 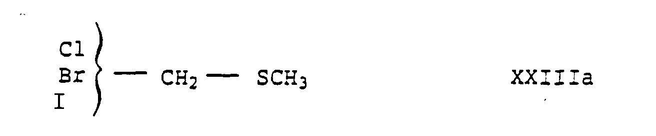 ce qui donne des produits XXIVa 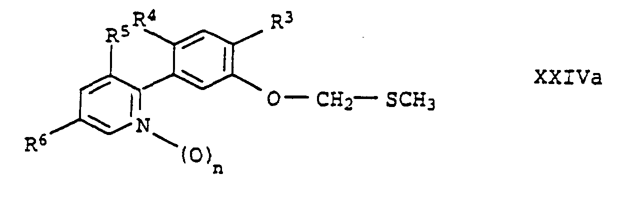 qu'on scinde à l'aide d'un halogène, après quoi on soumet finalement les produits de scission XXVa, 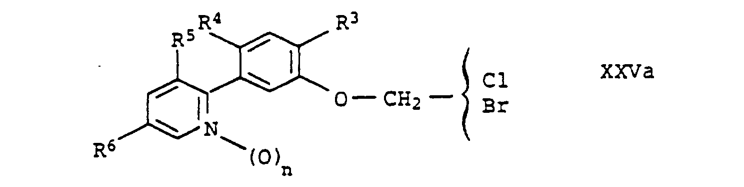 à une réaction d'Arbuzov avec des phosphites de trialkyle XII

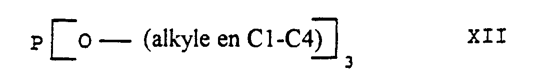

17. Procédé de préparation des 2-phénylpyridines substituées de formule I dans laquelle X représente -CH=C (Cl)-, caractérisé par le fait que l'on fait réagir des aldéhydes de formule VIa 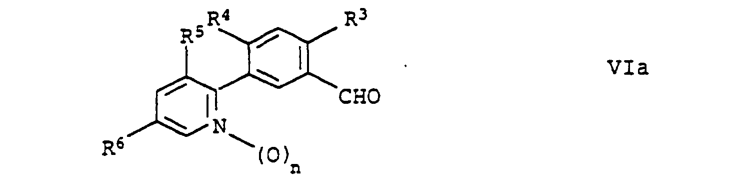 en présence d'un alkyllithium XXVII
(alkyle en C1-C4)-Li XXVII
avec des dérivés de l'acide trichlorométhanephosphonique XXVI

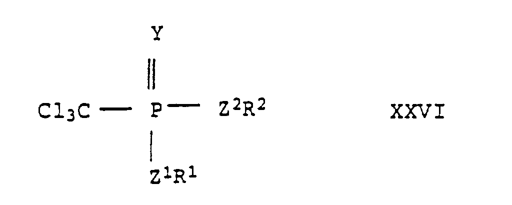

18. Procédé de préparation des 2-phénylpyridines substituées de formule I dans Y, Z¹ et Z² représentent l'oxygène et R¹ et R² l'hydrogène, caractérisé par le fait que, partant de composés de formule I dans laquelle Y, Z¹ et Z² représentent chacun l'hydrogène, R¹ et R² chacun un groupe alkyle en C1-C6, ou bien on les hydrolyse par un hydracide halogéné, ou bien on les fait d'abord réagir avec un halogénure de tri-(alkyle en C1-C4)silyle puis on hydrolyse par l'eau.

19. Procédé de préparation des 2-phénylpyridines substituées de formule I dans laquelle Y représente l'oxygène, caractérisé par le fait que l'on chlore des composés de formule I dans laquelle Y, Z¹ et Z² représentent l'oxygène, R¹ et R² l'hydrogène, puis on fait réagir les produits obtenus avec des réactifs nucléophiles HZ¹R¹ et/ou HZ²R².
